(19) Europäisches Patentamt
European Patent Office
Office européen des brevets

(11) EP 4 656 605 A1

(12) **EUROPEAN PATENT APPLICATION**
published in accordance with Art. 153(4) EPC

(43) Date of publication:
03.12.2025 Bulletin 2025/49

(21) Application number: 24747284.8

(22) Date of filing: 23.01.2024

(51) International Patent Classification (IPC):
$C03C\ 10/12$ (2006.01)    $C03C\ 3/085$ (2006.01)
$C03C\ 3/097$ (2006.01)

(52) Cooperative Patent Classification (CPC):
C03C 3/085; C03C 3/097; C03C 10/00

(86) International application number:
PCT/JP2024/001772

(87) International publication number:
WO 2024/157957 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.01.2023 JP 2023009545

(71) Applicant: **Nippon Electric Glass Co., Ltd.**
**Otsu-shi, Shiga 520-8639 (JP)**

(72) Inventor: **OKADA Yusuke**
**Otsu-shi Shiga 520-8639 (JP)**

(74) Representative: **Tetzner, Michael**
**Tetzner & Partner mbB**
**Patent- und Rechtsanwälte**
**Van-Gogh-Strasse 3**
**81479 München (DE)**

(54) **CRYSTALLIZED GLASS**

(57)    Provided is a LAS-based crystallized glass which has a low coefficient of thermal expansion and excellent transparency and the cost of the raw material batch for which is kept down. A LAS-based crystallized glass contains, in terms of % by mass, 55 to 75% $SiO_2$, 10 to 35% $Al_2O_3$, 0.1 to 5% $Li_2O$, 0 to 10% $BaO$, 0 to 10% $MgO$, 0 to 5% $TiO_2$, 0 to 5% $ZrO_2$, and 0 to 5% $P_2O_5$ and satisfies that a value of $8Li_2O - 4(Na_2O+K_2O+MgO) - (BaO+ZnO)$ is not more than 30%.

[FIG. 1.]

EP 4 656 605 A1

**Description**

[Technical Field]

The present invention relates to $Li_2O$-$Al_2O_3$-$SiO_2$-based crystallized glasses (hereinafter, referred to LAS-based crystallized glasses).

[Background Art]

LAS-based crystallized glass is used as a material of window glasses for fire doors, front windows for stoves, image sensor substrates, setters for firing, and so on.

For example, Patent Literatures 1 to 4 disclose LAS-based crystallized glasses in which LAS-based crystals, such as a β-quartz solid solution or a β-spodumene solid solution, are precipitated as a major crystalline phase.

Because precipitated crystals of such a LAS-based crystallized glass have a negative coefficient of thermal expansion, the LAS-based crystallized glass has a low coefficient of thermal expansion and excellent thermal characteristics. Furthermore, because a large amount of crystals are precipitated therein, the LAS-based crystallized glass has high mechanical strength. In addition, by appropriately adjusting heat treatment conditions in a crystallization process, the type of crystals to be precipitated can be controlled and a crystallized glass being transparent and having a low coefficient of thermal expansion and high mechanical strength can be produced.

Meanwhile, the cost of the glass raw material batch has recently been rising. For example, along with the popularization of small-sized electronic devices, such as a laptop personal computer and a mobile phone, and electric vehicles, the demand for Li-ion secondary batteries has increased relative to the amount of Li raw material ($Li_2O$) supplied and, therefore, the price of the Li raw material is rising.

Under the above circumstances, the need to keep down the cost of the raw material batch for LAS-based crystallized glass is growing. However, it is not easy to realize a LAS-based crystallized glass being transparent and having a low coefficient of thermal expansion while keeping down the cost of the raw material batch. For example, Li showing a particular rise in price is an essential element. If the content of $Li_2O$ in a LAS-based crystallized glass is small, the amount of precipitated crystals having a low coefficient of thermal expansion, such as a β-quartz solid solution or a β-spodumene solid solution, becomes small and, thus, the coefficient of thermal expansion of the LAS-based crystallized glass easily becomes high.

For example, Patent Literatures 1 and 2 disclose the compositions of LAS-based crystallized glasses each having a low coefficient of thermal expansion and high transparency. Most of the glass compositions in examples in these literatures have a content of $Li_2O$ of about 3.5 to about 4% by mass. Specifically, the glasses in Example Nos. 1 to 4 and 6 to 7 in Patent Literature 1 and the glasses in Example Nos. 1 to 8, 11 to 14, 16 to 39, 44 to 122, and 124 to 131 have a content of $Li_2O$ of about 3.5 to about 4% by mass. This suggests that in order to achieve excellent thermal characteristics and transparency, the content of $Li_2O$ needs to be about 3.5 to about 4% by mass.

On the other hand, Patent Literature 3 discloses examples in which, in the composition of a LAS-based crystallized glass similar to those in Patent Literatures 1 and 2, $Li_2O$ is replaced with MgO. Specifically, in Example Nos. 1 to 3, 11, and 14 to 16, transparent LAS-based crystallized glasses are disclosed in which the content of $Li_2O$ is reduced to not more than 3.24% by mass and the content of MgO is increased to not less than 1.6% by mass. These examples suggest that incorporation of MgO in place of $Li_2O$ is one of useful ways to reduce $Li_2O$ and concurrently keep transparency.

Patent Literature 4 also discloses a composition of a LAS-based crystallized glass in which ZnO or MgO is incorporated therein and the content of $Li_2O$ is reduced to not more than 2.9%.

[Citation List]

[Patent Literature]

[PTL 1]
JP-A-2012-56829
[PTL 2]
WO 2022/054739
[PTL 3]
JP-A-2020-196664
[PTL 4]

JP-A-2022-511634

[Summary of Invention]

[Technical Problem]

However, when the content of MgO is increased as in the LAS-based crystallized glass in Patent Literature 3, the coefficient of thermal expansion tends to increase. On the other hand, all the crystallized glasses described in Literature 4 cited have a high coefficient of thermal expansion, and further, are colored strongly with $V_2O_5$. In addition, ZnO described as an essential component in this patent literature tends to be slightly expensive compared to the other raw materials except for $Li_2O$.

In view of the above circumstances, an object of the present invention is to provide a LAS-based crystallized glass which has a low coefficient of thermal expansion and excellent transparency and the cost of the raw material batch for which is kept down.

[Solution to Problem]

As the results of intensive studies, the inventors found that by appropriately designing the composition of a LAS-based crystallized glass, a LAS-based crystallized glass can be obtained which has a low coefficient of thermal expansion and excellent transparency and the cost of the raw material batch for which is kept down.

A LAS-based crystallized glass according to the present invention contains, in terms of % by mass, 55 to 75% $SiO_2$, 10 to 35% $Al_2O_3$, 0.1 to 5% $Li_2O$, 0 to 10% BaO, 0 to 10% MgO, 0 to 5% $TiO_2$, 0 to 5% $ZrO_2$, and 0 to 5% $P_2O_5$ and satisfies that a value of $8Li_2O - 4(Na_2O+K_2O+MgO) - (BaO+ZnO)$ is not more than 30%. The term "$8Li_2O - 4(Na_2O+K_2O+MgO)-(BaO+ZnO)$" used herein refers to a value obtained by subtracting four times the total content of $Na_2O$, $K_2O$, and MgO and the total content of BaO and ZnO from eight times the content of $Li_2O$.

The LAS-based crystallized glass according to the present invention preferably contains, in terms of % by mass, 0.1 to 4% $Li_2O$ and 1 to 10% BaO and satisfies that the value of $8Li_2O - 4(Na_2O+K_2O+MgO) - (BaO+ZnO)$ is 0 to 25%.

The LAS-based crystallized glass according to the present invention preferably contains 2 to 10% BaO in terms of % by mass.

The LAS-based crystallized glass according to the present invention preferably contains more than 0 to less than 0.7% $Na_2O+K_2O$ in terms of % by mass. The term "$Na_2O+K_2O$" used herein refers to a total content of $Na_2O$ and $K_2O$.

The LAS-based crystallized glass according to the present invention preferably contains 0.01 to 4% $P_2O_5$ in terms of % by mass.

The LAS-based crystallized glass according to the present invention preferably contains 0 to less than 900 ppm $Fe_2O_3$ in terms of % by mass.

The LAS-based crystallized glass according to the present invention preferably contains 0 to 0.2% CaO in terms of % by mass.

The LAS-based crystallized glass according to the present invention preferably satisfies that the value of $8Li_2O - 4(Na_2O+K_2O+MgO) - (BaO+ZnO)$ is 12 to 25% in terms of % by mass.

The LAS-based crystallized glass according to the present invention is preferably substantially free of $As_2O_3$ and $Sb_2O_3$.

The LAS-based crystallized glass according to the present invention preferably satisfies that $Li_2O/BaO$ is not more than 2.5 in terms of mass ratio. The term "$Li_2O/BaO$" used herein refers to a value of the content of $Li_2O$ divided by the content of BaO.

In the LAS-based crystallized glass according to the present invention, $(Na_2O+K_2O+MgO)/BaO$ is preferably not more than 6 in terms of mass ratio. The term "$(Na_2O+K_2O+MgO)/BaO$" used herein refers to a value of the total content of $Na_2O$, $K_2O$, and MgO divided by the content of BaO.

The LAS-based crystallized glass according to the present invention preferably satisfies that $(Li_2O+Na_2O+K_2O)/ZrO_2$ is not more than 2.5 in terms of mass ratio. The term "$(Li_2O+Na_2O+K_2O)/ZrO_2$" used herein refers to a value of the total content of $Li_2O$, $Na_2O$, and $K_2O$ divided by the content of $ZrO_2$.

The LAS-based crystallized glass according to the present invention preferably contains 0 to less than 1.1% ZnO in terms of % by mass.

The LAS-based crystallized glass according to the present invention preferably contains 0.1 to 3.47% $Li_2O$ in terms of % by mass and satisfies that the value of $8Li_2O - 4(Na_2O+K_2O+MgO) - (BaO+ZnO)$ is 18 to 25%.

The LAS-based crystallized glass according to the present invention preferably contains 0.1 to 1000 ppm $Pr_6O_{11}$ in terms of % by mass.

The LAS-based crystallized glass according to the present invention preferably contains 0.1 to 2000 ppm $Sm_2O_3$ in terms of % by mass.

A LAS-based crystallized glass according to the present invention preferably contains, in terms of % by mass, 55 to 75% $SiO_2$, 15 to 30% $Al_2O_3$, 2.5 to 3.55% $Li_2O$, 0 to 1.1% MgO, 0 to 1.6% CaO, 0.01 to 2.5% $TiO_2$, 0 to 2.9% $ZrO_2$, 0 to 2% $P_2O_5$, 30 to 2000 ppm $Fe_2O_3$, and 0 to 1000 ppm $V_2O_5$ and satisfies that a value of $8Li_2O$ - 4 ($Na_2O+K_2O+MgO$) - (BaO+ZnO) is 0 to 30%.

A LAS-based crystallized glass according to the present invention preferably contains, in terms of % by mass, 55 to 75% $SiO_2$, 15 to 30% $Al_2O_3$, 2.0 to 3.49% $Li_2O$, 2.7 to 10% BaO, 0 to 4% MgO+CaO, 0.01 to 5% $TiO_2$, 1.3 to 5% $ZrO_2$, and 30 to 10000 ppm $Fe_2O_3$ and satisfies that a value of $8Li_2O$ - 4 ($Na_2O+K_2O+MgO$) - (BaO+ZnO) is 10 to 30%.

A LAS-based crystallized glass according to the present invention preferably contains, in terms of % by mass, 55 to 75% $SiO_2$, 15 to 30% $Al_2O_3$, 2.0 to 3.55% $Li_2O$, 2.6 to 10% BaO, 0 to 4% MgO+CaO, 0.01 to 2.5% $TiO_2$, 0 to 2.9% $ZrO_2$, 0 to 2% $P_2O_5$, and 30 to 10000 ppm $Fe_2O_3$ and satisfies that a value of $8Li_2O$ - 4 ($Na_2O+K_2O+MgO$) - (BaO+ZnO) is 0 to 30%.

A LAS-based crystallized glass according to the present invention preferably contains, in terms of % by mass, 55 to 68% $SiO_2$, 15 to 30% $Al_2O_3$, 2.0 to 3.49% $Li_2O$, 0 to 2.7% BaO, 1.5 to 5% MgO+CaO, 0.01 to 3.9% $TiO_2$, 1.4 to 2.9% $ZrO_2$, 0 to 2.5% $P_2O_5$, and 30 to 10000 ppm $Fe_2O_3$ and satisfies that a value of $8Li_2O$ - 4 ($Na_2O+K_2O+MgO$) - (BaO+ZnO) is 10 to 30%.

The LAS-based crystallized glass according to the present invention preferably has an L* value of total transmittance of not less than 90 at a thickness of 4 mm.

In the LAS-based crystallized glass according to the present invention, a β-quartz solid solution is preferably precipitated as a major crystalline phase.

The LAS-based crystallized glass according to the present invention preferably has a coefficient of thermal expansion of -20 × $10^{-7}$/°C to 20 × $10^{-7}$/°C at 30 to 750°C.

The present invention relates to a glass production method that is a method for producing any one of the above-described LAS-based crystallized glasses and includes the steps of: melting a glass raw material to obtain a molten glass; forming the molten glass into shape; and subjecting a glass obtained in the step of forming the molten glass into shape to heat treatment to crystallize the glass, wherein a process for forming the molten glass into shape is at least one selected from an overflow process, a float process, a down-draw process, a slot down process, a redraw process, a containerless process, a blow process, a press forming process, a roll process, a bushing process, and a tube draw process.

A crystallizable glass according to the present invention contains, in terms of % by mass, 55 to 75% $SiO_2$, 10 to 35% $Al_2O_3$, 0.1 to 5% $Li_2O$, 0 to 10% BaO, 0 to 10% MgO, 0 to 5% $TiO_2$, 0 to 5% $ZrO_2$, and 0 to 5% $P_2O_5$ and satisfies that a value of $8Li_2O$ - 4 ($Na_2O+K_2O+MgO$) - (BaO+ZnO) is not more than 30%.

[Advantageous Effects of Invention]

The present invention enables provision of a LAS-based crystallized glass which has a low coefficient of thermal expansion and excellent transparency and the cost of the raw material batch for which is kept down.

[Brief Description of Drawings]

[Fig. 1]

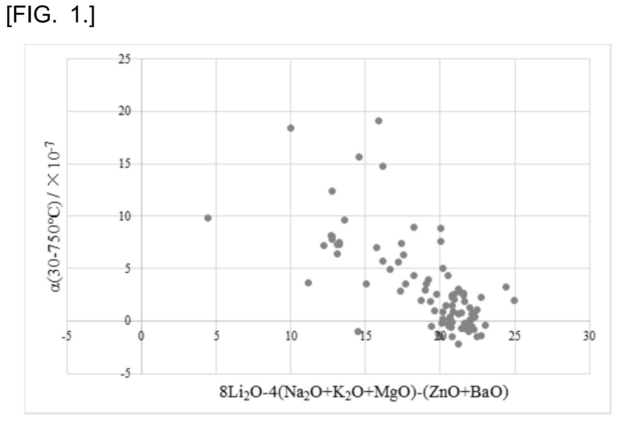

Fig. 1 is a scatter graph on which, for LAS-based crystallized glasses in Examples of the present invention, their coefficients of thermal expansion at 30 to 750°C are plotted against their values of $8Li_2O$ - 4 ($Na_2O+K_2O+MgO$) - (BaO+ZnO).

[Description of Embodiments]

First, a description will be given of the glass composition of a LAS-based crystallized glass according to the present invention. Regarding the following contents of components, "%" refers to "% by mass" unless otherwise stated.

$SiO_2$ is a component forming part of a glass network and also a constituent of a LAS-based crystal. If the content of $SiO_2$ is too small, the coefficient of thermal expansion tends to increase and, therefore, a crystallized glass having excellent thermal shock resistance is difficult to obtain. In addition, the chemical durability tends to decrease. Therefore, the content of $SiO_2$ is preferably not less than 55%, not less than 57.5% or not less than 60%, and more preferably not less than 61%. On the other hand, if the content of $SiO_2$ is too large, the meltability of glass decreases and the viscosity of glass melt increases, which makes the glass difficult to fine and difficult to form into shape and, thus, makes it likely that the productivity decreases. Therefore, the content of $SiO_2$ is preferably not more than 75%, not more than 72.5%, not more than 70% or not more than 67.5%, and more preferably not more than 65%.

$Al_2O_3$ is a component forming part of a glass network and also a constituent of a LAS-based crystal. In addition, $Al_2O_3$ is a component that is located around a crystal nucleus and forms a core-shell structure. Because of the presence of a core-shell structure, a crystal nucleus component is less likely to be supplied from the outside of the shell and, thus, the crystal nuclei are less likely to become enlarged and a large number of fine crystal nuclei are likely to be formed. As a result, fine crystals can be homogeneously precipitated in the glass. Furthermore, $Al_2O_3$ is also a component that reduces the high-temperature viscosity of the crystallized glass. If the content of $Al_2O_3$ is too small, the coefficient of thermal expansion tends to increase and, therefore, a crystallized glass having excellent thermal shock resistance is difficult to obtain. In addition, the chemical durability tends to decrease. Furthermore, the crystal nuclei easily become large and, therefore, the crystallized glass easily becomes cloudy. Therefore, the content of $Al_2O_3$ is preferably not less than 10%, not less than 12.5%, not less than 15% or not less than 17.5%, and more preferably not less than 20%. On the other hand, if the content of $Al_2O_3$ is too large, mullite or like crystals tend to precipitate to devitrify the glass and the crystallized glass becomes susceptible to breakage. Therefore, the content of $Al_2O_3$ is preferably not more than 35%, not more than 32.5%, not more than 30%, not more than 27%, not more than 26% or not more than 25%, and more preferably not more than 24%.

$Li_2O$ is a constituent of a LAS-based crystal and also a component that reduces the viscosity of glass to improve the meltability and formability of the glass. In addition, $Li_2O$ is also a component that easily reduces the refractive index of crystallized glass. If the content of $Li_2O$ is too small, mullite or like crystals tend to precipitate to devitrify the glass. In addition, the meltability of glass decreases and the viscosity of glass melt increases, which makes the glass difficult to fine and difficult to form into shape and, thus, makes it likely that the productivity decreases. Furthermore, LAS-based crystals are less likely to precipitate and, therefore, the coefficient of thermal expansion of crystallized glass tends to increase and a crystallized glass having excellent thermal shock resistance is difficult to obtain. Therefore, the content of $Li_2O$ is preferably not less than 0.1%, not less than 1%, not less than 1.5%, not less than 2%, not less than 2.5% or not less than 2.75%, and more preferably not less than 3%. On the other hand, if the content of $Li_2O$ is too large, the crystallinity becomes excessively high, the glass therefore tends to be likely to devitrify, and the crystallized glass becomes susceptible to breakage. In addition, since $Li_2O$ is an expensive raw material, the cost of the raw material batch becomes high. Therefore, the content of $Li_2O$ is preferably not more than 5%, not more than 4%, not more than 3.9%, not more than 3.8%, not more than 3.75%, not more than 3.7%, not more than 3.65%, not more than 3.6%, not more than 3.55%, not more than 3.5%, not more than 3.49% or not more than 3.47%, and more preferably not more than 3.45%.

BaO is a component that reduces the viscosity of glass to improve the meltability and formability of the glass. Furthermore, BaO is also a component for controlling the coefficient of thermal expansion and refractive index of crystallized glass. More specifically, the incorporation of BaO into glass tends to make the coefficient of thermal expansion of the resultant crystallized glass lower than in the case of incorporation of $Na_2O$, $K_2O$ or MgO in an equivalent amount of substance (equivalent molar amount). In addition, the liquidus temperature can be easily decreased, the liquidus viscosity can be easily increased, and, therefore, the productivity can be easily secured. Furthermore, BaO tends to suppress the precipitation of mullite when forming crystallizable glass into shape. Mullite and like crystals rapidly grow and are considered to be therefore difficult to remove after formation, for which reason it is preferred to avoid a composition likely to precipitate mullite and like crystals. In addition, the resultant crystallized glass is less colored, scattering in the glass tends to be likely to be small, and, therefore, the crystallized glass can easily obtain a desired transparency. Therefore, the content of BaO is preferably not less than 0%, not less than 0.5%, not less than 1%, not less than 1.5%, not less than 2%, not less than 2.6%, not less than 2.7%, not less than 3%, not less than 3.5%, not less than 3.75%, not less than 4%, not less than 4.1%, not less than 4.2%, not less than 4.3% or not less than 4.4%, and more preferably not less than 4.5%. On the other hand, if the content of BaO is too large, crystals containing Ba precipitate to make the glass easily devitrifiable and therefore make the crystallized glass susceptible to breakage. Therefore, the content of BaO is preferably not more than 10%, not more than 9.5%, not more than 9%, not more than 8.5%, not more than 8 %, not more than 7.5%, not more than 7% or not more than 6.5%, and more preferably not more than 6%. A BaO raw material tends to be expensive compared to a MgO raw material and a CaO raw material both of which control the viscosity of glass like BaO. Therefore, in order to further keep down the cost of the raw material batch, the content of BaO may be not more than 4%, not more than 3%, not more than 2.8%, not more than 2.7%, not more than 2.4%, not more than 2.2%, not more than 2% or not more than 1.75%.

$Li_2O$ is a constituent of a LAS-based crystal and also a component that reduces the viscosity of glass to improve the meltability and formability of the glass. If the content of this is too large, the liquidus viscosity becomes excessively low and, therefore, the glass tends to be difficult to form into shape. In addition, the crystallinity becomes excessively high and, therefore, the glass tends to be likely to devitrify. For this reason, the crystallized glass becomes less likely to obtain desired characteristics, such as it becomes susceptible to breakage. On the other hand, BaO is also a component that reduces the viscosity of glass to improve the meltability and formability of the glass, but this effect of BaO tends to be smaller than $Li_2O$. Furthermore, BaO has the effect of decreasing the liquidus temperature and, therefore, tends to suppress devitrification. For these reasons, in order to obtain a crystallized glass having desired characteristics while suppressing the devitrification of glass and avoiding an excessive reduction in liquidus viscosity, it is preferred to suitably control $Li_2O/BaO$ (the ratio between the content of $Li_2O$ and the content of BaO). $Li_2O/BaO$ is preferably not more than 400, not more than 100, not more than 30, not more than 10, not more than 5, not more than 3, not more than 2.5, not more than 2, not more than 1 or not more than 0.9, more preferably not more than 0.8, preferably not less than 0.05, not less than 0.1 or not less than 0.2, and more preferably not less than 0.3.

MgO is a component that can be incorporated into LAS-based crystals to form a solid solution together and increases the coefficient of thermal expansion of the LAS-based crystals. Therefore, if the content of MgO is too large, the coefficient of thermal expansion tends to be high and, therefore, a crystallized glass having excellent thermal shock resistance is less likely to be obtained. In addition, the crystallinity becomes excessively high and mullite or like crystals are likely to precipitate to devitrify the glass. Therefore, the crystallized glass tends to be likely to become cloudy and likely to be susceptible to breakage. The content of MgO is preferably not more than 10%, not more than 5%, not more than 4%, not more than 3%, not more than 2.5%, not more than 2%, not more than 1.5%, not more than 1.2%, not more than 1.1%, not more than 1%, not more than 0.8%, not more than 0.6%, not more than 0.5% or not more than 0.4%, and more preferably not more than 0.3%. On the other hand, MgO is an inexpensive raw material and can reduce the viscosity of glass at low cost. For this reason, to the extent that the clouding of the crystallized glass and the increase in coefficient of thermal expansion thereof are acceptable, MgO can be incorporated into glass to reduce the viscosity while keeping down the production cost. In addition, MgO is likely to be mixed as impurities into glass during production of the glass. Therefore, if complete removal of MgO is pursued, the cost tends to be high. For this reason, the content of MgO is preferably not less than 0%, not less than 0.001% or not less than 0.005%, and more preferably not less than 0.01%.

CaO is a component that reduces the viscosity of glass to improve the meltability and formability of the glass. Furthermore, CaO is also a component for controlling the coefficient of thermal expansion and refractive index of crystallized glass. If the content of CaO is too large, the crystallized glass is likely to become cloudy and the coefficient of thermal expansion of the crystallized glass is likely to increase. Therefore, the content of CaO is preferably not more than 2%, not more than 1.6%, not more than 1.4%, not more than 1.2%, not more than 1%, not more than 0.5%, not more than 0.2%, not more than 0.15% or not more than 0.1%, and more preferably not more than 0.075%. On the other hand, CaO is likely to be incorporated as impurities into the raw materials. Therefore, if complete removal of CaO is pursued, the cost of the raw material batch is likely to be high. For this reason, the content of CaO is preferably not less than 0%, not less than 0.001%, not less than 0.002% or not less than 0.005%, and more preferably not less than 0.01%.

MgO and CaO are components that improve the meltability and formability of glass. On the other hand, if the total content of them is too large, the crystallized glass is likely to become cloudy and the coefficient of thermal expansion of the crystallized glass is likely to increase. Therefore, MgO+CaO is preferably 0 to 10%, 1.5 to 5%, 0 to 4% or 1 to 4%, and more preferably 1 to 3%. Furthermore, MgO and CaO tend to be inexpensive compared to a BaO raw material that controls the viscosity of glass like MgO and CaO. Therefore, in the case of further keeping down the cost of the raw material batch, the meltability and formability of glass may be improved by incorporating MgO and CaO into the raw material batch while controlling the content of BaO. Hence, the content of BaO is preferably not more than 4%, not more than 3%, not more than 2.8%, not more than 2.6%, not more than 2.4%, not more than 2.2%, not more than 2% or not more than 1.75%, in which case MgO+CaO is preferably not less than 0%, not less than 0.01%, not less than 0.1%, not less than 0.4%, not less than 0.7%, not less than 1%, not less than 1.5% or not less than 2%, and preferably not more than 10%, not more than 5%, not more than 4%, not more than 3% or not more than 2.5%.

$TiO_2$ is a nucleating component for precipitating crystals in the crystallization process. On the other hand, if $TiO_2$ is much contained in glass, it significantly intensifies the tinting of the glass. Particularly, zirconia titanate-based crystals containing $ZrO_2$ and $TiO_2$ act as crystal nuclei, but electrons transition from the valence band of oxygen serving as a ligand to the conduction bands of zirconium and titanium serving as central metals (LMCT transition), which involves the tinting of crystallized glass. Furthermore, if titanium remains in the residual glass phase, LMCT transition may occur from the valence band of the $SiO_2$ skeleton to the conduction band of tetravalent titanium in the residual glass phase. In addition, d-d transition occurs in trivalent titanium in the residual glass phase, which involves the tinting of the crystallized glass. In the case where titanium and iron coexist, tinting like ilmenite ($FeTiO_3$) develops. In another case, it is known that the coexistence of titanium and tin intensifies the yellowish tint of glass. Therefore, the content of $TiO_2$ is preferably not more than 5%, not more than 4%, not more than 3.9%, not more than 3.8%, not more than 3%, not more than 2.6%, not more than 2.5%, not more than 2.4%, not more than 2.2%, not more than 2.1%, not more than 2% or not more than 1.95%, and more preferably not more than 1.9%. However, since $TiO_2$ can be a component of crystal nuclei as described above, the incorporation of $TiO_2$ into glass makes crystal nuclei easy to precipitate in the crystallization process. If the content of $TiO_2$ is too small, crystal nuclei may not precipitate well in the crystallization process and, thus, coarse β-quartz solid solution may precipitate to make the crystallized glass cloudy. Furthermore, $TiO_2$ is likely to be mixed as impurities into the glass. Therefore, if complete removal of $TiO_2$ is pursued, the cost of the raw material batch is likely to be high. For these reasons, the lower limit of the content of $TiO_2$ is preferably not less than 0%, more than 0%, not less than 0.001%, not less than 0.01%, not less than 0.1%, not less than 1%, not less than 1.2% or not less than 1.4%, and more preferably not less than 1.5%.

$ZrO_2$ is a nucleating component for precipitating crystals in the crystallization process. If the content of $ZrO_2$ is too small, crystal nuclei may not be formed well and, thus, coarse crystals may be likely to precipitate, which makes it likely that the resultant crystallized glass becomes cloudy and susceptible to breakage. Therefore, the content of $ZrO_2$ is preferably not less than 0%, not less than 0.5%, not less than 1%, not less than 1.3%, not less than 1.4% or not less than 1.8%, and more preferably not less than 2%. On the other hand, if the content of $ZrO_2$ is too large, coarse $ZrO_2$ crystals precipitate to make the glass easily devitrifiable and make the crystallized glass susceptible to breakage. In addition, the crystallized glass tends to become cloudy. Therefore, the content of $ZrO_2$ is preferably not more than 5%, not more than 4.5%, not more than 4%, not more than 3.5%, not more than 3% or not more than 2.9%, and more preferably not more than 2.8%.

$P_2O_5$ is a component that has an effect on the precipitation of crystals and suppresses the precipitation of coarse $ZrO_2$ crystals. When the crystallized glass contains $P_2O_5$, the transmittance of the crystallized glass is improved and the coefficient of thermal expansion thereof tends to be decreased. If the content of $P_2O_5$ is too small, coarse $ZrO_2$ crystals precipitate, which may make the glass easily devitrifiable and make the crystallized glass susceptible to breakage. In addition, desired thermal characteristics and transparency may be less likely to be obtained. Therefore, the content of $P_2O_5$ is preferably not less than 0%, not less than 0.01%, not less than 0.1%, not less than 0.2%, not less than 0.3%, not less than 0.5% or not less than 0.8%, and more preferably not less than 1%. On the other hand, if the content of $P_2O_5$ is too large, crystallization tends to be excessively suppressed and desired thermal characteristics and transparency may be less likely to be obtained. In addition, the raw material price of $P_2O_5$ is expensive and, therefore, the larger the content of $P_2O_5$ is, the higher the cost of the raw material batch tends to be. For these reasons, the content of $P_2O_5$ is preferably not more than 5%, not more than 4%, not more than 3%, not more than 2.5%, not more than 2% or not more than 1.8%, and more preferably not more than 1.6%.

$Na_2O$ is a component that has an effect on crystallinity and reduces the viscosity of glass to improve the meltability and formability of the glass. Furthermore, $Na_2O$ is also a component for controlling the coefficient of thermal expansion and refractive index of crystallized glass. If the content of $Na_2O$ is too large, the crystallinity becomes excessively high, which makes the glass easily devitrifiable and makes the crystallized glass susceptible to breakage. Furthermore, the ionic radius of a Na cation is large and, therefore, Na cations are less likely to be incorporated into the crystals. Therefore, Na cations after crystallization are likely to remain in the residual glass (glass matrix). For this reason, if the content of $Na_2O$ is too large, a difference in refractive index between the crystalline phase and the residual glass is likely to occur and, therefore, the crystallized glass tends to be likely to become cloudy. Hence, the content of $Na_2O$ is preferably not more than 1%, not more than 0.9%, not more than 0.7%, not more than 0.5%, not more than 0.3% or not more than 0.2%, and more preferably 0.15%. However, $Na_2O$ is likely to be mixed as impurities into the glass. Therefore, if complete removal of $Na_2O$ is pursued, the cost of the raw material batch tends to be high. In order to reduce the increase in the cost of raw material batch, the lower limit of the content of $Na_2O$ is preferably not less than 0%, more preferably not less than 0.0003%, even more preferably not less than 0.0005%, and particularly preferably not less than 0.001%.

$K_2O$ is a component that has an effect on crystallinity and reduces the viscosity of glass to improve the meltability and formability of the glass. Furthermore, $K_2O$ is also a component for controlling the coefficient of thermal expansion and refractive index of crystallized glass. If the content of $K_2O$ is too large, the crystallinity becomes excessively high, which makes the glass easily devitrifiable and makes the crystallized glass susceptible to breakage. Furthermore, the ionic radius of a K cation is large and, therefore, K cations are less likely to be incorporated into the crystals. Therefore, K cations after crystallization are likely to remain in the residual glass. For this reason, if the content of $K_2O$ is too large, a difference in refractive index between the crystalline phase and the residual glass is likely to occur and, therefore, the crystallized glass tends to be likely to become cloudy. Hence, the content of $K_2O$ is preferably not more than 1%, not more than 0.9%, not more than 0.7%, not more than 0.5%, not more than 0.3%, not more than 0.2%, not more than 0.1% or not more than 0.07%, and more preferably not more than 0.04%. However, $K_2O$ is likely to be mixed as impurities into the glass. Therefore, if complete removal of $K_2O$ is pursued, the cost of the raw material batch tends to be high. In order to reduce the increase in the cost of raw material batch, the lower limit of the content of $K_2O$ is preferably not less than 0%, more preferably not less than 0.0003%, even more preferably not less than 0.0005%, and particularly preferably not less than 0.001%.

As described above, $Na_2O$ and $K_2O$ have similar effects in the present invention. Therefore, if the total content of $Na_2O$ and $K_2O$ is too large, the crystallinity becomes excessively high, which makes the glass easily devitrifiable and makes the crystallized glass susceptible to breakage. In addition, a difference in refractive index between the crystalline phase and the residual glass phase is likely to occur and, therefore, the crystallized glass tends to be likely to become cloudy. Hence, $Na_2O+K_2O$ is preferably not more than 2%, not more than 1.5%, not more than 1%, not more than 0.9%, not more than 0.7%, less than 0.7%, not more than 0.6%, not more than 0.5%, not more than 0.4%, not more than 0.3%, not more than 0.2% or not more than 0.17%, and more preferably not more than 0.14%. However, $Na_2O$ and $K_2O$ are likely to be mixed as impurities into the glass. Therefore, if complete removal of them is pursued, the cost of the raw material batch tends to be high. In order to reduce the increase in the cost of raw material batch, the lower limit of $Na_2O+K_2O$ is preferably more than 0%, more preferably not less than 0.0006%, even more preferably not less than 0.001%, and particularly preferably not less than 0.002%.

Although $Na_2O$, $K_2O$, and MgO are components that reduce the viscosity of glass to improve the meltability and formability of the glass, if the contents of these components are too large, non-cross-linked oxygen in the glass matrix increases and, therefore, the coefficient of thermal expansion of the resultant crystallized glass is likely to increase. BaO is likewise a component that reduces the viscosity of glass to improve the meltability and formability of glass, but the incorporation of BaO into the glass has a smaller effect of increasing the coefficient of thermal expansion compared to the incorporation of $Na_2O$, $K_2O$ or MgO in an equivalent amount of substance. Therefore, in order to keep down the coefficient of thermal expansion of the resultant crystallized glass while improving the meltability and formability of glass, $(Na_2O+K_2O+MgO)/BaO$ should preferably be suitably controlled. Specifically, $(Na_2O+K_2O+MgO)/BaO$ is preferably not more than 230, not more than 100, not more than 30, not more than 10, not more than 6, not more than 1, not more than 0.8, not more than 0.7, not more than 0.3, not more than 0.2 or not more than 0.1, more preferably not more than 0.06, preferably not less than 0.003, and more preferably not less than 0.01.

ZnO is, like BaO, a component that reduces the viscosity of glass to improve the meltability and formability of the glass. Furthermore, ZnO is also a component for controlling the coefficient of thermal expansion and refractive index of crystallized glass. If the content of ZnO is too large, crystals containing Zn precipitate to make the glass easily devitrifiable and make the crystallized glass susceptible to breakage and easily clouded. In addition, ZnO tends to be expensive compared to raw materials for components other than $Li_2O$. Therefore, when the raw material batch contains ZnO, the cost thereof is likely to be high. For these reasons, the content of ZnO is preferably not more than 10%, not more than 8%, not more than 6%, not more than 4%, not more than 3%, not more than 2%, less than 1.1%, not more than 1%, not more than 0.8%, not more than 0.6%, not more than 0.4%, not more than 0.2% or not more than 0.1%, and more preferably not more than 0.05%.

The value of $8Li_2O - 4 (Na_2O+K_2O+MgO) - (BaO+ZnO)$ is a value that largely influences the thermal expansion characteristics of the crystallized glass. If this value is too low, the coefficient of thermal expansion of the resultant crystallized glass becomes excessively high and, thus, desired thermal shock resistance tends to be difficult to obtain. Therefore, the above value is preferably not less than -1.5%, not less than 0%, not less than 5%, not less than 6%, not less than 7%, not less than 8%, not less than 9%, not less than 10%, not less than 11%, not less than 12%, not less than 13%, not less than 14%, not less than 15%, not less than 16% or not less than 17%, and more preferably not less than 18%. On the other hand, if this value is too high, not only the cost of the raw material batch becomes high, but also the viscosity of glass melt increases and, thus, the productivity tends to become worse. Therefore, the above value is preferably not more than 30%, not more than 29%, not more than 28%, not more than 27%, not more than 26%, not more than 25%, not more than 24%, not more than 23%, not more than 22%, not more than 21% or not more than 20%, and more preferably not more than 19%.

Although $Li_2O$, $Na_2O$, and $K_2O$ are components that improve the meltability and formability of glass, if the contents of these components are too large, the low-temperature viscosity excessively decreases and, thus, the glass may excessively flow during crystallization. Furthermore, $Li_2O$, $Na_2O$, and $K_2O$ are components that may deteriorate the weather resistance, water resistance, chemical resistance, and so on of glass before crystallization. If the glass before crystallization is deteriorated by moisture or so on, a desired crystallization behavior and, as a result, desired characteristics may not be obtained. $ZrO_2$ is a component that functions as a nucleating agent and has the effect of preferentially crystallizing in an initial stage of crystallization to reduce the flow of the residual glass. Furthermore, $ZrO_2$ has the effect of efficiently filling voids of a glass network principally composed of a $SiO_2$ skeleton to block the diffusion of protons, various chemical components, and so on in the glass network, thus improving the weather resistance, water resistance, chemical resistance, and so on of glass before crystallization. On the other hand, if the content of $ZrO_2$ is too large, coarse $ZrO_2$ crystals precipitate to make the glass easily devitrifiable and make the crystallized glass susceptible to breakage. Therefore, in order to obtain a crystallized glass having a desired shape and desired characteristics while improving the meltability and formability of glass, $(Li_2O+Na_2O+K_2O)/ZrO_2$ should preferably be suitably controlled. Specifically, $(Li_2O+Na_2O+K_2O)/ZrO_2$ is preferably not more than 2.5, not more than 2, not more than 1.9, not more than 1.8, not more than 1.7, not more than 1.65, not more than 1.63 or not more than 1.6, particularly preferably not more than 1.58, and preferably not less than 0.5, not less than 0.8, not less than 1, not less than 1.2 or not less than 1.4.

$Fe_2O_3$ is a component that intensifies the tinting of glass and a component that significantly intensifies the tinting, particularly, by interactions with $TiO_2$ and $SnO_2$. Therefore, in order to reduce the tinting of the crystallized glass, the content of $Fe_2O_3$ is preferably not more than 20000 ppm, not more than 10000 ppm, less than 5000 ppm, less than 3000 ppm, not more than 2000 ppm, not more than 1000 ppm, less than 900 ppm, not more than 700 ppm, not more than 500 ppm, not more than 300 ppm, not more than 200 ppm, not more than 100 ppm, not more than 95 ppm or not more than 85 ppm, and more preferably not more than 80 ppm. However, $Fe_2O_3$ is likely to be mixed as impurities into the glass. Therefore, if complete removal of $Fe_2O_3$ is pursued, the cost of the raw material batch is likely to be high. In order to reduce the increase in the cost of raw material batch, the lower limit of the content of $Fe_2O_3$ is preferably not less than 0.001 ppm, not less than 0.01 ppm, 0.1 ppm, not less than 1 ppm, not less than 10 ppm or not less than 30 ppm, and more preferably not less than 40 ppm.

$As_2O_3$ and $Sb_2O_3$ are highly toxic and may contaminate the environment, for example, during the production process of glass or during treatment of waste glass. Therefore, the content of each of these components is preferably not more than 2%, not more than 1%, not more than 0.7%, not more than 0.6%, not more than 0.5%, not more than 0.4%, not more than 0.3%, not more than 0.2% or not more than 0.1%, and the glass is particularly preferably substantially free of them (specifically, the content of each component is less than 0.1% by mass). To the extent that influences on the environment during the production process of glass or during treatment of waste glass are ignorable, $As_2O_3$ and/or $Sb_2O_3$ may be incorporated into glass and these components can be allowed to function as an fining agent, a nucleating agent or so on.

PbO is highly toxic and may contaminate the environment, for example, during the production process of glass or during treatment of waste glass. Therefore, the content of each of these components is preferably not more than 2%, not more than 1%, not more than 0.7%, not more than 0.6%, not more than 0.5%, not more than 0.4%, not more than 0.3%, not more than 0.2% or not more than 0.1%, and the glass is particularly preferably substantially free of this component (specifically, the content of this component is less than 0.1% by mass). To the extent that influences on the environment during the production process of glass or during treatment of waste glass are ignorable, PbO may be incorporated into glass and, in doing so, PbO can be allowed to function as a tinting material, an additive for reducing the viscosity or so on.

SrO is a component that reduces the viscosity of glass to improve the meltability and formability of the glass. Furthermore, SrO is also a component for controlling the coefficient of thermal expansion and refractive index of crystallized glass. If the content of SrO is too large, the glass is likely to devitrify and the crystallized glass becomes susceptible to breakage. In addition, because SrO is expensive, if a large amount of SrO is incorporated into raw materials, the raw material cost easily becomes high. Therefore, the content of SrO is not particularly limited, but is preferably not more than 8%, not more than 7%, not more than 6%, not more than 5%, not more than 4%, not more than 3%, not more than 2%, not more than 1% or not more than 0.5%, and more preferably not more than 0.1%. However, SrO is likely to be mixed as impurities into the glass. Therefore, if complete removal of SrO is pursued, the cost of the raw material batch is likely to be high. In order to reduce the increase in the cost of raw material batch, the lower limit of the content of SrO is preferably not less than 0.0001% or not less than 0.0003%, and more preferably not less than 0.0005%.

$SnO_2$ is a component acting as a fining agent. Furthermore, $SnO_2$ can be also a component that efficiently precipitates crystals in the crystallization process. If the content of $SnO_2$ is too small, glass is difficult to fine and, thus, the productivity is likely to decrease. Therefore, the content of $SnO_2$ is preferably not less than 0%, not less than 0.01%, not less than 0.1% or not less than 0.15%, and more preferably not less than 0.2%. On the other hand, if the content of $SnO_2$ is too large, the crystallized glass tends to be strongly colored and become cloudy. Furthermore, the amount of $SnO_2$ evaporated during melting of glass tends to increase to allow the evaporant of $SnO_2$ to scatter and thus easily contaminate the environment. Therefore, the content of $SnO_2$ is preferably not more than 3% or not more than 2%, and more preferably not more than 1.5%.

$V_2O_5$ is a component that, in minute amounts, has an effect on the color of the crystallized glass. If the content of $V_2O_5$ is too large, a crystallized glass having excellent transparency is less likely to be obtained. Therefore, the content of $V_2O_5$ is preferably not more than 10000 ppm, not more than 5000 ppm, not more than 1000 ppm or not more than 100 ppm, and more preferably not more than 50 ppm. However, $V_2O_5$ may be mixed as impurities in raw materials. Therefore, if complete removal of $V_2O_5$ is pursued, the raw material cost is likely to be high. Therefore, the content of $V_2O_5$ is preferably not less than 0 ppm, not less than 0.001 ppm, not less than 0.01 ppm or not less than 0.1 ppm, and more preferably not less than 1 ppm.

Pt is a component that can be incorporated in a state of ions, colloid, metal or so on into glass and causes the glass to develop a yellowish to dark brown tint. Furthermore, this tendency is significant after crystallization. Therefore, the content of Pt is preferably not more than 7 ppm, not more than 6 ppm, not more than 5 ppm, not more than 4 ppm, not more than 3 ppm or not more than 2 ppm, and more preferably not more than 1 ppm. Although the incorporation of Pt should be avoided as much as possible, there may be a case where, with the use of general melting facilities, Pt members need to be used in order to obtain a homogeneous glass. Therefore, if complete removal of Pt is pursued, the production cost tends to increase. In the absence of any adverse effect in terms of tinting, in order to reduce the increase in production cost, the lower limit of the content of Pt is preferably not less than 0.0001 ppm, not less than 0.001 ppm, not less than 0.01 ppm, not less than 0.02 ppm, not less than 0.03 ppm, not less than 0.04 ppm, not less than 0.05 ppm or not less than 0.06 ppm, and more preferably not less than 0.07 ppm. Furthermore, so long as the tinting is permitted, Pt may be used as a nucleating agent for promoting the precipitation of the major crystalline phase, as with $ZrO_2$ or $TiO_2$. In doing so, Pt may be used alone as a nucleating agent or used as a nucleating agent in combination with another or other components. In using Pt as a nucleating agent, its form (colloid, metallic crystals or so on) is not particularly limited.

Rh is a component that can be incorporated in a state of ions, colloid, metal or so on into glass and tends to cause the glass to develop a yellowish to dark brown tint, like Pt. Therefore, the content of Rh is preferably not more than 7 ppm, not more than 6 ppm, not more than 5 ppm, not more than 4 ppm, not more than 3 ppm, not more than 2 ppm, not more than 1 ppm, not more than 0.9 ppm, not more than 0.8 ppm, not more than 0.7 ppm, not more than 0.6 ppm, not more than 0.5 ppm or not more than 0.4 ppm, and more preferably not more than 0.3 ppm. Although the incorporation of Rh should be avoided as much as possible, there may be a case where, with the use of general melting facilities, Rh members need to be used in order to obtain a homogeneous glass. Therefore, if complete removal of Rh is pursued, the production cost tends to increase. In the absence of any adverse effect in terms of tinting, in order to reduce the increase in production cost, the lower limit of the content of Rh is preferably not less than 0.0001 ppm, not less than 0.001 ppm, not less than 0.01 ppm, not less than 0.02 ppm, not less than 0.03 ppm, not less than 0.04 ppm, not less than 0.05 ppm or not less than 0.06 ppm, and particularly preferably not less than 0.07 ppm. Furthermore, so long as the tinting is permitted, Rh may be used as a nucleating agent, as with $ZrO_2$ or $TiO_2$. In doing so, Rh may be used alone as a nucleating agent or used as a nucleating agent in combination with another or other components. In using Rh as a nucleating agent that promotes precipitation of a major crystalline phase, its form (colloid, metallic crystals or so on) is not particularly limited.

Furthermore, Pt+Rh (the total content of Pt and Rh) is preferably not more than 7 ppm, not more than 3 ppm, less than 1 ppm, less than 0.9 ppm, less than 0.8 ppm, less than 0.7 ppm, less than 0.6 ppm, less than 0.5 ppm or less than 0.4 ppm, and more preferably not more than 0.3 ppm. Although the incorporation of Pt and Rh should be avoided as much as possible, there may be a case where, with the use of general melting facilities, Pt members and Rh members need to be used in order to obtain a homogeneous glass. Therefore, if complete removal of Pt and Rh is pursued, the production cost tends to increase. In the absence of any adverse effect in terms of tinting, in order to reduce the increase in production cost, the lower limit of Pt+Rh is preferably not less than 0.0001 ppm, not less than 0.001 ppm, not less than 0.01 ppm, not less than 0.02 ppm, not less than 0.03 ppm, not less than 0.04 ppm, not less than 0.05 ppm or not less than 0.06 ppm, and more preferably not less than 0.07 ppm.

$MoO_3$ is an element that, in minute amounts, has an effect on crystallization and the color of the crystallized glass. In the case of LAS crystallized glass, $MoO_3$ can be considered to have the effect of suppressing the precipitation of β-spodumene solid solution as secondary crystals under given conditions. Therefore, in suppressing the precipitation of β-spodumene solid solution, the content of $MoO_3$ is preferably more than 0 ppm, not less than 0.1 ppm or not less than 0.2 ppm, and more preferably not less than 0.3 ppm. On the other hand, if $MoO_3$ is excessively incorporated, the crystallized glass may be colored to impair the design quality. Therefore, from the viewpoint of suppressing the coloration of the crystallized glass, the content of $MoO_3$ is preferably not more than 100 ppm, not more than 80 ppm, not more than 60 ppm or not more than 40 ppm, and more preferably not more than 20 ppm.

$Pr_6O_{11}$ is a component that has an effect on the absorption of light in the infrared wavelength range and the coefficient of thermal expansion in the LAS crystallized glass. By incorporating an appropriate amount of $Pr_6O_{11}$ into glass, the transmittance in wavelengths from near 1300 to near 2300 nm can be adjusted and the LAS crystallized glass can be used, for example, as a glass for adjusting the light intensity of an optical sensor or the like. Furthermore, in comparison between glasses having similar compositions, the larger the amount of $Pr_6O_{11}$ incorporated is, the lower the coefficient of thermal expansion of the crystallized glass at 30 to 380°C tends to be. Therefore, the content of $Pr_6O_{11}$ is preferably not less than 0 ppm, not less than 0.1 ppm, not less than 0.5 ppm, not less than 1 ppm, not less than 10 ppm or not less than 30 ppm. On the other hand, if $Pr_6O_{11}$ is excessively incorporated, the resultant crystallizable glass and crystallized glass may be strongly colored to impair the design quality. Particularly, if the glass has excessively high light absorption in the infrared wavelength range, when it is used in a product equipped with an optical temperature sensor or the like, light in a particular wavelength range becomes difficult to transmit through the glass, which may cause the sensor to malfunction. Therefore, the content of $Pr_6O_{11}$ is preferably not more than 2000 ppm, not more than 1000 ppm, not more than 500 ppm, not more than 200 ppm or not more than 100 ppm, and more preferably not more than 50 ppm.

$Sm_2O_3$ is an element likely to be mixed as impurities into glass, but, so long as it is mixed in a small amount into the LAS crystallized glass according to the present invention, it tends to be less likely to change the characteristics of the crystallized glass. If complete removal of $Sm_2O_3$ is pursued, the cost of the raw material batch is likely to be high. Therefore, from the viewpoint of reducing the cost of the raw material batch, the content of $Sm_2O_3$ is preferably not less than 0 ppm, not less than 0.1 ppm, not less than 0.5 ppm, not less than 1 ppm, not less than 10 ppm or not less than 30 ppm. On the other hand, if $Sm_2O_3$ is excessively incorporated, the glass or the crystallized glass may be strongly colored to impair the design quality. Therefore, the content of $Sm_2O_3$ is preferably not more than 2000 ppm, not more than 1000 ppm, not more than 500 ppm, not more than 200 ppm or not more than 100 ppm, and more preferably not more than 50 ppm.

The β-OH value largely influences the low-temperature viscosity and crystallization of glass. The β-OH value is preferably not less than 0.01/mm, not less than 0.02/mm, not less than 0.04/mm or not less than 0.06/mm, and more preferably not less than 0.08/mm. When the β-OH value is within the above range, the low-temperature viscosity tends to decrease and the rate of crystallization tends to increase, which enables an increase in production efficiency. On the other hand, if the β-OH value is too high, bubbles are likely to be produced at the interface between the glass and a metallic member for use in melting the glass and, therefore, the quality of a glass product tends to decrease. In addition, depending on the composition, the rate of crystallization becomes excessively high, which causes other kinds of crystals, which would normally not precipitate or would precipitate in infinitesimal quantity, to precipitate and grow. As a result, the light scattering in the crystallized glass may increase and the crystallized glass may easily become cloudy. Therefore, the β-OH value is preferably not more than 2/mm, not more than 1.5/mm, not more than 1/mm, not more than 0.8/mm, not more than 0.7/mm or not more than 0.6/mm, and more preferably not more than 0.5/mm. The β-OH value changes depending on the raw material used, the melting atmosphere, the melting temperature, the melting time, and so on and can be therefore controlled by changing these conditions as necessary. For example, the β-OH value can be increased by increasing the amount of hydroxide in the raw material, melting the raw material by heating it with a burner or raising the melting temperature. Alternatively, the β-OH value can be increased by lengthening the melting time under a sealed condition or shortening the melting time under an unsealed condition.

In the absence of any adverse effect in terms of thermal characteristics and transparency, the LAS crystallized glass according to the present invention may contain, in addition to the above components, minor components, including

$H_2$, $CO_2$, CO, $H_2O$, He, Ne, Ar, and $N_2$, each up to 0.1%. Furthermore, when Ag, Au, Pd, Ir, Cr, Sc, Ce, Pm, Eu, Gd, Tb, Dy, Ho, Er, Tm, Yb, Lu, Ac, Th, Pa, U, and so on are deliberately incorporated into glass, the cost of the raw material batch tends to increase. However, when glass containing Ag, Au or so on is subjected to light irradiation or heat treatment, agglomerates of these components are formed and crystallization can be promoted based on these agglomerates. Moreover, Pd and so on have various catalytic actions. When glass contains these components, the crystallized glass can be given specific functions. In view of the above circumstances, when being aimed at giving the function of promoting crystallization or other functions, the crystallized glass may contain each of the above components in an amount of not more than 1%, not more than 0.5%, not more than 0.3% or not more than 0.1%. Otherwise, the content of each of the above components is preferably not more than 500 ppm, more preferably not more than 300 ppm, even more preferably not more than 100 ppm, and particularly preferably not more than 10 ppm.

Furthermore, in the absence of any adverse effect in terms of thermal characteristics and transparency, the LAS crystallized glass according to the present invention may contain $SO_3$, MnO, $Cl_2$, $Y_2O_3$, $La_2O_3$, $WO_3$, $HfO_2$, $Ta_2O_3$, $Nd_2O_3$, $Nb_2O_5$, $RfO_2$, and so on up to 10% in total. However, the raw material batch of the above components is expensive and, thus, the production cost tends to increase. Therefore, these components may not be incorporated into glass unless the circumstances are exceptional. Particularly, $HfO_2$ is expensive and $Ta_2O_5$ may become a conflict mineral. Therefore, the total content of these components is preferably not more than 5%, not more than 4%, not more than 3%, not more than 2%, not more than 1%, not more than 0.5%, not more than 0.4%, not more than 0.3%, not more than 0.2%, not more than 0.1%, not more than 0.05%, less than 0.05%, not more than 0.049%, not more than 0.048%, not more than 0.047% or not more than 0.046%, and more preferably not more than 0.045%.

The preferred composition range of the LAS-based crystallized glass according to the present invention is 55 to 75% $SiO_2$, 10 to 35% $Al_2O_3$, 0.1 to 4% $Li_2O$, 0 to 10% MgO, 2 to 10% BaO, 0 to 5% $TiO_2$, 0 to 5% $ZrO_2$, 0.01 to 4% $P_2O_5$, more than 0 to 0.7% $Na_2O+K_2O$, 0 to less than 900 ppm $Fe_2O_3$, 0 to 0.2% CaO, and 0 to 25% ($8Li_2O - 4 (Na_2O+K_2O+MgO)$ - (BaO+ZnO)).

Alternatively, the preferred composition range is 55 to 75% $SiO_2$, 10 to 35% $Al_2O_3$, 0.1 to 4% $Li_2O$, 0 to 10% MgO, 1 to 10% BaO, 0 to 1.1% ZnO, 0 to 5% $TiO_2$, 0 to 5% $ZrO_2$, 0 to 5% $P_2O_5$, more than 0 to 0.7% $Na_2O+K_2O$, and 0 to 25% ($8Li_2O-4 (Na_2O+K_2O+MgO)$ - (BaO+ZnO)).

Alternatively, the preferred composition range is 55 to 75% $SiO_2$, 10 to 35% $Al_2O_3$, 0.1 to 3.47% $Li_2O$, 0 to 10% MgO, 2 to 10% BaO, 0 to 5% $TiO_2$, 0 to 5% $ZrO_2$, 0 to 5% $P_2O_5$, 18 to 25% ($8Li_2O - 4 (Na_2O+K_2O+MgO)$ - (BaO+ZnO)).

Alternatively, the LAS-based crystallized glass preferably contains 55 to 75% $SiO_2$, 15 to 30% $Al_2O_3$, 2.5 to 3.55% $Li_2O$, 0 to 10% BaO, 0 to 1.1% MgO, 0 to 1.6% CaO, 0.01 to 2.5% $TiO_2$, 0 to 2.9% $ZrO_2$, 0 to 2% $P_2O_5$, 30 to 2000 ppm $Fe_2O_3$, and 0 to 1000 ppm $V_2O_5$, wherein $8Li_2O - 4 (Na_2O+K_2O+MgO)$ - (BaO+ZnO) is preferably 0 to 30%.

Alternatively, the LAS-based crystallized glass preferably contains 55 to 75% $SiO_2$, 15 to 30% $Al_2O_3$, 2.0 to 3.49% $Li_2O$, 2.7 to 10% BaO, 0 to 4% MgO+CaO, 0.01 to 5% $TiO_2$, 1.3 to 5% $ZrO_2$, and 30 to 10000 ppm $Fe_2O_3$, wherein $8Li_2O - 4 (Na_2O+K_2O+MgO)$ - (BaO+ZnO) is preferably 10 to 30%.

Alternatively, the LAS-based crystallized glass preferably contains 55 to 75% $SiO_2$, 15 to 30% $Al_2O_3$, 2.0 to 3.55% $Li_2O$, 2.6 to 10% BaO, 0 to 4% MgO+CaO, 0.01 to 2.5% $TiO_2$, 0 to 2.9% $ZrO_2$, 0 to 2% $P_2O_5$, and 30 to 10000 ppm $Fe_2O_3$, wherein $8Li_2O - 4 (Na_2O+K_2O+MgO)$ - (BaO+ZnO) is preferably 0 to 30%.

Alternatively, the LAS-based crystallized glass preferably contains 55 to 68% $SiO_2$, 15 to 30% $Al_2O_3$, 2.0 to 3.49% $Li_2O$, 0 to 2.7% BaO, 1.5 to 5% MgO+CaO, 0.01 to 3.9% $TiO_2$, 1.4 to 2.9% $ZrO_2$, 0 to 2.5% $P_2O_5$, and 30 to 10000 ppm $Fe_2O_3$, wherein $8Li_2O - 4 (Na_2O+K_2O+MgO)$ - (BaO+ZnO) is preferably 10 to 30%.

Alternatively, the LAS-based crystallized glass preferably contains 55 to 75% $SiO_2$, 10 to 35% $Al_2O_3$, 0.1 to 5% $Li_2O$, 0 to 10% BaO, 0 to 10% MgO, 0 to 5% $TiO_2$, 0 to 5% $ZrO_2$, 0 to 5% $P_2O_5$, and 10 to 500 ppm $Pr_6O_{11}$, wherein $8Li_2O-4 (Na_2O+K_2O+MgO)$ - (BaO+ZnO) is preferably not more than 30%.

When having any of the above compositions, a LAS-based crystallized glass can be easily obtained which has a low coefficient of thermal expansion and excellent transparency and the cost of the raw material batch for which is kept down.

In the LAS crystallized glass according to the present invention, the L* value of total transmittance at a thickness of 4 mm is preferably not less than 70, not less than 75, not less than 80, not less than 85, not less than 90, not less than 91, not less than 92, not less than 92.5, not less than 93 or not less than 93.5, and more preferably not less than 94. If this value is too low, a desired transmittancy cannot be obtained, which may limit the applications of the LAS crystallized glass. In addition, regardless of whether the glass is tinted or not, the transmitted light tends to appear dim.

In the LAS crystallized glass according to the present invention, the a* value of total transmittance at a thickness of 4 mm is preferably within ±5, within ±4, within ±3, within ±2.5, within ±2, within ±1.5, within ±1, within ±0.8 or within ±0.6, and more preferably within ±0.5. If this value is too negatively large, the glass tends to appear greenish. If this value is too positively large, the glass tends to appear reddish.

In the LAS crystallized glass according to the present invention, the b* value of total transmittance at a thickness of 4 mm is preferably within ±20, within ±15, within ±10, within ±7, within ±6.5, within ±6, within ±5.5, within ±5.3, within ±5 or within ±4.8, and more preferably within ±4.5. If this value is too negatively large, the glass tends to appear blueish. If this value is too positively large, the glass tends to appear yellowish.

In the LAS crystallized glass according to the present invention, the L* value of diffuse transmittance at a thickness of 4 mm is preferably not more than 20, not more than 15, not more than 10, not more than 8, not more than 6, not more than 5 or not more than 4, and more preferably not more than 3. If the absolute value of this value is too large, the crystallized glass tends to become cloudy.

In the LAS crystallized glass according to the present invention, the a* value of diffuse transmittance at a thickness of 4 mm is preferably within $\pm 5$, within $\pm 4$, within $\pm 3$, within $\pm 2.5$, within $\pm 2$, within $\pm 1.5$, within $\pm 1$, within $\pm 0.8$ or within $\pm 0.6$, and more preferably within $\pm 0.5$. If this value is too negatively large, the glass tends to appear greenish. If this value is too positively large, the glass tends to appear reddish.

In the LAS crystallized glass according to the present invention, the b* value of diffuse transmittance at a thickness of 4 mm is preferably within $\pm 20$, within $\pm 15$, within $\pm 10$, within $\pm 5$, within $\pm 4$, within $\pm 3$, within $\pm 2.5$ or within $\pm 2$, and more preferably within $\pm 1.5$. If this value is too negatively large, the glass tends to appear blueish. If this value is too positively large, the glass tends to appear yellowish.

In the LAS-based crystallized glass according to the present invention, a $\beta$-quartz solid solution is preferably precipitated as a major crystalline phase. When a $\beta$-quartz solid solution is precipitated as a major crystalline phase, its crystal grain size is likely to be small. Therefore, the crystallized glass easily transmits visible light and the transparency is easily increased. In addition, the coefficient of thermal expansion of the glass can be easily approximated to zero. In the LAS-based crystallized glass according to the present invention, a $\beta$-spodumene solid solution is precipitated by subjecting glass to a heat treatment at a higher temperature than under a crystallization condition for precipitating a $\beta$-quartz solid solution. The crystal grain size of the $\beta$-spodumene solid solution is likely to be larger than that of the $\beta$-quartz solid solution and an obtained crystallized glass generally tends to become cloudy. However, when the glass composition and the firing conditions are suitably adjusted, the difference in refractive index between the crystalline phase containing the $\beta$-spodumene solid solution and the residual glass phase can be reduced, in which case the crystallized glass is less likely to become cloudy. The LAS-based crystallized glass according to the present invention may contain crystals of a $\beta$-spodumene solid solution or the like in the absence of any adverse effect in terms of tinting and so on.

In the LAS crystallized glass according to the present invention, the absolute value of the coefficient of thermal expansion at 30 to 750°C is preferably not more than $20 \times 10^{-7}/°C$, not more than $15 \times 10^{-7}/°C$, not more than $10 \times 10^{-7}/°C$, not more than $5 \times 10^{-7}/°C$, not more than $4 \times 10^{-7}/°C$, not more than $3 \times 10^{-7}/°C$, not more than $2 \times 10^{-7}/°C$, not more than $1.5 \times 10^{-7}/°C$ or not more than $1 \times 10^{-7}/°C$.

In the LAS crystallized glass according to the present invention, the absolute value of the coefficient of thermal expansion at 30 to 380°C is preferably not more than $20 \times 10^{-7}/°C$, not more than $15 \times 10^{-7}/°C$, not more than $10 \times 10^{-7}/°C$, not more than $5 \times 10^{-7}/°C$, not more than $4 \times 10^{-7}/°C$, not more than $3 \times 10^{-7}/°C$, not more than $2 \times 10^{-7}/°C$, not more than $1.5 \times 10^{-7}/°C$ or not more than $1 \times 10^{-7}/°C$.

If the absolute value of the coefficient of thermal expansion is too high, the thermal shock resistance becomes low, which makes it difficult to use the crystallized glass at high temperatures. In addition, the crystallized glass is difficult to use for applications requiring positional stability. Particularly, in the case where the glass is assumed to be used in a top plate for a cooker, the absolute value of the coefficient of thermal expansion is preferably low in order to avoid breakage due to heat and strain. The upper limit of the absolute value of the coefficient of thermal expansion is not particularly limited, but is actually $50 \times 10^{-7}/°C$ at 30 to 750°C and at 30 to 380°C.

In the LAS-based crystallized glass according to the present invention, the density thereof is preferably 2.40 to 2.80 g/cm³, 2.42 to 2.78 g/cm³, 2.44 to 2.76 g/cm³ or 2.46 to 2.74 g/cm³, and particularly preferably 2.47 to 2.73 g/cm³. If the density of the crystallized glass is too small, the gas permeability of the crystallized glass may deteriorate. On the other hand, if the density of the crystallized glass is too large, the weight per unit area of the glass becomes large and, therefore, the glass becomes difficult to handle. Furthermore, the density of the crystallized glass provides an indicator for determining whether the glass is well crystallized. Specifically, it can be said that, as for the same type of glass, the larger the density is (the larger the density difference between the glass before being crystallized and the crystallized glass is), the further the crystallization has progressed.

In the LAS-based crystallized glass according to the present invention, the glass transition temperature (the temperature at which the inclination of the thermal expansion curve of glass changes) is preferably not lower than 690°C, not lower than 700°C, not lower than 710°C, not lower than 710°C, not lower than 720°C or not lower than 730°C, and more preferably not lower than 735°C. If the glass transition temperature is too low, glass excessively flows by the application of heat and, therefore, becomes difficult to form into a desired shape.

In the LAS-based crystallized glass according to the present invention, the deformation point (the temperature at which the inclination of the thermal expansion curve of glass changes above the glass transition temperature) is preferably not lower than 750°C, not lower than 760°C, not lower than 770°C or not lower than 780°C, and more preferably not lower than 790°C. If the deformation point is too low, glass excessively flows by the application of heat and, therefore, becomes difficult to form into a desired shape.

In the LAS-based crystallized glass according to the present invention, the temperature the viscosity at which corresponds to approximately $10^4$ dPa·s is preferably not higher than 1400°C, not higher than 1390°C, not higher than 1380°C, not higher than 1375°C, not higher than 1370°C or not higher than 1365°C, and more preferably not higher than 1360°C. If the above temperature is too high, the meltability of glass decreases and the glass becomes difficult to fine, which makes it likely that the productivity decreases. In addition, a forming member tends to be susceptible to load and, therefore, the productivity is likely to decrease.

In the LAS-based crystallized glass according to the present invention, the temperature the viscosity at which corresponds to approximately $10^{3.5}$ dPa·s is preferably not higher than 1500°C, not higher than 1490°C, not higher than 1480°C, not higher than 1470°C, not higher than 1460°C or not higher than 1450°C, and more preferably not higher than 1445°C. If the above temperature is too high, the meltability of glass decreases and the glass becomes difficult to fine, which makes it likely that the productivity decreases. In addition, a forming member tends to be susceptible to load and, therefore, the productivity is likely to decrease.

In the LAS-based crystallized glass according to the present invention, the temperature the viscosity at which corresponds to approximately $10^3$ dPa·s is preferably not higher than 1600°C, not higher than 1590°C, not higher than 1580°C, not higher than 1570°C, not higher than 1560°C, not higher than 1550°C or not higher than 1545°C, and more preferably not higher than 1540°C. If the above temperature is too high, the meltability of glass decreases and the glass becomes difficult to fine, which makes it likely that the productivity decreases. In addition, a forming member tends to be susceptible to load and, therefore, the productivity is likely to decrease.

In the LAS-based crystallized glass according to the present invention, the temperature the viscosity at which corresponds to approximately $10^{2.5}$ dPa·s is preferably not higher than 1700°C, not higher than 1690°C, not higher than 1680°C, not higher than 1670°C, not higher than 1660°C or not higher than 1655°C, and more preferably not higher than 1650°C. If the above temperature is too high, the meltability of glass decreases and the glass becomes difficult to fine, which makes it likely that the productivity decreases.

In the LAS-based crystallized glass according to the present invention, the liquidus temperature ($T_L$) is preferably not higher than 1540°C, not higher than 1535°C, not higher than 1530°C, not higher than 1525°C, not higher than 1520°C, not higher than 1515°C, not higher than 1510°C, not higher than 1505°C, not higher than 1500°C, not higher than 1495°C, not higher than 1490°C, not higher than 1485°C, not higher than 1480°C, not higher than 1475°C, not higher than 1470°C, not higher than 1465°C, not higher than 1460°C, not higher than 1455°C, not higher than 1450°C, not higher than 1445°C, not higher than 1440°C, not higher than 1435°C, not higher than 1430°C, not higher than 1425°C, not higher than 1420°C or not higher than 1415°C, and particularly preferably not higher than 1410°C. If the liquidus temperature is too high, devitrification is likely to occur during production. On the other hand, when the liquidus temperature is not higher than 1480°C, the glass can be easily produced by a roll process or the like. When the liquidus temperature is not higher than 1450°C, the glass can be easily produced by a casting process or the like. When the liquidus temperature is not higher than 1410°C, the glass can be easily produced by a fusion process or the like.

In the LAS-based crystallized glass according to the present invention, the liquidus viscosity (the logarithmic value logη of the viscosity corresponding to the liquidus temperature) is not less than 2.70, not less than 2.75, not less than 2.80, not less than 2.85, not less than 2.90, not less than 2.95, not less than 3.00, not less than 3.05, not less than 3.10, not less than 3.15, not less than 3.20, not less than 3.25, not less than 3.30, not less than 3.35, not less than 3.40, not less than 3.45, not less than 3.50, not less than 3.55, not less than 3.60 or not less than 3.65, and particularly preferably not less than 3.70. If the liquidus viscosity is too low, devitrification is likely to occur during production. On the other hand, when the liquidus viscosity is not less than 3.40, the glass can be easily produced by a roll process or the like. When the liquidus viscosity is not less than 3.50, the glass can be easily produced by a casting process or the like. When the liquidus viscosity is not less than 3.70, the glass can be easily produced by a fusion process or the like.

The LAS-based crystallized glass according to the present invention may be subjected to chemical strengthening or other treatments. Regarding the conditions for chemical strengthening treatment, the treatment time and treatment temperature are preferably appropriately selected in consideration of the glass composition, the volume fraction of each phase, the type of molten salt, and so on. For example, for the purpose of facilitating chemical strengthening, a glass composition containing a large amount of $Na_2O$, which is likely to be contained in the residual glass phase, may be selected. For another example, the molten salt may contain a single or multiple types of monovalent cations of Li, Na, K, and so on and divalent cations of Mg, Ba, Zn, Ca, Sr, and so on. For still another example, aside from an ordinary single-step strengthening process, a multistep chemical strengthening process may be selected. The molten salt that can be used is a nitrate (such as potassium nitrate, sodium nitrate or lithium nitrate), a carbonate (such as potassium carbonate, sodium carbonate or lithium carbonate), a sulfate (such as potassium sulfate, sodium sulfate or lithium sulfate), a chloride salt (such as potassium chloride, sodium chloride or lithium chloride) or any combination of them. Among them, a nitrate or so on having a low melting point is preferably used as the molten salt and sodium nitrate is particularly preferably used. The temperature for ion exchange is preferably 330 to 550°C, more preferably 350 to 500°C, and particularly preferably 390 to 450°C, and the time for ion exchange is preferably 30 minutes to 12 hours and more preferably 45 minutes to 10 hours. The above-described conditions for strengthening may be arbitrarily changed depending on the application or strength required and preferred conditions are not necessarily limited to the above.

Next, a description will be given of a method for producing a crystallized glass according to the present invention.

First, a raw material batch prepared to provide a glass having the above-described composition is charged into a glass melting furnace, melted at 1200 to 1800°C, and then formed into shape. In melting glass, one or a combination of two or more of the following melting processes may be used: a flame melting process using a burner or the like; an electric melting process by electrical heating; a melting process using laser irradiation; a melting process using plasma; a solution phase synthesis; and a gas phase synthesis.

The forming process is preferably one or a combination of two or more of an overflow process, a float process, a down-draw process, a slot down process, a redraw process, a containerless process, a blow process, a press forming process, a roll process, a bushing process, and a tube draw process. Furthermore, the formed glass may be reheated at a temperature of the glass transition point or above. By doing so, a glass having a good surface quality can be produced.

Next, the obtained crystallizable glass (a glass that is not yet crystallized and crystallizable) is subjected to heat treatment and thus crystallized. The crystallization conditions are as follows: nucleation is first performed at 700 to 950°C (preferably 750 to 900°C) for 0.1 to 100 hours (preferably 1 to 60 hours) and crystal growth is then performed at 800 to 1050°C (preferably 800 to 1000°C) for 0.1 to 50 hours (preferably 0.2 to 10 hours). Thus, a transparent LAS-based crystallized glass with β-quartz solid solution crystals precipitated as a major crystalline phase therein can be obtained. The heat treatment may be performed at a specific temperature only, may be performed stepwise by holding the glass in two or more temperature levels or may be performed by the application of heat with a temperature gradient.

Furthermore, the crystallization may be promoted by applying sonic waves or electromagnetic waves to the glass. Moreover, the cooling of the crystallized glass in a high-temperature state may be performed at a cooling rate with a specific temperature gradient or in two or more levels of temperature gradients. In order to obtain a sufficient thermal shock resistance, it is desirable to control the cooling rate to sufficiently structurally relax the residual glass phase. The average cooling rate from 800°C to 25°C is, in an innermost portion of the crystallized glass thickness farthest from the surface, preferably 3000°C/min, not higher than 1000°C/min, not higher than 500°C/min, not higher than 400°C/min, not higher than 300°C/min, not higher than 200°C/min, not higher than 100°C/min, not higher than 50°C/min, not higher than 25°C/min or not higher than 10°C/min, and particularly preferably not higher than 5°C/min. In order to obtain dimensional stability over a long period, the above average cooling rate is preferably not higher than 2.5°C/min, not higher than 1°C/min, not higher than 0.5°C/min, not higher than 0.1°C/min, not higher than 0.05°C/min, not higher than 0.01°C/min, not higher than 0.005°C/min, not higher than 0.001°C/min or not higher than 0.0005°C/min, and particularly preferably not higher than 0.0001°C/min. Except for the case where physical strengthening treatment by air cooing, water cooling or the like is performed, the cooling rate of the crystallized glass at the glass surface and the cooling rate thereof in the innermost portion of the thickness farthest from the glass surface preferably approximate to each other. The value of the cooling rate in the innermost portion of the crystallized glass farthest from the surface thereof divided by the cooling rate at the surface of the crystallized glass is preferably 0.0001 to 1, 0.001 to 1, 0.01 to 1, 0.1 to 1, 0.5 to 1, 0.8 to 1 or 0.9 to 1, and particularly preferably 1. As the above value is closer to 1, residual strain is less likely to occur in all locations of the crystallized glass sample and long-term dimensional stability is more likely to be obtained. The cooling rate at the surface can be estimated by contact thermometry or with a radiation thermometer, while the temperature of the inner portions can be determined by placing the crystallized glass in a high-temperature state into a cooling medium, measuring the heat quantity and rate of heat quantity change of the cooling medium, and making an estimate from the obtained numeric measurement data, and the respective specific heats and the thermal conductivity, and so on of the crystallized glass and the cooling medium.

[Examples]

Hereinafter, the present invention will be described with reference to examples, but the present invention is not limited to the following examples. Tables 1 to 44 show examples (Sample Nos. 1 to 131) of the present invention.

[Table 1]

| | Unit | N o.1 | No.2 | No.3 | No.4 | No.5 | No.6 |
|---|---|---|---|---|---|---|---|
| $SiO_2$ | % by mass | 63.0 | 61.5 | 63.4 | 63.2 | 65.6 | 64.2 |
| $Al_2O_3$ | | 25.5 | 27.3 | 25.5 | 21.3 | 22.3 | 23.9 |
| $Li_2O$ | | 1.81 | 0.92 | 1.81 | 1.81 | 3.67 | 2.74 |
| $Na_2O$ | | 0.48 | 0.51 | 0.49 | 0.67 | 0.43 | 0.45 |
| $K_2O$ | | 0.34 | 0.35 | 0.34 | 0.47 | 0.30 | 0.32 |
| MgO | | 0.79 | 0.83 | 0.39 | 1.11 | 0.69 | 0.74 |
| CaO | | 0.03 | 0.03 | 0.02 | 0.04 | 0.03 | 0.03 |
| BaO | | 1.39 | 1.46 | 1.38 | 1.94 | 1.20 | 1.29 |
| $ZrO_2$ | | 2.60 | 2.75 | 2.60 | 3.66 | 2.27 | 2.44 |
| $TiO_2$ | | 2.29 | 2.42 | 2.28 | 3.22 | 1.99 | 2.14 |
| $P_2O_5$ | | 1.60 | 1.68 | 1.59 | 2.23 | 1.37 | 1.52 |
| ZnO | | 0 | 0 | 0 | 0 | 0 | 0 |
| $SnO_2$ | | 0.20 | 0.22 | 0.19 | 0.31 | 0.18 | 0.19 |
| SrO | | 0 | 0 | 0 | 0 | 0 | 0 |
| Pb0 | | <0.001 | <0.001 | <0.001 | <0.001 | <0.001 | <0.001 |
| C l | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.04 | 0.04 |

(continued)

| | Unit | N o.1 | No.2 | No.3 | No.4 | No.5 | No.6 |
|---|---|---|---|---|---|---|---|
| $Fe_2O_3$ | ppm | 100 | 110 | 100 | 90 | 100 | 120 |
| $MoO_3$ | | <0.3 | <0.3 | <0.3 | <0.3 | <0.3 | <0.3 |
| Pt | | 1.00 | 2.00 | unmeasured | unmeasured | unmeasured | unmeasured |
| Rh | | 0.10 | 0.03 | unmeasured | unmeasured | unmeasured | unmeasured |
| $V_2O_5$ | | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 1.30 | 0.63 | 1.31 | 0.93 | 3.06 | 2.12 |
| $Na_2O+K_2O$ | % by mass | 0.82 | 0.86 | 0.83 | 1.14 | 0.73 | 0.77 |
| $MgO+CaO$ | % by mass | 0.82 | 0.86 | 0.41 | 1.15 | 0.72 | 0.77 |
| $(Na_2O+K_2O+MgO)/BaO$ | - | 1.16 | 1.16 | 0.88 | 1.16 | 1.18 | 1.17 |
| $8Li_2O-4(Na_2O+K_2O+MgO)-(BaO+ZnO)$ | % by mass | 6.65 | -0.86 | 8.22 | 3.54 | 22.48 | 14.59 |
| $Li_2O+Na_2O+K_2O)/ZrO_2$ | - | 1.01 | 0.65 | 1.02 | 0.81 | 1.94 | 1.44 |

[Table 2]

|  | Unit | No.1 | No.2 | No.3 | No.4 | No.5 | No.6 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.47 | 2.48 | 2.46 | 2.48 | 2.43 | unmeasured |
| CLTE at30-380°C | $\times10^{-7}$/°C | 29.8 | 26.4 | 29.1 | unmeasured | 40.7 | 34.2 |
| Glass Transitbn Pont Tg | | 763 | 803 | 771 | unmeasured | 695 | 740 |
| Deformation Point Tf | | 821 | 848 | 824 | unmeasured | 758 | 800 |
| $10^4$ | | unmeasured | unmeasured | unmeasured | 1372 | 1340 | 1356 |
| $10^{3.5}$ | °C | 1477 | unmeasured | 1531 | 1440 | 1423 | 1425 |
| $10^3$ | | 1522 | unmeasured | 1554 | 1524 | 1520 | 1512 |
| $10^{2.5}$ | | 1614 | unmeasured | 1623 | 1629 | 1632 | 1626 |
| Liquidus Temperature TL | | >1550 | >1580 | >1550 | 1433 | 1356 | 1490 |
| Liquidus Viscosity bg $\eta$ | - | unmeasured | unmeasured | unmeasured | 3.55 | 3.9 | 3.11 |
| Prinary Phase | - | unmeasured | unmeasured | unmeasured | mullite, ZrO$_2$ | mullite, ZrO$_2$ | mullite |
| After Crystallization | | | | | | | |
| Crystallization Conditons | - | 780°C-3h 950°C-1h | 780°C-3h 950°C-1h | 780°C-3h 950°C-1h | 780°C-3h 950°C-1h | 780°C-3h 950°C-1h | 780°C-3h 950°C-1h |
| Precipitated Crystals | - | $\beta$-quartz | unmeasured | $\beta$-quartz | $\beta$-quartz | unmeasured | unmeasured |
| Crystallinity | | 60 | unmeasured | 44 | 68 | unmeasured | unmeasured |
| Crystallite Size | nm | unmeasured | unmeasured | unmeasured | unmeasured | unmeasured | unmeasured |
| Density | g/cm$^3$ | 2.58 | 2.56 | 2.55 | 2.60 | 2.54 | 2.59 |
| CLTE at 30-380°C | $\times10^{-7}$/°C | unmeasured | unmeasured | unmeasured | unmeasured | unmeasured | unmeasured |
| CLTE at30-750°C | | unmeasured | unmeasured | unmeasured | unmeasured | unmeasured | 15.7 |

| After Crystallization | | | | | | | |
|---|---|---|---|---|---|---|---|
| Total Transmittance L* | | unmeasured | unmeasured | unmeasured | unmeasured | unmeasured | unmeasured |
| Total Transmittance a* | | unmeasured | unmeasured | unmeasured | unmeasured | unmeasured | unmeasured |
| Total Transmittance b* | | unmeasured | unmeasured | unmeasured | unmeasured | unmeasured | unmeasured |
| Diffuse Transmittance L* | - | unmeasured | unmeasured | unmeasured | unmeasured | unmeasured | unmeasured |
| Diffuse Transmittance a* | | unmeasured | unmeasured | unmeasured | unmeasured | unmeasured | unmeasured |
| Diffuse Transmittance b* | | unmeasured | unmeasured | unmeasured | unmeasured | unmeasured | unmeasured |
| Total Transmittance at 4 mm thickness and 1500 nm wavelength | | unmeasured | unmeasured | unmeasured | unmeasured | unmeasured | unmeasured |

[Table 3]

| | Unit | No.7 | No.8 | No.9 | No.10 | No.11 | No.12 |
|---|---|---|---|---|---|---|---|
| $SiO_2$ | % by mass | 63.5 | 64.0 | 65.2 | 65.5 | 66.7 | 69.0 |
| $Al_2O_3$ | | 21.5 | 21.7 | 22.1 | 21.7 | 22.1 | 21.9 |
| $Li_2O$ | | 1.82 | 1.84 | 1.87 | 3.17 | 3.19 | 3.16 |
| $Na_2O$ | | 0.68 | 0.67 | 0.42 | 0.35 | 0.06 | 0.07 |
| $K_2O$ | | 0.48 | 0.48 | 0.29 | 1.65 | 0.01 | 0.01 |
| $MgO$ | | 1.32 | 1.65 | 3.08 | 0.65 | 1.96 | 0.00 |
| $CaO$ | | 0.05 | 0.06 | 0.09 | 0.03 | 0.05 | 0.01 |
| $BaO$ | | 1.15 | 0.02 | 1.18 | 1.15 | 0.01 | 0.02 |
| $ZrO_2$ | | 3.68 | 3.72 | 2.25 | 2.20 | 2.25 | 2.22 |
| $TiO_2$ | | 3.24 | 3.27 | 1.97 | 1.91 | 1.96 | 1.94 |
| $P_2O_5$ | | 2.28 | 2.31 | 1.41 | 1.39 | 1.43 | 1.42 |
| $ZnO$ | | 0 | 0 | 0 | 0 | 0 | 0 |
| $SnO_2$ | | 0.30 | 0.31 | 0.19 | 0.29 | 0.29 | 0.29 |
| $SrO$ | | 0.002 | <0.001 | 0.002 | 0.001 | <0.001 | 0.002 |
| $Pb0$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.03 | 0.03 | 0.03 | 0.03 |

| | Unit | No.7 | No.8 | No.9 | No.10 | No.11 | No.12 |
|---|---|---|---|---|---|---|---|
| $Fe_2O_3$ | | 120 | 140 | 80 | 100 | 70 | 70 |
| $MoO_3$ | | <0.3 | <0.3 | <0.3 | <0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | unmeasured | unmeasured | unmeasured | unmeasured | 1.00 | 3.00 |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 1.58 | 92 | 1.58 | 2.76 | 319 | 158 |
| $Na_2O + K_2O$ | % by mass | 1.16 | 1.15 | 0.71 | 2.00 | 0.07 | 0.08 |
| $MgO+CaO$ | % by mass | 1.37 | 1.71 | 3.17 | 0.68 | 2.01 | 0.01 |
| $(Na_2O + K_2O + MgO)/BaO$ | - | 2.16 | 140.00 | 3.21 | 2.30 | 203.00 | 4.00 |
| $8Li_2O-4(Na_2O+K_2O+MgO)-(BaO+ZnO)$ | % by mass | 3.49 | 3.50 | -1.38 | 13.61 | 17.39 | 24.94 |
| $(Li_2O+Na_2O+K_2O)/ZrO_2$ | - | 0.81 | 0.80 | 1.15 | 2.35 | 1.45 | 1.46 |

[Table 4]

| | Unit | No.7 | No.8 | No.9 | No.10 | No.11 | No.12 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | unmeasured | unmeasured | unmeasured | 2.43 | 2.43 | 2.39 |
| CLTE at30-380°C | $\times 10^{-7}$/°C | unmeasured | unmeasured | 32.0 | 40.2 | 35.1 | 32.0 |
| Glass Transitbn Point Tg | °C | unmeasured | unmeasured | 740 | 724 | 728 | 753 |
| Deform atbn Point Tf | | unmeasured | unmeasured | 802 | 787 | 783 | 814 |
| $10^4$ | | 1351 | 1348 | 1337 | 1366 | 1338 | 1397 |
| $10^{3.5}$ | | 1431 | 1426 | 1417 | 1451 | 1421 | 1480 |
| $10^3$ | | 1523 | 1518 | 1509 | 1550 | 1517 | 1577 |
| $10^{2.5}$ | | 1630 | 1628 | 1618 | 1665 | 1629 | 1694 |
| Liquidus Tem perature TL | | unmeasured | unmeasured | 1440 | 1361 | 1355 | 1485 |
| Liquidus Viscosity bg$\eta$ | - | unmeasured | unmeasured | 3.36 | 4.03 | 3.89 | 3.47 |
| Prin ary Phase | - | unmeasured | unmeasured | mullite | ZrO$_2$ | mullite | mullite |
| After Crystallization | | | | | | | |
| Crystallization Conditions | - | 780°C-3h 950°C-1h | 780°C-3h 950°C-1h | 780°C-3h 950°C-1h | 780°C-3h 950°C-1h | 780°C-3h 920°C-1h | 780°C-3h 950°C-1h |
| Precpitated Crystals | - | unmeasured | unmeasured | unmeasured | $\beta$-quartz | $\beta$-quartz | $\beta$-quartz |
| Crystallinity | - | unmeasured | unmeasured | unmeasured | unmeasured | unmeasured | unmeasured |
| Crystallite Size | nm | 58 | 41 | unmeasured | 48 | 38 | 36 |
| Density | g/cm$^3$ | 2.59 | 2.59 | 2.59 | 2.50 | 2.55 | 2.56 |
| CLTE at30-380°C | $\times 10^{-7}$/°C | unmeasured | unmeasured | unmeasured | 8.2 | 7.7 | 7.7 |
| CLTE at30-750°C | | unmeasured | unmeasured | unmeasured | 9.6 | 7.4 | 2.0 |

(continued)

| After Crystallization | | | | | | |
|---|---|---|---|---|---|---|
| Total Transmittance L* | unmeasured | unmeasured | unmeasured | unmeasured | 93.8 | 93.8 |
| Total Transmittance a* | unmeasured | unmeasured | unmeasured | unmeasured | -0.7 | -0.4 |
| Total Transmittance b* | unmeasured | unmeasured | unmeasured | unmeasured | 5.5 | 4.9 |
| Diffuse Transmittance L* | unmeasured | unmeasured | unmeasured | unmeasured | 8.4 | unmeasured |
| Diffuse Transmittance a* | unmeasured | unmeasured | unmeasured | unmeasured | -0.1 | unmeasured |
| Diffuse Transmittance b* | unmeasured | unmeasured | unmeasured | unmeasured | -0.9 | unmeasured |
| Total Transmittance at 4 mm thickness and 1500 nm wavelength | unmeasured | unmeasured | unmeasured | 90.3 | 89.1 | 89.9 |

[Table 5]

| | Unit | No.13 | No.14 | No.15 | No.16 | No.17 | No.18 |
|---|---|---|---|---|---|---|---|
| $SiO_2$ | % by mass | 64.7 | 66.9 | 67.7 | 67.5 | 67.1 | 65.6 |
| $Al_2O_3$ | | 26.3 | 22.0 | 22.2 | 22.0 | 21.8 | 22.4 |
| $Li_2O$ | | 3.10 | 3.16 | 3.15 | 3.13 | 3.10 | 3.64 |
| $Na_2O$ | | 0.08 | 0.06 | 0.07 | 0.07 | 0.07 | 0.32 |
| $K_2O$ | | 0.01 | 0.01 | 0.01 | 0.01 | 1.11 | 0.20 |
| $MgO$ | | 0.00 | 1.95 | 0.98 | 0.49 | 0.01 | 0.70 |
| $CaO$ | | 0.01 | 0.05 | 0.03 | 002 | 0.01 | 0.03 |
| $BaO$ | | 0.02 | 0.01 | 0.01 | 0.01 | 0.01 | 1.21 |
| $ZrO_2$ | | 2.18 | 2.25 | 2.24 | 2.23 | 2.21 | 2.27 |
| $TiO_2$ | | 1.90 | 1.95 | 1.93 | 2.89 | 2.85 | 1.99 |
| $P_2O_5$ | | 1.38 | 1.42 | 1.42 | 1.41 | 1.40 | 1.41 |
| $ZnO$ | | 0 | 0 | 0 | 0 | 0 | 0 |
| $SnO_2$ | | 0.28 | 0.29 | 0.28 | 0.28 | 0.28 | 0.27 |
| $SrO$ | | <0.001 | 0.002 | 0.002 | 0.002 | 0.004 | 0.004 |
| $Pb0$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.07 | 0.04 |

| | Unit | No.13 | No.14 | No.15 | No.16 | No.17 | No.18 |
|---|---|---|---|---|---|---|---|
| $Fe_2O_3$ | ppm | 70 | 100 | 90 | 80 | 300 | 80 |
| $MoO_3$ | | <0.3 | <0.3 | <0.3 | <0.3 | 5.00 | <0.3 |
| Pt | | unmeasured | unmeasured | unmeasured | unmeasured | unmeasured | unmeasured |
| Rh | | unmeasured | unmeasured | unmeasured | unmeasured | unmeasured | unmeasured |
| $V_2O_5$ | | 2.00 | unmeasured | unmeasured | unmeasured | unmeasured | 1.00 |
| $Nd_2O_3$ | | <5 | <5 | <5 | <5 | <5 | <5 |
| $Pr_6O_{11}$ | | unmeasured | unmeasured | unmeasured | unmeasured | unmeasured | 1.00 |
| $Sm_2O_3$ | | unmeasured | unmeasured | unmeasured | unmeasured | unmeasured | <1 |
| $Li_2O/BaO$ | - | 155.00 | 316.00 | 315.00 | 313.00 | 310.00 | 3.01 |
| $Na_2O +K_2O$ | % by mass | 0.09 | 0.07 | 0.08 | 0.08 | 1.18 | 0.52 |
| $MgO+CaO$ | % by mass | 0.01 | 2.00 | 1.01 | 0.51 | 0.02 | 0.73 |
| $(Na_2O +K_2O+MgO)/BaO$ | - | 4.50 | 202.00 | 106.00 | 57.00 | 119.00 | 1.01 |
| $8Li_2O-4(Na_2O+K_2O+MgO)-(BaO+ZnO)$ | % by mass | 24.42 | 17.19 | 20.95 | 22.75 | 20.03 | 23.03 |
| $(Li_2O+Na_2O+K_2O)/ZrO_2$ | - | 1.46 | 1.44 | 1.44 | 1.44 | 1.94 | 1.83 |

EP 4 656 605 A1

[Table 6]

| | Unit | No.13 | No.14 | No.15 | No.16 | No.17 | No.18 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.43 | 2.43 | 2.41 | 2.41 | 2.40 | 2.44 |
| CLTE at30-380°C | $\times 10^{-7}$/°C | 32.2 | unmeasured | 33.7 | unmeasured | unmeasured | unmeasured |
| Gass Transition Point Tg | °C | 754 | unmeasured | 736 | unmeasured | unmeasured | unmeasured |
| Deform atbn Point Tf | | 813 | unmeasured | 791 | unmeasured | unmeasured | unmeasured |
| $10^4$ | | unmeasured | unmeasured | 1364 | 1366 | unmeasured | 1348 |
| $10^{3.5}$ | | unmeasured | unmeasured | 1447 | 1450 | unmeasured | 1432 |
| $10^3$ | | unmeasured | unmeasured | 1545 | 1547 | unmeasured | 1529 |
| $10^{2.5}$ | | unmeasured | unmeasured | 1660 | 1660 | unmeasured | 1642 |
| Liquidus Tem perature TL | | >1500 | 1403 | 1398 | 1408 | 1448 | 1359 |
| Liquidus Viscosity bg $\eta$ | - | unmeasured | 3.58 | 3.79 | 3.74 | 3.52 | 3.93 |
| Prin ary Phase | - | mullite | mullite | mullite | mullite | mullite | ZrO$_2$ |
| After Crystallization | | | | | | | |
| Crystallization Conditions | - | 780°C-3h 920°C-1h | 780°C-3h 890°C-1h | 780°C-3h 920°C-1h | 780°C-3h 920°C-1h | 780°C-3h 890°C-1h | 780°C-3h 890°C-1h |
| Precpitated Crystals | - | $\beta$ -quartz | $\beta$ -quartz | $\beta$ -quartz | $\beta$ -quartz | $\beta$ -quartz | unmeasured |
| Crystallinity | - | unmeasured | unmeasured | unmeasured | unmeasured | unmeasured | unmeasured |
| Crystallite Size | nm | 74 | 37 | 38 | 35 | 47 | unmeasured |
| Density | g/cm$^3$ | 2.45 | 2.54 | 2.54 | 2.54 | 2.47 | 2.53 |
| CLTE at30-380°C | $\times 10^{-7}$/°C | 4.0 | 5.6 | 2.8 | 2.6 | 5.6 | -1.7 |
| CLTE at30-750°C | | 3.2 | 5.6 | 2.1 | 2.3 | 1.6 | -0.4 |

(continued)

| After Crystallization | | | | | | |
|---|---|---|---|---|---|---|
| Total Transmittance L* | unmeasured | 94.3 | 94.1 | 92.1 | unmeasured | 94.3 |
| Total Transmittance a* | unmeasured | -0.8 | -0.5 | -0.5 | unmeasured | -0.6 |
| Total Transmittance b* | unmeasured | 5.5 | 4.9 | 8.4 | unmeasured | 5.1 |
| Diffuse Transmittance L* | unmeasured | 0.8 | 3.4 | 8.9 | unmeasured | 1.5 |
| Diffuse Transmittance a* | unmeasured | 0.0 | 0.2 | 1.1 | unmeasured | 0.1 |
| Diffuse Transmittance b* | unmeasured | -1.0 | -5.6 | -12.5 | unmeasured | -2.2 |
| Total Transmittance at 4 mm thickness and 1500 nm wavelength | 91.4 | 90.1 | 90.1 | 90.3 | 89.9 | 90.6 |

[Table 7]

| | Unit | No.19 | No.20 | No.21 | No.22 | No.23 | No.24 |
|---|---|---|---|---|---|---|---|
| $SiO_2$ | % by mass | 65.7 | 65.8 | 65.8 | 66.3 | 66.1 | 65.8 |
| $Al_2O_3$ | | 22.2 | 22.2 | 22.2 | 22.5 | 22.4 | 22.3 |
| $Li_2O$ | | 3.50 | 3.50 | 3.49 | 3.27 | 3.26 | 3.24 |
| $Na_2O$ | | 0.38 | 0.39 | 0.38 | 0.08 | 0.08 | 0.09 |
| $K_2O$ | | 0.27 | 0.01 | 0.14 | 0.01 | 0.01 | 0.01 |
| MgO | | 0.85 | 0.70 | 0.77 | 1.59 | 1.43 | 1.27 |
| CaO | | 0.03 | 0.03 | 0.03 | 0.04 | 0.04 | 0.04 |
| BaO | | 1.21 | 1.48 | 1.34 | 0.24 | 0.82 | 1.39 |
| $ZrO_2$ | | 2.27 | 2.27 | 2.26 | 2.28 | 2.27 | 2.27 |
| $TiO_2$ | | 1.98 | 1.98 | 1.98 | 1.99 | 1.98 | 1.97 |
| $P_2O_5$ | | 1.38 | 1.37 | 1.38 | 1.40 | 1.39 | 1.38 |
| ZnO | | 0 | 0 | 0 | 0 | 0 | 0 |
| $SnO_2$ | | 0.27 | 0.27 | 0.27 | 0.27 | 0.27 | 0.27 |
| SrO | | 0.004 | 0.004 | 0.004 | 0.001 | 0.002 | 0.003 |
| Pb0 | | <0.001 | <0.001 | <0.001 | <0.001 | <0.001 | <0.001 |
| C I | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.03 | 0.03 | 0.03 |

(continued)

| | Unit | No.19 | No.20 | No.21 | No.22 | No.23 | No.24 |
|---|---|---|---|---|---|---|---|
| $Fe_2O_3$ | | 80 | 80 | 80 | 90 | 90 | 90 |
| $MoO_3$ | | <0.3 | <0.3 | <0.3 | <0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | 2.00 | unmeasured | unmeasured | 2.00 | 2.00 | 2.00 |
| $Nd_2O_3$ | | <5 | <5 | <5 | <5 | <5 | <5 |
| $Pr_6O_{11}$ | | 1.00 | 1.00 | 1.00 | unmeasured | unmeasured | unmeasured |
| $Sm_2O_3$ | | < 1 | <1 | <1 | unmeasured | unmeasured | unmeasured |
| $Li_2O/BaO$ | - | 2.89 | 2.36 | 2.60 | 13.63 | 3.98 | 2.33 |
| $Na_2O + K_2O$ | % by mass | 0.65 | 0.40 | 0.52 | 0.09 | 0.09 | 0.10 |
| $MgO+CaO$ | % by mass | 0.88 | 0.73 | 0.80 | 1.63 | 1.47 | 1.31 |
| $(Na_2O + K_2O + MgO)/BaO$ | - | 1.24 | 0.74 | 0.96 | 7.00 | 1.85 | 0.99 |
| $8Li_2O-4(Na_2O+K_2O+MgO)-(BaO+ZnO)$ | % by mass | 20.79 | 22.12 | 21.42 | 19.20 | 19.18 | 19.05 |
| $(Li_2O+Na_2O+K_2O)/ZrO_2$ | - | 1.83 | 1.72 | 1.77 | 1.47 | 1.48 | 1.47 |

[Table 8]

| | Unit | No.19 | No.20 | No.21 | No.22 | No.23 | No.24 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.44 | 2.44 | 2.44 | 2.43 | 2.44 | 2.44 |
| CLTE at30-380°C | x10$^{-7}$/°C | 39.7 | 39.1 | unmeasured | unmeasured | unmeasured | unmeasured |
| Glass Transitbn Point Tg | °C | 715 | 725 | unmeasured | unmeasured | unmeasured | unmeasured |
| Deform atbn Point Tf | | 777 | 785 | unmeasured | unmeasured | unmeasured | unmeasured |
| 10$^4$ | | 1337 | 1345 | 1345 | 1337 | unmeasured | unmeasured |
| 10$^{3.5}$ | | 1421 | 1428 | 1429 | 1420 | unmeasured | unmeasured |
| 10$^3$ | | 1517 | 1525 | 1526 | 1515 | unmeasured | unmeasured |
| 10$^{2.5}$ | | 1629 | 1638 | 1639 | 1627 | unmeasured | unmeasured |
| Liquidus Tem perature TL | | 1363 | 1358 | 1353 | 1373 | 1362 | 1363 |
| Liquidus Viscosity bg $\eta$ | - | 3.84 | 3.92 | 3.95 | 3.77 | 3.85 | 3.86 |
| Prin ary Phase | - | ZrO$_2$ | ZrO$_2$ | ZrO$_2$ | mullite | mullite | mullite |
| After Crystallization | | | | | | | |
| Crystallization Conditions | - | 780°C-3h 890°C-1h | 780°C-3h 890°C-1h | 780°C-3h 890°C-1h | 780°C-3h 890°C-1h | 780°C-3h 890°C-1h | 780°C-3h 890°C-1h |
| Precipitated Crystals | - | unmeasured | unmeasured | unmeasured | $\beta$-quartz | $\beta$-quartz | $\beta$-quartz |
| C rysta Ilinity | - | unmeasured | unmeasured | unmeasured | unmeasured | unmeasured | unmeasured |
| Crystallite Size | nm | unmeasured | unmeasured | unmeasured | 37 | 37 | 37 |
| Density | g/cm$^3$ | 2.53 | 2.54 | 2.53 | 2.55 | 2.55 | 2.55 |
| CLTE at30-380°C | $\times$10$^{-7}$/°C | 0.0 | -1.5 | -0.4 | 4.4 | unmeasured | unmeasured |
| CLTE at30-750°C | | 1.5 | -0.5 | 0.8 | 4.0 | unmeasured | unmeasured |

EP 4 656 605 A1

| After Crystallization | | | | | | | |
|---|---|---|---|---|---|---|---|
| Total Transmittance L* | | | 94.1 | 94.3 | 94.1 | 93.7 | 94.0 | 94.1 |
| Total T ransm ittance a* | | | -0.7 | -0.7 | -0.6 | -0.6 | -0.6 | -0.5 |
| Total Transmittance b* | | | 5.6 | 5.2 | 5.4 | 5.9 | 5.5 | 5.2 |
| Diffuse T ransm ittance L* | | - | 2.0 | 1.3 | 1.6 | 1.2 | 2.2 | 1.2 |
| Diffuse T ransm ittance a* | | | 0.2 | 0.0 | 0.1 | 0.2 | 0.1 | 0.1 |
| Diffuse Transmittance b* | | | -3.8 | -2.0 | -2.6 | -2.0 | -2.5 | -1.8 |
| Total Transmittance at 4 mm thickness and 1500 nm wavelength | | | 90.4 | 90.4 | 90.4 | 90.3 | 90.1 | 89.9 |

[Table 9]

| | Unit | No.25 | No.26 | No.27 | No.28 | No.29 | No.30 |
|---|---|---|---|---|---|---|---|
| $SiO_2$ | % by mass | 65.5 | 65.8 | 66.3 | 65.9 | 65.5 | 65.9 |
| $Al_2O_3$ | | 22.2 | 22.3 | 22.2 | 22.0 | 21.9 | 22.2 |
| $Li_2O$ | | 3.23 | 3.55 | 3.17 | 3.15 | 3.13 | 3.19 |
| $Na_2O$ | | 0.09 | 0.43 | 0.08 | 0.09 | 0.09 | 0.55 |
| $K_2O$ | | 0.01 | 0.15 | 0.01 | 0.01 | 0.01 | 0.01 |
| $MgO$ | | 1.12 | 0.67 | 0.69 | 0.30 | 0.01 | 0.68 |
| $CaO$ | | 0.03 | 0.02 | 0.02 | 002 | 0.01 | 0.02 |
| $BaO$ | | 1.96 | 1.32 | 1.47 | 1.46 | 1.46 | 1.47 |
| $ZrO_2$ | | 2.25 | 2.19 | 2.37 | 2.67 | 3.04 | 2.26 |
| $TiO_2$ | | 1.96 | 1.95 | 1.98 | 2.27 | 2.49 | 1.99 |
| $P_2O_5$ | | 1.38 | 1.39 | 1.48 | 1.92 | 2.12 | 1.47 |
| $ZnO$ | | 0 | 0 | 0 | 0 | 0 | 0 |
| $SnO_2$ | | 0.27 | 0.28 | 0.26 | 0.25 | 0.24 | 0.28 |
| $SrO$ | | 0.004 | 0.002 | 0.003 | 0.002 | 0.002 | 0.002 |
| $Pb0$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.03 | 0.03 |

(continued)

| | Unit | No.25 | No.26 | No.27 | No.28 | No.29 | No.30 |
|---|---|---|---|---|---|---|---|
| $Fe_2O_3$ | | 90 | 80 | 80 | 80 | 80 | 80 |
| $MoO_3$ | | <0.3 | <0.3 | <0.3 | <0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 1.65 | 2.69 | 2.16 | 2.16 | 2.14 | 2.17 |
| $Na_2O + K_2O$ | % by mass | 0.10 | 0.58 | 0.09 | 0.10 | 0.10 | 0.56 |
| $MgO+CaO$ | % by mass | 1.15 | 0.69 | 0.71 | 0.32 | 0.02 | 0.70 |
| $(Na_2O + K_2O+MgO)/BaO$ | - | 0.62 | 0.95 | 0.53 | 0.27 | 0.08 | 0.84 |
| $8Li_2O-4(Na_2O+K_2O+MgO)-(BaO+ZnO)$ | % by mass | 19.00 | 22.08 | 20.77 | 22.14 | 23.14 | 19.09 |
| $(Li_2O+Na_2O+K_2O)/ZrO_2$ | - | 1.48 | 1.89 | 1.38 | 1.22 | 1.06 | 1.66 |

[Table 10]

| | Unit | No.25 | No.26 | No.27 | No.28 | No.29 | No.30 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.45 | 2.43 | 2.44 | 2.44 | 2.44 | 2.44 |
| CLTE at30-380°C | $\times 10^{-7}$/°C | unmeasured | 38.9 | unmeasured | unmeasured | unmeasured | unmeasured |
| Glass Transitbn Point Tg | | unmeasured | 726 | unmeasured | unmeasured | unmeasured | unmeasured |
| Deform atbn Point Tf | | unmeasured | 787 | unmeasured | unmeasured | unmeasured | unmeasured |
| $10^4$ | | 1344 | 1350 | unmeasured | unmeasured | unmeasured | 1358 |
| $10^{3.5}$ | °C | 1427 | 1434 | unmeasured | unmeasured | unmeasured | 1442 |
| $10^3$ | | 1523 | 1531 | unmeasured | unmeasured | unmeasured | 1539 |
| $10^{2.5}$ | | 1634 | 1645 | unmeasured | unmeasured | unmeasured | 1652 |
| Liquidus Tem perature TL | | 1368 | 1354 | 1386 | 1422 | 1444 | 1360 |
| Liquidus Viscosity bg $\eta$ | - | 3.85 | 3.97 | 3.83 | 3.65 | 3.54 | 3.98 |
| Prin ary Phase | - | mullite | ZrO$_2$ | mullite | mullite | mullite | mullite |
| After Crystallization | | | | | | | |
| Crystallization Conditions | - | 780°C-3h 890°C-1h | 780°C-3h 890°C-1h | 780°C-3h 920°C-1h | 780°C-3h 920°C-1h | 780°C-3h 890°C-1h | 780°C-3h 890°C-1h |
| Precipitated Crystals | - | $\beta$-quartz | $\beta$-quartz | $\beta$-quartz | $\beta$-quartz | unmeasured | unmeasured |
| Crystallinity | - | unmeasured | unmeasured | unmeasured | unmeasured | unmeasured | unmeasured |
| Crystallite Size | nm | 36 | 36 | 40 | 47 | unmeasured | unmeasured |
| Density | g/cm$^3$ | 2.56 | 2.53 | 2.57 | 2.57 | 2.51 | unmeasured |
| CLTE at30-380°C | $\times 10^{-7}$/°C | 2.9 | -1.0 | unmeasured | unmeasured | unmeasured | 3.5 |
| CLTE at30-750°C | | 3.0 | 0.1 | unmeasured | unmeasured | unmeasured | 3.5 |

(continued)

| After Crystallization | | | | | | | |
|---|---|---|---|---|---|---|---|
| Total Transmittance L* | - | 94.2 | 94.6 | 93.4 | unmeasured | unmeasured | 93.2 |
| Total T ransm ittance a* | | -0.4 | -0.4 | -0.7 | unmeasured | unmeasured | -0.4 |
| Total Transmittance b* | | 4.8 | 4.1 | 7.1 | unmeasured | unmeasured | 6.3 |
| Diffuse T ransm ittance L* | | 0.7 | 2.0 | 2.2 | unmeasured | unmeasured | 7.7 |
| Diffuse Transmittance a* | | 0.1 | 0.0 | 0.7 | unmeasured | unmeasured | 0.7 |
| Diffuse Transmittance b* | | -1.1 | -2.1 | -5.3 | unmeasured | unmeasured | -10.8 |
| Total Transmittance at 4 mm thickness and 1500 nm wavelength | | 90.7 | 90.9 | 90.7 | 90.5 | 89.3 | 90.6 |

[Table 11]

| | Unit | No.31 | No.32 | No.33 | No.34 | No.35 | No.36 |
|---|---|---|---|---|---|---|---|
| $SiO_2$ | % by mass | 65.8 | 65.7 | 65.5 | 65.8 | 66.3 | 66.7 |
| $Al_2O_3$ | | 22.1 | 22.1 | 22.0 | 22.2 | 22.2 | 22.3 |
| $Li_2O$ | | 3.18 | 3.18 | 3.16 | 3.39 | 3.37 | 3.37 |
| $Na_2O$ | | 1.10 | 1.60 | 0.83 | 0.42 | 0.26 | 0.26 |
| $K_2O$ | | 0.01 | 0.01 | 1.16 | 0.16 | 0.08 | 0.08 |
| MgO | | 0.33 | 0.00 | 0.00 | 0.67 | 1.29 | 0.77 |
| CaO | | 0.02 | 0.01 | 0.01 | 0.03 | 0.04 | 0.03 |
| BaO | | 1.46 | 1.46 | 1.45 | 1.31 | 0.66 | 0.67 |
| $ZrO_2$ | | 2.26 | 2.25 | 2.25 | 2.22 | 2.22 | 2.21 |
| $TiO_2$ | | 1.98 | 1.98 | 1.97 | 1.95 | 1.93 | 1.92 |
| $P_2O_5$ | | 1.47 | 1.46 | 1.45 | 1.39 | 1.41 | 1.42 |
| ZnO | | 0 | 0 | 0 | 0 | 0 | 0 |
| $SnO_2$ | | 0.29 | 0.28 | 0.27 | 0.48 | 0.28 | 0.27 |
| SrO | | 0.002 | 0.003 | 0.003 | 0.003 | 0.002 | 0.002 |
| Pb0 | | <0.001 | <0.001 | <0.001 | <0.001 | <0.001 | <0.001 |
| C l | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.03 | 0.03 |

(continued)

| | Unit | No.31 | No.32 | No.33 | No.34 | No.35 | No.36 |
|---|---|---|---|---|---|---|---|
| $Fe_2O_3$ | | 70 | 70 | 70 | 80 | 90 | 80 |
| $MoO_3$ | | <0.3 | <0.3 | <0.3 | <0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 2.18 | 2.18 | 2.18 | 2.59 | 5.11 | 5.03 |
| $Na_2O +K_2O$ | % by mass | 1.11 | 1.61 | 1.99 | 0.58 | 0.34 | 0.34 |
| MgO+CaO | % by mass | 0.35 | 0.01 | 0.01 | 0.70 | 1.33 | 0.80 |
| $(Na_2O +K_2O+MgO)/BaO$ | - | 0.99 | 1.10 | 1.37 | 0.95 | 2.47 | 1.66 |
| $8Li_2O-4(Na_2O+K_2O+MgO)-(BaO+ZnO)$ | % by mass | 18.22 | 17.54 | 15.87 | 20.81 | 19.78 | 21.85 |
| $(Li_2O+Na_2O+K_2O)/ZrO_2$ | - | 1.90 | 2.13 | 2.29 | 1.79 | 1.67 | 1.68 |

[Table 12]

| | Unit | No.31 | No.32 | No.33 | No.34 | No.35 | No.36 |
|---|---|---|---|---|---|---|---|
| Before Crystallization | | | | | | | |
| $\beta$-OH | /mm | 0.10 | 0.40 | 0.40 | 0.40 | 0.40 | 0.10 |
| Density | g/cm$^3$ | 2.43 | 2.43 | 2.43 | 2.44 | 2.43 | 2.42 |
| CLTE at30-380°C | x10$^{-7}$/°C | unmeasured | unmeasured | unmeasured | unmeasured | unmeasured | 37.0 |
| Glass Transition Point Tg | | unmeasured | unmeasured | unmeasured | unmeasured | unmeasured | 724 |
| Deform atbn Point Tf | | unmeasured | unmeasured | unmeasured | unmeasured | unmeasured | 781 |
| 10$^4$ | | 1366 | unmeasured | unmeasured | unmeasured | unmeasured | 1352 |
| 10$^{3.5}$ | °C | 1452 | unmeasured | unmeasured | unmeasured | unmeasured | 1436 |
| 10$^3$ | | 1551 | unmeasured | unmeasured | unmeasured | unmeasured | 1530 |
| 10$^{2.5}$ | | 1667 | unmeasured | unmeasured | unmeasured | unmeasured | 1637 |
| Liquidus Temperature TL | | 1378 | 1387 | 1392 | 1387 | 1367 | 1398 |
| Liquidus Viscosity bg $\eta$ | - | 3.93 | 3.80 | 3.80 | 3.74 | 3.82 | 3.72 |
| Prin ary Phase | - | mullite, $\beta$-spo-dumene | ZrO$_2$ | ZrO$_2$ | ZrO$_2$ | mullite | mullite, $\beta$-spodumene |
| After Crystallization | | | | | | | |
| Crystallization Conditions | - | 780°C-3h 920°C-1h | 780°C-3h 920°C-2h | 780°C-3h 920°C-2h | 780°C-3h 920°C-1h | 780°C-3h 890°C-1h | 780°C-3h 890°C-1h |
| Precipitated Crystals | - | unmeasured | unmeasured | unmeasured | unmeasured | unmeasured | $\beta$-quartz |
| Crystallinity | - | unmeasured | unmeasured | unmeasured | unmeasured | unmeasured | unmeasured |
| Crystallite Size | nm | unmeasured | unmeasured | unmeasured | unmeasured | unmeasured | 39 |
| Density | g/cm$^3$ | unmeasured | unmeasured | unmeasured | unmeasured | unmeasured | unmeasured |
| CLTE at30-380°C | $\times$10$^{-7}$/°C | 3.8 | unmeasured | unmeasured | 1.6 | 2.5 | -0.9 |
| CLTE at30-750°C | | 4.3 | unmeasured | unmeasured | 2.4 | 2.5 | -0.5 |

EP 4 656 605 A1

(continued)

|  | Unit | No.31 | No.32 | No.33 | No.34 | No.35 | No.36 |
|---|---|---|---|---|---|---|---|
| Total Transmittance L* | - | 92.9 | unmeasured | unmeasured | 94.0 | 94.4 | 94.0 |
| Total T ransm ittance a* | | -0.3 | unmeasured | unmeasured | -0.8 | -0.5 | -0.5 |
| Total Transmittance b* | | 6.8 | unmeasured | unmeasured | 5.8 | 4.6 | 5.0 |
| Diffuse T ransm ittance L* | | unmeasured | unmeasured | unmeasured | 1.3 | 0.7 | 1.6 |
| Diffuse T ransm ittance a* | | unmeasured | unmeasured | unmeasured | 0.1 | 0.1 | 0.1 |
| Diffuse Transmittance b* | | unmeasured | unmeasured | unmeasured | -2.3 | -1 .3 | -2.0 |
| Total Transmittance at 4 mm thickness and 1500 nm wavelength | | 90.8 | unmeasured | unmeasured | 90.9 | 90.8 | 90.5 |

[Table 13]

| | Unit | No.37 | No.38 | No.39 | No.40 | No.41 | No.42 |
|---|---|---|---|---|---|---|---|
| $SiO_2$ | % by mass | 65.8 | 67.7 | 68.0 | 67.6 | 66.8 | 67.3 |
| $Al_2O_3$ | | 22.2 | 22.1 | 21.9 | 21.7 | 21.3 | 22.3 |
| $Li_2O$ | | 3.37 | 3.21 | 3.21 | 3.20 | 3.16 | 3.25 |
| $Na_2O$ | | 0.25 | 0.05 | 0.05 | 0.07 | 0.07 | 0.05 |
| $K_2O$ | | 0.09 | 0.01 | 0.01 | 0.01 | 0.01 | 0.02 |
| MgO | | 0.89 | 0.97 | 0.97 | 0.98 | 0.48 | 1.22 |
| CaO | | 0.03 | 0.03 | 0.03 | 0.03 | 0.02 | 0.04 |
| BaO | | 1.64 | 0.01 | 0.01 | 0.01 | 1.85 | 0.01 |
| $ZrO_2$ | | 2.18 | 2.24 | 2.22 | 2.72 | 2.72 | 2.25 |
| $TiO_2$ | | 1.94 | 1.94 | 1.95 | 1.95 | 1.93 | 1.92 |
| $P_2O_5$ | | 1.39 | 1.42 | 1.39 | 1.42 | 1.39 | 1.43 |
| ZnO | | 0 | 0 | 0 | 0 | 0 | 0 |
| $SnO_2$ | | 0.24 | 0.29 | 0.26 | 0.30 | 0.29 | 0.26 |
| SrO | | 0.003 | <0.001 | <0.001 | <0.001 | 0.003 | <0.001 |
| Pb0 | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.03 | 0.03 |
| $Fe_2O_3$ | ppm | 80 | 90 | 90 | 90 | 80 | 100 |
| $MoO_3$ | | <0.3 | <0.3 | <0.3 | <0.3 | <0.3 | <0.3 |
| Pt | | unm easured | unm ea-sured | unm ea-sured | unm ea-sured | unm ea-sured | unm ea-sured |
| Rh | | unm easured | unm ea-sured | unm ea-sured | unm ea-sured | unm ea-sured | unm ea-sured |
| $V_2O_5$ | | unm easured | unm ea-sured | unm ea-sured | unm ea-sured | unm ea-sured | unm ea-sured |
| $Nd_2O_3$ | | <5 | <5 | <5 | <5 | <5 | <5 |
| $Pr_6O_{11}$ | | unm easured | unm ea-sured | unm ea-sured | unm ea-sured | unm ea-sured | unm ea-sured |
| $Sm_2O_3$ | | unmeasured | unm ea-sured | unm ea-sured | unm ea-sured | unm ea-sured | unm ea-sured |
| $Li_2O$/BaO | - | 2.05 | 321 | 321 | 320 | 1.71 | 325 |
| $Na_2O$ +$K_2O$ | % by mass | 0.34 | 0.06 | 0.06 | 0.08 | 0.08 | 0.07 |
| MgO+CaO | % by mass | 0.92 | 1.00 | 1.00 | 1.01 | 0.50 | 1.26 |
| ($Na_2O$+$K_2O$+MgO)/BaO | - | 0.75 | 103.00 | 103.00 | 106.00 | 0.30 | 129.00 |
| 8$Li_2O$-4($Na_2O$+$K_2O$+M-gO)-(BaO+ZnO) | % by mass | 20.40 | 21.55 | 21.55 | 21.35 | 21.19 | 20.83 |
| ($Li_2O$+$Na_2O$+$K_2O$)/$ZrO_2$ | - | 1.70 | 1.46 | 1.47 | 1.21 | 1.19 | 1.48 |

[Table 14]

| | Unit | No.37 | No.38 | No.39 | No.40 | No.41 | No.42 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.44 | 2.41 | 2.41 | 2.42 | 2.44 | 2.42 |
| CLTE at30-380°C | $\times10^{-7}$/°C | 38.0 | unm ea-sured | unm ea-sured | unm ea-sured | 35.0 | unm ea-sured |
| Glass Transition Point Tg | | 720 | unm ea-sured | unm ea-sured | unm ea-sured | 739 | unm ea-sured |
| Deformation Point Tf | | 774 | unm ea-sured | unm ea-sured | unm ea-sured | 801 | unm ea-sured |
| 10$^4$ | | 1347 | unm ea-sured | unm ea-sured | unm ea-sured | unm ea-sured | 1364 |
| 10$^{3.5}$ | °C | 1431 | unm ea-sured | unm ea-sured | unm ea-sured | unm ea-sured | 1448 |
| 10$^3$ | | 1527 | unm ea-sured | unm ea-sured | unm ea-sured | unm ea-sured | 1544 |
| 10$^{2.5}$ | | 1636 | unm ea-sured | unm ea-sured | unm ea-sured | unm ea-sured | 1655 |
| Liquidus Temperature TL | | 1364 | 1428 | 1430 | 1404 | 1401 | 1426 |
| Liquidus Viscosity bg$\eta$ | - | 3.90 | 3.61 | 3.60 | 3.75 | 3.80 | 3.62 |
| Prin ary Phase | - | mullite | mullite | mullite | ZrO$_2$ | mullite | mullite |
| After Crystallization | | | | | | | |
| Crystallization Conditions | - | 780°C-3h 890°C-1h | 780°C-3h 920°C-1h | 780°C-3h 920°C-1h | 780°C-3h 920°C-1h | 780°C-3h 920°C-1h | 780°C-3h 890°C-1h |
| Precipitated Crystals | - | unm ea-sured | unm ea-sured | unm ea-sured | unm ea-sured | $\beta$-quartz | $\beta$-quartz |
| Crystallinity | | unm ea-sured | unm ea-sured | unm ea-sured | unm ea-sured | unm ea-sured | unm ea-sured |
| Crystallite Size | nm | unm ea-sured | unm ea-sured | unm ea-sured | unm ea-sured | 47 | 42 |
| Density | g/cm$^3$ | unm ea-sured | unm ea-sured | unm ea-sured | unm ea-sured | unm ea-sured | unm ea-sured |
| CLTE at30-380°C | $\times10^{-7}$/°C | 0.8 | 4.1 | 4.6 | 3.4 | 2.4 | 2.5 |
| CLTE at30-750°C | | 1.4 | 2.5 | 2.7 | 2.8 | 0.7 | 2.2 |

(continued)

| | Unit | No.37 | No.38 | No.39 | No.40 | No.41 | No.42 |
|---|---|---|---|---|---|---|---|
| Total Transmittance L* | | 94.6 | 94.0 | 93.7 | unm ea-sured | unm ea-sured | 93.7 |
| Total Transmittance a* | | -0.4 | -0.7 | -0.8 | unm ea-sured | unm ea-sured | -0.5 |
| Total Transmittance b* | | 4.1 | 6.1 | 6.6 | unm ea-sured | unm ea-sured | 5.9 |
| Diffuse Transmittance L* | - | 1.0 | 3.7 | 2.6 | unm ea-sured | unm ea-sured | 5.2 |
| Diffuse Transmittance a* | | 0.1 | 0.4 | 0.8 | unm ea-sured | unm ea-sured | 0.4 |
| Diffuse Transmittance b* | | -1.7 | -4.8 | -6.4 | unm ea-sured | unm ea-sured | -8.5 |
| Total Transmittance at 4 mm thickness and 1500 nm wave length | | 90.5 | 90.3 | 90.2 | 90.6 | 90.1 | 90.3 |

[Table 15]

| | Unit | No.43 | No.44 | No.45 | No.46 | No.47 | No.48 |
|---|---|---|---|---|---|---|---|
| $SiO_2$ | | 66.1 | 65.0 | 66.5 | 65.9 | 66.9 | 66.8 |
| $Al_2O_3$ | | 21.9 | 21.5 | 22.2 | 23.1 | 22.3 | 22.4 |
| $Li_2O$ | | 3.20 | 3.14 | 3.23 | 3.36 | 3.25 | 3.37 |
| $Na_2O$ | | 0.07 | 0.09 | 0.06 | 0.26 | 0.27 | 0.07 |
| $K_2O$ | | 0.02 | 0.02 | 0.02 | 0.08 | 0.08 | 0.08 |
| MgO | | 0.60 | 0.01 | 0.97 | 0.81 | 0.80 | 0.81 |
| CaO | | 0.03 | 0.01 | 0.03 | 0.03 | 0.03 | 0.03 |
| BaO | | 2.30 | 4.51 | 0.01 | 0.67 | 0.67 | 0.68 |
| $ZrO_2$ | | 2.21 | 2.17 | 2.24 | 2.18 | 2.18 | 2.18 |
| $TiO_2$ | % by mass | 1.90 | 1.87 | 1.92 | 1.89 | 1.89 | 1.90 |
| $P_2O_5$ | | 1.41 | 1.39 | 2.33 | 1.43 | 1.42 | 1.43 |
| ZnO | | 0 | 0 | 0 | 0 | 0 | 0 |
| $SnO_2$ | | 0.27 | 0.27 | 0.26 | 0.27 | 0.26 | 0.26 |
| SrO | | 0.004 | 0.007 | <0.001 | 0.001 | 0.001 | 0.005 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.03 | 0.03 | 0.03 |

(continued)

|  | Unit | No.43 | No.44 | No.45 | No.46 | No.47 | No.48 |
|---|---|---|---|---|---|---|---|
| $Fe_2O_3$ | ppm | 90 | 80 | 100 | 90 | 90 | 90 |
| $MoO_3$ | | <0.3 | <0.3 | <0.3 | <0.3 | <0.3 | <0.3 |
| Pt | | 2.00 | unm easured | unm easured | unm easured | unm easured | unm easured |
| Rh | | 0.03 | unm easured | unm easured | unm easured | unm easured | unm easured |
| $V_2O_5$ | | unm easured | 1.00 | 3.00 | 3.00 | 3.00 | unm easured |
| $Nd_2O_3$ | | <5 | <5 | <5 | <5 | <5 | <5 |
| $Pr_6O_{11}$ | | unm easured | unm easured | unm easured | unm easured | unm easured | unm easured |
| $Sm_2O_3$ | | unmeasured | unm easured | unm easured | unm easured | unm easured | unm easured |
| $Li_2O/BaO$ | - | 1.39 | 0.70 | 323 | 5.01 | 4.85 | 4.96 |
| $Na_2O +K_2O$ | % by mass | 0.09 | 0.11 | 0.08 | 0.34 | 0.35 | 0.15 |
| MgO+CaO | % by mass | 0.63 | 0.02 | 1.00 | 0.84 | 0.83 | 0.84 |
| $(Na_2O+K_2O+MgO)/BaO$ | - | 0.30 | 0.03 | 105.00 | 1.72 | 1.72 | 1.41 |
| $8Li_2O-4(Na_2O+K_2O+MgO)-(BaO+ZnO)$ | % by mass | 20.54 | 20.13 | 21.63 | 21.61 | 20.73 | 22.44 |
| $(Li_2O+Na_2O+K_2O)/ZrO_2$ | - | 1.49 | 1.50 | 1.48 | 1.70 | 1.65 | 1.61 |

[Table 16]

|  | Unit | No.43 | No.44 | No.45 | No.46 | No.47 | No.48 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.45 | 2.48 | 2.41 | 2.43 | 2.42 | 2.42 |
| CLTE at30-380°C | $\times 10^{-7}$/°C | 35.9 | 37.7 | unm easured | unm easured | unm easured | unm easured |

(continued)

| | Unit | No.43 | No.44 | No.45 | No.46 | No.47 | No.48 |
|---|---|---|---|---|---|---|---|
| Before Crystallization | | | | | | | |
| Glass Transition Point Tg | °C | 736 | 735 | unm easured | unm easured | unm easured | unm easured |
| Deformation Point Tf | | 795 | 794 | unm easured | unm easured | unm easured | unm easured |
| $10^4$ | | unm easured | 1377 | 1353 | unm easured | unm easured | unm easured |
| $10^{3.5}$ | °C | unm easured | 1461 | 1436 | unm easured | unm easured | unm easured |
| $10^3$ | | unm easured | 1557 | 1531 | unm easured | unm easured | unm easured |
| $10^{2.5}$ | | unm easured | 1668 | 1641 | unm easured | unm easured | unm easured |
| Liquidus Temperature TL | | 1386 | 1372 | 1409 | 1426 | 1390 | 1408 |
| Liquidus Viscosity bg $\eta$ | - | 3.83 | 4.03 | 3.66 | unm easured | unm easured | unm easured |
| Primary Phase | - | mullite | mullite | mullite | mullite | mullite | mullite |
| After Crystallization | | | | | | | |
| Crystallization Conditions | - | 780°C-3h 890°C-1h | 780°C-3h 920°C-1h | 780°C-3h 890°C-1h | 780°C-3h 890°C-1h | 780°C-3h 890°C-1h | 780°C-3h 890°C-1h |
| Precipitated Crystals | - | $\beta$-quartz | $\beta$-quartz | $\beta$-quartz | unm easured | $\beta$-quartz | $\beta$-quartz |
| Crystallinity | | unm easured | unm easured | unm easured | unm easured | unm easured | unm easured |
| Crystallite Size | nm | 43 | 39 | 40 | unm easured | 39 | 38 |
| Density | g/cm$^3$ | unm easured | unm easured | unm easured | unm easured | unm easured | unm easured |
| CLTE at30-380°C | $\times 10^{-7}$/°C | -0.6 | -0.3 | -0.1 | -0.7 | 0.0 | -1 .6 |
| CLTE at30-750°C | | -0.4 | 0.2 | -0.7 | -0.2 | -0.6 | -1.5 |

(continued)

| After Crystallization | | | | | | | |
|---|---|---|---|---|---|---|---|
| Total Transmittance L* | | 94.2 | 94.5 | 94.4 | 94.0 | 93.7 | 94.1 |
| Total Transm ittance a* | | -0.4 | -0.4 | -0.4 | -0.4 | -0.4 | -0.5 |
| Total Transmittance b* | | 5.5 | 4.2 | 4.7 | 5.1 | 5.6 | 5.2 |
| Diffuse Transmittance L* | - | 4.4 | 2.3 | 2.7 | 2.5 | 6.0 | 1.6 |
| Diffuse Transmittance a* | | 0.4 | 0.1 | 0.2 | 0.2 | 0.4 | 0.1 |
| Diffuse Transmittance b* | | -7.2 | -3.1 | -4.3 | -3.8 | -8.9 | -2.4 |
| Total Transmittance at 4 mm thickness and 1500 nm wave length | | 90.7 | 91.3 | 90.5 | 90.4 | 90.1 | 90.1 |

[Table 17]

| | Unit | No.49 | No.50 | No.51 | No.52 | No.53 | No.54 |
|---|---|---|---|---|---|---|---|
| $SiO_2$ | | 669 | 66.7 | 66.5 | 66.0 | 67.0 | 65.1 |
| $Al_2O_3$ | | 22.3 | 22.3 | 22.3 | 22.1 | 22.4 | 21.5 |
| $Li_2O$ | | 3.37 | 3.32 | 3.27 | 3.25 | 3.29 | 3.15 |
| $Na_2O$ | | 0.26 | 0.08 | 0.08 | 0.11 | 0.07 | 0.08 |
| $K_2O$ | | 0.09 | 0.01 | 0.01 | 0.01 | 0.01 | 0.01 |
| MgO | | 0.66 | 0.97 | 0.97 | 0.72 | 1.22 | 0.01 |
| CaO | | 0.03 | 0.03 | 0.03 | 0.03 | 0.04 | 0.01 |
| BaO | | 0.67 | 0.91 | 1.14 | 2.07 | 0.24 | 3.61 |
| $ZrO_2$ | % by mass | 2.18 | 2.18 | 2.18 | 2.16 | 2.19 | 2.17 |
| $TiO_2$ | | 1.90 | 1.83 | 1.83 | 1.81 | 1.86 | 1.86 |
| $P_2O_5$ | | 1.43 | 1.43 | 1.43 | 1.42 | 1.44 | 2.26 |
| ZnO | | 0 | 0 | 0 | 0 | 0 | 0 |
| $SnO_2$ | | 0.26 | 0.26 | 0.27 | 0.28 | 0.27 | 0.27 |
| SrO | | 0.002 | 0.003 | 0.003 | 0.003 | 0.003 | 0.002 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.03 | 0.03 | 0.03 | 0.04 | 0.04 | 0.04 |

(continued)

| | Unit | No.49 | No.50 | No.51 | No.52 | No.53 | No.54 |
|---|---|---|---|---|---|---|---|
| $Fe_2O_3$ | | 90 | 80 | 80 | 80 | 80 | 80 |
| $MoO_3$ | | <0.3 | <0.3 | <0.3 | <0.3 | <0.3 | <0.3 |
| Pt | | unm ea-sured | unm ea-sured | unm ea-sured | 20.00 | unm ea-sured | unm ea-sured |
| Rh | | unm ea-sured | unm ea-sured | unm ea-sured | 10.00 | unm ea-sured | unm ea-sured |
| $V_2O_5$ | ppm | unm ea-sured | unm ea-sured | unm ea-sured | 3.00 | unm ea-sured | unm ea-sured |
| $Nd_2O_3$ | | <5 | <5 | <5 | <5 | <5 | <5 |
| $Pr_6O_{11}$ | | unm ea-sured | unm ea-sured | unm ea-sured | unm ea-sured | unm ea-sured | unm ea-sured |
| $Sm_2O_3$ | | unm ea-sured | unm ea-sured | unm ea-sured | unm ea-sured | unm ea-sured | unm ea-sured |
| $Li_2O/BaO$ | - | 5.03 | 3.65 | 2.87 | 1.57 | 13.71 | 0.87 |
| $Na_2O + K_2O$ | % by mass | 0.35 | 0.09 | 0.09 | 0.12 | 0.08 | 0.09 |
| MgO+CaO | % by mass | 0.69 | 1.00 | 1.00 | 0.75 | 1.26 | 0.02 |
| $(Na_2O+K_2O+MgO)/BaO$ | - | 1.51 | 1.16 | 0.93 | 0.41 | 5.42 | 0.03 |
| $8Li_2O-4(Na_2O+K_2O+MgO)-(BaO+ZnO)$ | % by mass | 2225 | 21.41 | 20.78 | 20.57 | 20.88 | 21.19 |
| $(Li_2O+Na_2O+K_2O)/ZrO_2$ | - | 1.71 | 1.56 | 1.54 | 1.56 | 1.54 | 1.49 |

[Table 18]

| | Unit | No.49 | No.50 | No.51 | No.52 | No.53 | No.54 |
|---|---|---|---|---|---|---|---|
| Before Crystalliza-tion | | | | | | | |
| $\beta$-OH | /mm | 0.10 | 0.10 | 0.10 | 0.10 | 0.10 | 0.10 |
| Density | $g/cm^3$ | 2.42 | 2.42 | 2.43 | 2.43 | 2.42 | 2.46 |
| CLTE at30-380°C | $\times 10^{-7}/°C$ | unm ea-sured | unm ea-sured | unm ea-sured | unm ea-sured | unm ea-sured | unm ea-sured |

(continued)

| | Unit | No.49 | No.50 | No.51 | No.52 | No.53 | No.54 |
|---|---|---|---|---|---|---|---|
| Glass Transition Point Tg | | unm ea- sured | unm ea- sured | unm ea- sured | unm ea- sured | unm ea- sured | unm ea- sured |
| Deformation Point Tf | | unm ea- sured | unm ea- sured | unm ea- sured | unm ea- sured | unm ea- sured | unm ea- sured |
| $10^4$ | °C | unm ea- sured | 1355 | 1355 | 1361 | 1351 | 1382 |
| $10^{3.5}$ | | unm easured | 1439 | 1439 | 1444 | 1433 | 1466 |
| $10^3$ | | unm ea- sured | 1534 | 1535 | 1540 | 1528 | 1563 |
| $10^{2.5}$ | | unm easured | 1645 | 1646 | 1651 | 1639 | 1676 |
| Liquidus Temperature TL | | 1386 | 1398 | 1384 | 1398 | 1375 | 1368 |
| L iquidus Viscosity bg $\eta$ | - | unm ea- sured | 3.73 | 3.82 | 3.77 | 3.84 | 4.09 |
| Primary Phase | - | mullite | m u llite | m u llite | $ZrO_2$ | $ZrO_2$ | $ZrO_2$ |
| After Crystallization | | | | | | | |
| Crystallization Con- ditions | - | 780°C-3h 905°C-1h | 780°C-3h 875°C-1h | 780°C-3h 875°C-1h | 780°C-3h 905°C-1h | 780°C-3h 875°C-1h | 780°C-3h 905°C-1h |
| Precipitated Crys- tals | - | unm ea- sured | $\beta$ -quartz | $\beta$ - quartz | $\beta$-quartz | unm ea- sured | $\beta$ -quartz |
| Crystallinity | | unm ea- sured | unm ea- sured | unm ea- sured | unm ea- sured | unm ea- sured | unm ea- sured |
| Crystallite Size | nm | unm easured | 37 | 37 | 37 | unm ea- sured | 34 |
| Density | g/cm$^3$ | unm ea- sured | unm ea- sured | unm ea- sured | unm ea- sured | unm ea- sured | unm ea- sured |
| CLTE at30-380°C | $\times 10^{-7}$/°C | -1.1 | -0.9 | -0.3 | -0.7 | 0.8 | -2.7 |
| CLTE at30-750°C | | -0.8 | -0.7 | -0.1 | -0.3 | 0.9 | -2.2 |

(continued)

| | Unit | No.49 | No.50 | No.51 | No.52 | No.53 | No.54 |
|---|---|---|---|---|---|---|---|
| Total Transmittance L* | | 94.1 | 94.1 | 93.9 | 93.7 | 94.1 | 94.2 |
| Total Transmittance a* | | -0.5 | -0.4 | -0.3 | -0.3 | -0.3 | -0.3 |
| Total Transmittance b* | | 5.3 | 5.0 | 5.1 | 6.5 | 5.0 | 4.3 |
| Diffuse Transmittance L* | - | unm easured | 3.1 | 2.8 | 0.9 | 2.5 | 6.2 |
| Diffuse Transmittance a* | | unm easured | 0.1 | 0.2 | 0.1 | 0.2 | -0.2 |
| Diffuse Transmittance b* | | unm easured | -3.7 | -4.0 | -1.5 | -3.6 | -5.6 |
| Total Transmittance at 4 mm thickness and 1500 nm wave length | | 900 | 90.5 | 90.3 | 90.8 | 90.8 | 91.1 |

[Table 19]

| | Unit | No.55 | No.56 | No.57 | No.58 | No.59 | No.60 |
|---|---|---|---|---|---|---|---|
| $SiO_2$ | | 65.0 | 65.0 | 64.7 | 64.9 | 64.8 | 64.9 |
| $Al_2O_3$ | | 21.5 | 21.5 | 21.4 | 21.5 | 21.5 | 21.5 |
| $Li_2O$ | | 3.14 | 3.01 | 3.00 | 3.19 | 3.19 | 3.19 |
| $Na_2O$ | | 0.08 | 0.08 | 0.08 | 0.27 | 0.08 | 0.10 |
| $K_2O$ | | 0.01 | 0.01 | 0.01 | 0.01 | 0.27 | 0.01 |
| MgO | | 0.09 | 0.18 | 0.01 | 0.00 | 0.00 | 0.12 |
| CaO | | 0.01 | 0.02 | 0.01 | 0.01 | 0.01 | 0.02 |
| BaO | | 3.61 | 3.62 | 3.59 | 4.49 | 4.48 | 4.49 |
| $ZrO_2$ | | 2.17 | 2.17 | 2.16 | 2.15 | 2.15 | 2.14 |
| $TiO_2$ | % by mass | 1.86 | 1.86 | 1.85 | 1.86 | 1.86 | 1.86 |
| $P_2O_5$ | | 2.26 | 2.27 | 2.88 | 1.40 | 1.40 | 1.41 |
| ZnO | | 0 | 0 | 0 | 0 | 0 | 0 |
| $SnO_2$ | | 0.27 | 0.28 | 0.27 | 0.26 | 0.26 | 0.26 |
| SrO | | 0.003 | 0.003 | 0.003 | 0.003 | 0.003 | 0.003 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

(continued)

| | Unit | No.55 | No.56 | No.57 | No.58 | No.59 | No.60 |
|---|---|---|---|---|---|---|---|
| $Fe_2O_3$ | ppm | 80 | 80 | 80 | 80 | 80 | 80 |
| $MoO_3$ | | <0.3 | <0.3 | <0.3 | <0.3 | <0.3 | <0.3 |
| Pt | | unmeasured | unmeasured | unmeasured | 0.80 | unmeasured | 1.50 |
| Rh | | unmeasured | unmeasured | unmeasured | 0.02 | unmeasured | 0.02 |
| $V_2O_5$ | | unmeasured | unmeasured | unmeasured | 2.00 | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.87 | 0.83 | 0.84 | 0.71 | 0.71 | 0.71 |
| $Na_2O+K_2O$ | % by mass | 0.09 | 0.09 | 0.09 | 0.28 | 0.35 | 0.11 |
| $MgO+CaO$ | % by mass | 0.10 | 0.20 | 0.02 | 0.01 | 0.01 | 0.14 |
| $(Na_2O+K_2O+MgO)/BaO$ | - | 0.05 | 0.07 | 0.03 | 0.06 | 0.08 | 0.05 |
| $8Li_2O-4(Na_2O+K_2O+MgO)-(BaO+ZnO)$ | % by mass | 20.79 | 19.38 | 20.01 | 19.91 | 19.64 | 20.11 |
| $(Li_2O+Na_2O+K_2O)/ZrO_2$ | - | 1.49 | 1.43 | 1.43 | 1.61 | 1.65 | 1.54 |

[Table 20]

| | Unit | No.55 | No.56 | No.57 | No.58 | No.59 | No.60 |
|---|---|---|---|---|---|---|---|
| Before Crystallization | | | | | | | |
| $\beta$-0H | /mm | 0.10 | 0.10 | 0.10 | 0.10 | 0.10 | 0.10 |
| Density | g/cm$^3$ | 2.46 | 2.46 | 2.45 | 2.48 | 2.48 | 2.48 |
| CLTE at 30-380°C | $\times 10^{-7}$/°C | unmeasured | unmeasured | unmeasured | 38.7 | 38.7 | 37.8 |
| Glass Transition Point Tg | °C | unmeasured | unmeasured | unmeasured | 742 | 742 | 739 |
| Deformation Pont Tf | | unmeasured | unmeasured | unmeasured | 803 | 802 | 802 |
| $10^4$ | | unmeasured | 1381 | 1387 | 1372 | 1373 | 1369 |
| $10^{3.5}$ | | unmeasured | 1466 | 1471 | 1455 | 1457 | 1452 |
| $10^3$ | | unmeasured | 1562 | 1568 | 1553 | 1555 | 1549 |
| $10^{2.5}$ | | unmeasured | 1673 | 1680 | 1669 | 1688 | 1662 |
| Liquidus Temperature TL | | 1342 | 1376 | 1371 | 1370 | 1353 | 1363 |
| Liquidus Viscosity bg $\eta$ | - | unmeasured | 4.03 | 4.1 | 4.01 | 4.13 | 4.04 |

(continued)

| | Unit | No.55 | No.56 | No.57 | No.58 | No.59 | No.60 |
|---|---|---|---|---|---|---|---|
| Before Crystallization | | | | | | | |
| Primary Phase | - | $ZrO_2$ | $ZrO_2$ | $ZrO_2$ | $ZrO_2$ | $ZrO_2$ | $ZrO_2$ |
| After Crystallization | | | | | | | |
| Crystallization Conditions | - | 780°C-3h 905°C-1h | 780°C-3h 905°C-1h | 780°C-3h 905°C-1h | 780°C-3h 905°C-1h | 780°C-3h 920°C-1h | 780°C-3h 905°C-1h |
| Precipitated Crystals | - | $\beta$-quartz | $\beta$-quartz | $\beta$-quartz | $\beta$-quartz | $\beta$-quartz | $\beta$-quartz |
| Crystallinity | | unmeasured | unmeasured | unmeasured | unmeasured | unmeasured | unmeasured |
| Crystallite Size | nm | 36 | 36 | 34 | unmeasured | 39 | unmeasured |
| Density | g/cm$^3$ | unmeasured | unmeasured | unmeasured | unmeasured | unmeasured | 2.57 |
| CLTE at 30-380°C | $\times 10^{-7}$/°C | -1.6 | -0.2 | -0.8 | -3.2 | -0.4 | -1.5 |
| CLTE at 30-750°C | | -1.5 | -0.6 | -1.4 | -1.3 | 1.0 | -0.2 |
| Total Transmittance L* | | 94.3 | 94.3 | 94.3 | 94.2 | 94.3 | 94.5 |
| Total Transmittance a* | | -0.3 | -0.3 | -0.3 | -0.3 | -0.2 | -0.3 |
| Total Transmittance b* | | 4.0 | 4.3 | 4.4 | 4.5 | 5.3 | 4.2 |
| Diffuse Transmittance L* | | 2.5 | 4.2 | 3.0 | 4.2 | 3.2 | 2.7 |
| Diffuse Transmittance a* | - | 0.1 | 0.0 | 0.3 | 0.3 | 0.2 | 0.1 |
| Diffuse Transmittance b* | | -3.1 | -5.0 | -4.8 | -6.9 | -3.5 | -3.0 |
| Total Transmittance at 4 mm thickness and 1500 nm wave length | | 90.4 | 90.7 | 90.9 | 91.3 | 91.1 | 90.7 |

[Table 21]

| | Unit | No.61 | No.62 | No.63 | No.64 | No.65 | No.66 |
|---|---|---|---|---|---|---|---|
| $SiO_2$ | % by mass | 64.7 | 63.8 | 63.6 | 64.2 | 63.6 | 63.6 |
| $Al_2O_3$ | | 21.5 | 21.6 | 21.4 | 21.7 | 21.5 | 21.5 |
| $Li_2O$ | | 3.18 | 3.19 | 3.17 | 3.21 | 3.18 | 3.16 |
| $Na_2O$ | | 0.08 | 1.18 | 0.80 | 1.54 | 0.78 | 0.12 |
| $K_2O$ | | 0.01 | 0.01 | 0.01 | 0.01 | 0.01 | 0.01 |
| $MgO$ | | 0.00 | 0.01 | 0.01 | 0.01 | 0.01 | 0.01 |
| $CaO$ | | 0.01 | 0.01 | 0.01 | 0.01 | 0.01 | 0.01 |
| $BaO$ | | 4.48 | 4.56 | 5.45 | 3.67 | 4.53 | 6.01 |
| $ZrO_2$ | | 2.51 | 2.15 | 2.14 | 2.17 | 2.88 | 2.18 |
| $TiO_2$ | | 1.85 | 1.78 | 1.78 | 1.79 | 1.90 | 1.81 |
| $P_2O_5$ | | 1.40 | 1.40 | 1.39 | 1.41 | 1.39 | 1.36 |
| $ZnO$ | | 0 | 0 | 0 | 0 | 0 | 0 |
| $SnO_2$ | | 0.27 | 0.27 | 0.27 | 0.26 | 0.26 | 0.27 |
| $SrO$ | | 0.003 | 0.003 | 0.004 | 0.003 | 0.003 | 0.004 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

(continued)

| | Unit | No.61 | No.62 | No.63 | No.64 | No.65 | No.66 |
|---|---|---|---|---|---|---|---|
| $Fe_2O_3$ | ppm | 150 | 80 | 70 | 80 | 80 | 60 |
| $MoO_3$ | | 1.00 | <0.3 | <0.3 | <0.3 | <0.3 | <0.3 |
| $Pt$ | | 20.00 | unmeasured | unmeasured | unmeasured | unmeasured | 1.00 |
| $Rh$ | | 10.00 | unmeasured | unmeasured | unmeasured | unmeasured | 0.02 |
| $V_2O_5$ | | 2.00 | 2.00 | 3.00 | unmeasured | unmeasured | 2.00 |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.71 | 0.70 | 0.58 | 0.87 | 0.70 | 0.53 |
| $Na_2O+K_2O$ | % by mass | 0.09 | 1.19 | 0.81 | 1.55 | 0.79 | 0.13 |
| $MgO+CaO$ | % by mass | 0.01 | 0.02 | 0.02 | 0.02 | 0.02 | 0.02 |
| $(Na_2O+K_2O+MgO)/BaO$ | - | 0.02 | 0.26 | 0.15 | 0.43 | 0.18 | 0.02 |
| $8Li_2O-4(Na_2O+K_2O+MgO)-(BaO+ZnO)$ | % by mass | 20.60 | 16.16 | 16.63 | 15.77 | 17.71 | 18.71 |
| $(Li_2O+Na_2O+K_2O)/ZrO_2$ | - | 1.30 | 2.04 | 1.86 | 2.19 | 1.38 | 1.51 |

[Table 22]

| | Unit | No.61 | No.62 | No.63 | No.64 | No.65 | No.66 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.48 | 2.48 | 2.49 | 2.47 | 2.49 | 2.50 |
| CLTE at30-380°C | ×10$^{-7}$/°C | 38.0 | unm easured | unm easured | unm easured | unm easured | 39.6 |
| Glass Transition Point Tg | | 734 | unmeasured | unmeasured | unmeasured | unmeasured | 733 |
| Deformation Pont Tf | | 797 | unmeasured | unmeasured | unmeasured | unmeasured | 793 |
| 10$^4$ | | 1371 | 1372 | 1369 | 1367 | 1360 | 1365 |
| 10$^{3.5}$ | °C | 1454 | 1449 | 1452 | 1451 | 1443 | 1448 |
| 10$^3$ | | 1551 | 1548 | 1549 | 1549 | 1539 | 1544 |
| 10$^{2.5}$ | | 1666 | 1681 | 1667 | 1663 | 1651 | 1657 |
| Liquidus Temperature TL | | 1387 | 1384 | 1376 | 1390 | 1438 | 1370 |
| Liquidus Viscosity bg $\eta$ | - | 3.9 | 3.91 | 3.96 | 3.85 | 3.53 | 3.97 |
| Primary Phase | - | ZrO$_2$ | ZrO$_2$, β-spodu-mene | ZrO$_2$ | ZrO$_2$ | ZrO$_2$ | ZrO$_2$ |
| After Crystallization | | | | | | | |
| Crystallization Conditions | - | 780°C-3h 920°C-1h | 780°C-3h 920°C-1h | 780°C-3h 920°C-1h | 780°C-3h 920°C-1h | 780°C-3h 920°C-1h | 780°C-3h 905°C-1h |
| Precipitated Crystals | - | $\beta$-quartz | $\beta$-quartz | $\beta$-quartz | $\beta$-quartz | $\beta$-quartz | $\beta$-quartz |
| Crystallinity | | unmeasured | unmeasured | unmeasured | unmeasured | unmeasured | unmeasured |
| Crystallite Size | nm | 58 | 39 | 40 | 40 | 67 | 33 |
| Density | g/cm$^3$ | 2.57 | 2.55 | 2.56 | 2.53 | 2.55 | 2.58 |
| CLTE at30-380°C | ×10$^{-7}$/°C | -1.5 | 3.6 | 2.9 | 4.4 | 1.5 | 0.5 |
| CLTE at30-750°C | | -0.5 | 5.7 | 4.9 | 6.9 | 3.5 | 1.9 |

(continued)

| After Crystallization | | | | | | | |
|---|---|---|---|---|---|---|---|
| Total Transmittance L* | - | 92.7 | 93.5 | 94.2 | 92.6 | unmeasured | 94.8 |
| Total Transmittance a* | | -0.5 | -0.2 | -0.3 | -0.2 | unmeasured | -0.3 |
| Total Transmittance b* | | 6.3 | 5.5 | 4.6 | 7.0 | unmeasured | 3.7 |
| Diffuse Transmittance L* | | unmeasured | 10.6 | 1.0 | 14.5 | unmeasured | 1.1 |
| Diffuse Transmittance a* | | unmeasured | 0.5 | 0.5 | 0.6 | unmeasured | 0.1 |
| Diffuse Transmittance b* | | unmeasured | -10.4 | -8.3 | -11.3 | unmeasured | -1.9 |
| Total Transmittance at 4 mm thickness and 1500 nm wave length | | 90.6 | 91.3 | 90.9 | 90.6 | 90.2 | unmeasured |

[Table 23]

| | Unit | No.67 | No.68 | No.69 | No.70 | No.71 | No.72 |
|---|---|---|---|---|---|---|---|
| $SiO_2$ | | 63.9 | 63.3 | 63.8 | 64.6 | 64.5 | 64.4 |
| $Al_2O_3$ | | 21.7 | 21.6 | 21.7 | 21.8 | 22.6 | 22.1 |
| $Li_2O$ | | 3.18 | 3.25 | 3.27 | 3.19 | 3.19 | 3.19 |
| $Na_2O$ | | 0.11 | 0.12 | 0.11 | 0.11 | 0.11 | 0.12 |
| $K_2O$ | | 0.01 | 0.01 | 0.01 | 0.01 | 0.01 | 0.01 |
| $MgO$ | | 0.24 | 0.01 | 0.24 | 0.01 | 0.01 | 0.01 |
| $CaO$ | | 0.02 | 0.02 | 0.02 | 0.01 | 0.01 | 0.02 |
| $BaO$ | % by mass | 5.21 | 6.08 | 5.20 | 3.86 | 3.86 | 3.85 |
| $ZrO_2$ | | 2.19 | 2.18 | 2.20 | 2.66 | 2.18 | 2.57 |
| $TiO_2$ | | 1.82 | 1.81 | 1.82 | 2.15 | 1.86 | 2.08 |
| $P_2O_5$ | | 1.36 | 1.36 | 1.36 | 1.37 | 1.37 | 1.37 |
| $ZnO$ | | 0 | 0 | 0 | 0 | 0 | 0 |
| $SnO_2$ | | 0.27 | 0.28 | 0.27 | 0.28 | 0.28 | 0.29 |
| $SrO$ | | 0.004 | 0.004 | 0.004 | 0.003 | 0.003 | 0.003 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

(continued)

| | Unit | No.67 | No.68 | No.69 | No.70 | No.71 | No.72 |
|---|---|---|---|---|---|---|---|
| $Fe_2O_3$ | | 70 | 60 | 70 | 80 | 80 | 80 |
| $MoO_3$ | | <0.3 | <0.3 | <0.3 | 10.00 | <0.3 | <0.3 |
| $Pt$ | ppm | unmeasured | unmeasured | unmeasured | unmeasured | unmeasured | unmeasured |
| $Rh$ | | unmeasured | unmeasured | unmeasured | unmeasured | unmeasured | unmeasured |
| $V_2O_5$ | | 2.00 | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.61 | 0.53 | 0.63 | 0.83 | 0.83 | 0.83 |
| $Na_2O+K_2O$ | % by mass | 0.12 | 0.13 | 0.12 | 0.12 | 0.12 | 0.13 |
| $MgO+CaO$ | % by mass | 0.26 | 0.03 | 0.26 | 0.02 | 0.02 | 0.03 |
| $(Na_2O+K_2O+MgO)/BaO$ | - | 0.07 | 0.02 | 0.07 | 0.03 | 0.03 | 0.04 |
| $8Li_2O-4(Na_2O+K_2O+MgO)-(BaO+ZnO)$ | % by mass | 18.79 | 19.36 | 19.52 | 21.14 | 21.14 | 21.11 |
| $(Li_2O+Na_2O+K_2O)/ZrO_2$ | - | 1.51 | 1.55 | 1.54 | 1.24 | 1.52 | 1.29 |

[Table 24]

| | Unit | No.67 | No.68 | No.69 | No.70 | No.71 | No.72 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.49 | 2.51 | 2.49 | 2.48 | 2.47 | 2.48 |
| CLTE at30-380°C | ×10$^{-7}$/°C | unmeasured | unmeasured | unmeasured | unmeasured | unmeasured | unmeasured |
| Glass Transition Point Tg | | unmeasured | unmeasured | unmeasured | unmeasured | unmeasured | unmeasured |
| Deformation Point Tf | | unmeasured | unmeasured | unmeasured | unmeasured | unmeasured | unmeasured |
| 10$^4$ | | 1360 | 1362 | 1356 | 1362 | 1365 | 1362 |
| 10$^{3.5}$ | °C | 1443 | 1445 | 1438 | 1445 | 1448 | 1445 |
| 10$^3$ | | 1539 | 1540 | 1533 | 1541 | 1543 | 1540 |
| 10$^{2.5}$ | | 1651 | 1653 | 1645 | 1653 | 1655 | 1653 |
| Liquidus Temperature TL | | 1366 | unmeasured | 1371 | unmeasured | unmeasured | unmeasured |
| Liquidus Viscosity bg $\eta$ | - | 3.96 | unmeasured | 3.90 | unmeasured | unmeasured | unmeasured |
| Primary Phase | - | ZrO$_2$ | unmeasured | ZrO$_2$ | unmeasured | unmeasured | unmeasured |
| After Crystallization | | | | | | | |
| Crystallization Conditions | - | 780°C-3h 905°C-1h | 780°C-3h 905°C-1h | 780°C-3h 905°C-1h | 780°C-3h 905°C-0.5h | 780°C-3h 905°C-1h | 780°C-3h 905°C-1h |
| Precipitated Crystals | - | $\beta$-quartz | $\beta$-quartz | $\beta$-quartz | unmeasured | $\beta$-quartz | unmeasured |
| Crystallinity | | unmeasured | unmeasured | unmeasured | unmeasured | unmeasured | unmeasured |
| Crystallite Size | nm | unmeasured | 34 | 36 | unmeasured | 41 | unmeasured |
| Density | g/cm$^3$ | 2.58 | 2.58 | 2.58 | unmeasured | 2.57 | unmeasured |
| CLTE at30-380°C | ×10$^{-7}$/°C | unmeasured | 0.1 | unmeasured | unmeasured | unmeasured | unmeasured |
| CLTE at30-750°C | | unmeasured | 1.8 | unmeasured | unmeasured | unmeasured | unmeasured |

(continued)

| | | 30 | 25 | 20 | 15 | 10 | 5 |
|---|---|---|---|---|---|---|---|
| After Crystallization | | | | | | | |
| Total Transmittance L* | | 94.7 | 94.8 | 94.8 | unmeasured | 94.1 | unmeasured |
| Total Transmittance a* | | -0.3 | -0.4 | -0.3 | unmeasured | -0.2 | unmeasured |
| Total Transmittance b* | - | 3.8 | 3.6 | 3.8 | unmeasured | 4.2 | unmeasured |
| Diffuse Transmittance L* | | 0.9 | 1.8 | 0.9 | unmeasured | 2.8 | unmeasured |
| Diffuse Transmittance a* | | 0.2 | 0.1 | 0.2 | unmeasured | 0.3 | unmeasured |
| Diffuse Transmittance b* | | -1.6 | -1.4 | -1.4 | unmeasured | -4.5 | unmeasured |
| Total Transmittance at 4 mm thickness and 1500 nm wave length | | unmeasured | unmeasured | unmeasured | unmeasured | unmeasured | unmeasured |

[Table 25]

| | Unit | No.73 | No.74 | No.75 | No.76 | No.77 | No.78 |
|---|---|---|---|---|---|---|---|
| $SiO_2$ | % by mass | 65.2 | 63.9 | 64.2 | 67.2 | 67.0 | 65.0 |
| $Al_2O_3$ | | 21.8 | 21.8 | 21.8 | 22.2 | 22.3 | 22.0 |
| $Li_2O$ | | 3.29 | 3.32 | 3.42 | 3.29 | 3.38 | 3.58 |
| $Na_2O$ | | 0.30 | 0.10 | 0.10 | 0.08 | 0.08 | 0.46 |
| $K_2O$ | | 0.08 | 0.01 | 0.01 | 0.01 | 0.01 | 0.19 |
| $MgO$ | | 0.01 | 0.12 | 0.12 | 0.86 | 0.86 | 0.34 |
| $CaO$ | | 0.01 | 0.02 | 0.02 | 0.04 | 0.03 | 0.02 |
| $BaO$ | | 3.72 | 4.99 | 4.56 | 0.49 | 0.48 | 2.58 |
| $ZrO_2$ | | 2.14 | 2.18 | 2.19 | 1.90 | 2.21 | 2.19 |
| $TiO_2$ | | 1.81 | 1.91 | 1.92 | 2.21 | 1.91 | 1.95 |
| $P_2O_5$ | | 1.40 | 1.35 | 1.37 | 1.43 | 1.43 | 1.35 |
| $ZnO$ | | 0 | 0 | 0 | 0 | 0 | 0 |
| $SnO_2$ | | 0.29 | 0.26 | 0.27 | 0.29 | 0.29 | 0.30 |
| $SrO$ | | 0.003 | 0.004 | 0.004 | 0.001 | 0.001 | 0.002 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

EP 4 656 605 A1

58

(continued)

| | Unit | No.73 | No.74 | No.75 | No.76 | No.77 | No.78 |
|---|---|---|---|---|---|---|---|
| $Fe_2O_3$ | | 80 | 80 | 80 | 90 | 90 | 80 |
| $MoO_3$ | | <0.3 | < 0.3 | <0.3 | < 0.3 | <0.3 | <0.3 |
| Pt | | unmeasured | 1.00 | unmeasured | unmeasured | unmeasured | unmeasured |
| Rh | | unmeasured | 0.02 | unmeasured | unmeasured | unmeasured | unmeasured |
| $V_2O_5$ | ppm | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.88 | 0.6 7 | 0.75 | 6.71 | 7.04 | 1.39 |
| $Na_2O+K_2O$ | % by mass | 0.38 | 0.11 | 0.11 | 0.09 | 0.09 | 0.65 |
| $MgO+CaO$ | % by mass | 0.02 | 0.14 | 0.14 | 0.90 | 0.89 | 0.36 |
| $(Na_2O+K_2O+MgO)/BaO$ | - | 0.10 | 0.05 | 0.05 | 1.94 | 1.98 | 0.38 |
| $8Li_2O-4(Na_2O+K_2O+MgO)-(BaO+ZnO)$ | % by mass | 2104 | 20.65 | 21.88 | 22.03 | 22.76 | 22.10 |
| $Li_2O+Na_2O+K_2O)/ZrO_2$ | - | 1.71 | 1.57 | 1.61 | 1.78 | 1.57 | 1.93 |

EP 4 656 605 A1

[Table 26]

| | Unit | No.73 | No.74 | No.75 | No.76 | No.77 | No.78 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.46 | 2.49 | 2.48 | 2.42 | 2.42 | 2.45 |
| CLTE at 30-380°C | ×10$^{-7}$/°C | unmeasured | 39.3 | 39.2 | 34.8 | 35.2 | 40.8 |
| Glass Transition Point Tg | | unmeasured | 737 | 735 | 734 | 732 | 725 |
| Deformation Point Tf | | unmeasured | 795 | 791 | 788 | 785 | 784 |
| 10$^4$ | | 1372 | 1358 | 1356 | 1360 | 1358 | 1352 |
| 10$^{3.5}$ | °C | 1455 | 1441 | 1440 | 1444 | 1441 | 1435 |
| 10$^3$ | | 1552 | 1539 | 1535 | 1540 | 1538 | 1532 |
| 10$^{2.5}$ | | 1667 | 1652 | 1647 | 1653 | 1651 | 1646 |
| Liquidus Temperature TL | | unmeasured | 1370 | 1364 | 1396 | 1391 | unmeasured |
| Liquidus Viscosity bg $\eta$ | - | unmeasured | 3.92 | 3.95 | 3.78 | 3.79 | unmeasured |
| Primary Phase | - | unmeasured | ZrO$_2$ | ZrO$_2$ | mullite | mullite | unmeasured |
| After Crystalliztion | | | | | | | |
| Crystallization Conditons | - | 780°C-3h 905°C-1h | 780°C-3h 920°C-1h | 780°C-3h 920°C-1h | 780°C-3h 920°C-1h | 780°C-3h 920°C-1h | 780°C-3h 920°C-1h |
| Precipitated Crystals | - | $\beta$-quartz | $\beta$-quartz | $\beta$-quartz | unmeasured | unmeasured | unmeasured |
| Crystallnity | | unmeasured | unmeasured | unmeasured | unmeasured | unmeasured | unmeasured |
| Crystallite Size | nm | 37 | 38 | 38 | unmeasured | unmeasured | unmeasured |
| Density | g/cm$^3$ | 2.55 | 2.58 | 2.57 | 2.56 | 2.55 | 2.54 |
| CLTE at30-380°C | ×10$^{-7}$/°C | unmeasured | -1.5 | -2.8 | -0.7 | -1.5 | -1.1 |
| CLTE at30-750°C | | unmeasured | 0.2 | -1.0 | -0.6 | -1.4 | 0.7 |

(continued)

| | | | | | | |
|---|---|---|---|---|---|---|
| After Crystalliztion | | | | | | |
| Total Transmittance L* | - | 94.2 | 94.5 | 94.5 | unmeasured | unmeasured | unmeasured |
| Total Transmittance a* | | -0.3 | -0.4 | -0.4 | unmeasured | unmeasured | unmeasured |
| Total Transmittance b* | | 4.0 | 4.4 | 4.4 | unmeasured | unmeasured | unmeasured |
| Diffuse Transmittance L* | | 3.0 | 1.3 | 1.2 | unmeasured | unmeasured | unmeasured |
| Diffuse Transmittance a* | | 0.3 | 0.0 | 0.0 | unmeasured | unmeasured | unmeasured |
| Diffuse Transmittance b* | | -4.9 | -1.2 | -1.2 | unmeasured | unmeasured | unmeasured |
| Total Transmittance at 4 mm thickness and 1500 nm wavelength | | unmeasured | unmeasured | unmeasured | unmeasured | unmeasured | unmeasured |

[Table 27]

| | Unit | No.79 | No.80 | No.81 | No.82 | No.83 | No.84 |
|---|---|---|---|---|---|---|---|
| $SiO_2$ | % by mass | 64.6 | 64.8 | 63.4 | 64.0 | 64.3 | 64.3 |
| $Al_2O_3$ | | 21.8 | 22.7 | 22.4 | 21.7 | 21.4 | 21.5 |
| $Li_2O$ | | 3.55 | 3.30 | 3.16 | 3.32 | 3.32 | 3.32 |
| $Na_2O$ | | 0.45 | 0.29 | 0.11 | 0.09 | 0.09 | 0.08 |
| $K_2O$ | | 0.18 | 0.08 | 0.01 | 0.01 | 0.01 | 0.01 |
| MgO | | 0.06 | 0.19 | 0.01 | 0.12 | 0.12 | 0.12 |
| CaO | | 0.01 | 0.02 | 0.01 | 0.02 | 0.01 | 0.01 |
| BaO | | 3.63 | 3.00 | 6.08 | 4.99 | 5.11 | 5.13 |
| $ZrO_2$ | | 2.18 | 2.12 | 1.78 | 2.18 | 2.13 | 2.07 |
| $TiO_2$ | | 1 .93 | 1.85 | 1.43 | 1.93 | 1.91 | 1.89 |
| $P_2O_5$ | | 1.34 | 1.42 | 1.38 | 1.36 | 1.33 | 1.30 |
| ZnO | | 0 | 0 | 0 | 0 | 0 | 0 |
| $SnO_2$ | | 030 | 0.27 | 0.28 | 0.26 | 0.25 | 0.25 |
| SrO | | 0.002 | 0.003 | 0.005 | unmeasured | 0.004 | 0.005 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.03 | unmeasured | 0.04 | 0.04 |

(continued)

| | Unit | No.79 | No.80 | No.81 | No.82 | No.83 | No.84 |
|---|---|---|---|---|---|---|---|
| $Fe_2O_3$ | | 80 | 80 | 70 | unmeasured | 90 | 70 |
| $MoO_3$ | | <0.3 | < 0.3 | <0.3 | < 0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.98 | 1.10 | 0.52 | 0.67 | 0.65 | 0.65 |
| $Na_2O+K_2O$ | % by mass | 063 | 0.37 | 0.12 | 0.10 | 0.10 | 0.09 |
| $MgO+CaO$ | % by mass | 0.07 | 0.21 | 0.02 | 0.14 | 0.13 | 0.13 |
| $(Na_2O+K_2O+MgO)/BaO$ | - | 0.19 | 0.19 | 0.02 | 0.04 | 0.04 | 0.04 |
| $8Li_2O-4(Na_2O+K_2O+M_gO)-(BaO+ZnO)$ | % by mass | 22.01 | 21.16 | 18.68 | 20.69 | 20.57 | 20.59 |
| $Li_2O+Na_2O+K_2O)/ZrO_2$ | - | 1.92 | 1.73 | 1.84 | 1.57 | 1.61 | 1.65 |

[Table 28]

| | Unit | No.79 | No.80 | No.81 | No.82 | No.83 | No.84 |
|---|---|---|---|---|---|---|---|
| Before Crystallization | | | | | | | |
| $\beta$-OH | /mm | 0.10 | 0.10 | 0.10 | 0.10 | 0.40 | 0.40 |
| Density | g/cm$^3$ | 2.47 | 2.46 | 2.50 | 2.49 | 2.49 | 2.49 |
| CLTE at 30-380°C | $\times 10^{-7}$ /°C | 41.6 | unmeasured | unmeasured | unmeasured | unmeasured | unmeasured |
| Glass Transiton Pont Tg | | 729 | unmeasured | unmeasured | unmeasured | unmeasured | unmeasured |
| Deformation Point Tf | | 789 | unmeasured | unmeasured | unmeasured | unmeasured | unmeasured |
| $10^4$ | °C | 1357 | 1359 | 1370 | 1359.6488 | 1363.1831 | 1359.4664 |
| $10^{3.5}$ | | 1440 | 1441 | 1453 | 1442.5593 | 1446.6926 | 1442.2471 |
| $10^3$ | | 1536 | 1537 | 1548 | 1538.4018 | 1543.1955 | 1537.9877 |
| $10^{2.5}$ | | 1650 | 1649 | 1658 | 1651.4759 | 1657.0032 | 1650.9562 |
| Liquilus Temperature TL | | unmeasured | unmeasured | unmeasured | unmeasured | unmeasured | unmeasured |
| Liguidus Viscosity log $\eta$ | - | unmeasured | unmeasured | unmeasured | unmeasured | unmeasured | unmeasured |
| Primary Phase | - | unmeasured | unmeasured | unmeasured | unmeasured | unmeasured | unmeasured |
| After Crystallization | | | | | | | |
| Crystallization Conditions | - | 780°C-3h 920°C-1h | 780°C-3h 920°C-1h | 780°C-3h 920°C-1h | 780°C-3h 920°C-1h | 780°C-3h 920°C-1h | 780°C-3h 920°C-1h |
| Precpitated Crystals | - | $\beta$-quartz | $\beta$-quartz | unm easured | unmeasured | unmeasured | $\beta$-quartz |
| Crystallinity | | unmeasured | unmeasured | unmeasured | unmeasured | unmeasured | unmeasured |
| Crystallite Size | nm | 40 | 37 | unmeasured | unmeasured | unmeasured | 37 |
| Density | g/cm$^3$ | 2.56 | 2.57 | unmeasured | unmeasured | unmeasured | unmeasured |
| CLTE at 30-380°C | $\times 10^{-7}$/°C | -2.2 | unmeasured | unmeasured | unmeasured | unmeasured | unmeasured |
| CLTE at 30-750°C | | 0.1 | unmeasured | unmeasured | unmeasured | unmeasured | unmeasured |

(continued)

| After Crystallization | | | | | | | |
|---|---|---|---|---|---|---|---|
| Total Transmittance L* | | 94.1 | 94.6 | unmeasured | unmeasured | unmeasured | 94.4 |
| Total Transmittance a* | | -0.4 | -0.3 | unmeasured | unmeasured | unmeasured | -0.4 |
| Total Transmittance b* | | 4.7 | 5.1 | unmeasured | unmeasured | unmeasured | 3.8 |
| D ffuse Transmittance L* | | 2.6 | 2.0 | unmeasured | unmeasured | unmeasured | 0.8 |
| Diffuse Transmittance a* | - | 0.1 | 0.3 | unmeasured | unmeasured | unmasured | 0.1 |
| D ffuse Transmittance b* | | -4.0 | -3.8 | unmeasured | unmeasured | unmeasured | -1.3 |
| Total Transmittance at 4 mm thickness and 1500 nm wave length | | unmeasured | unmeasured | unmeasured | unmeasured | unmeasured | unmeasured |

[Table 29]

| | Unit | No.85 | No.86 | No.87 | No.88 | No.89 | No.90 |
|---|---|---|---|---|---|---|---|
| $SiO_2$ | | 64.1 | 64.3 | 63.5 | 63.5 | 64.0 | 63.7 |
| $Al_2O_3$ | | 21.8 | 21.7 | 21.7 | 21.7 | 21.8 | 22.0 |
| $Li_2O$ | | 3.32 | 3.32 | 3.30 | 3.30 | 3.32 | 3.31 |
| $Na_2O$ | | 0.09 | 0.09 | 0.10 | 0.10 | 0.10 | 0.09 |
| $K_2O$ | | 0.01 | 0.01 | 0.01 | 0.01 | 0.01 | 0.01 |
| $MgO$ | | 0.12 | 0.12 | 0.00 | 0.00 | 0.00 | 0.00 |
| $CaO$ | | 0.01 | 0.01 | 0.02 | 0.01 | 0.01 | 0.01 |
| $BaO$ | | 5.00 | 4.94 | 5.68 | 6.41 | 5.71 | 5.24 |
| $ZrO_2$ | | 2.11 | 2.05 | 2.17 | 2.17 | 2.18 | 2.18 |
| $TiO_2$ | % by mass | 1.89 | 1.89 | 1.88 | 1.89 | 1.90 | 1.89 |
| $P_2O_5$ | | 1.33 | 1.28 | 1.35 | 0.68 | 0.68 | 1.35 |
| $ZnO$ | | 0 | 0 | 0 | 0 | 0 | 0 |
| $SnO_2$ | | 0.26 | 0.24 | 0.27 | 0.26 | 0.26 | 0.27 |
| $SrO$ | | 0.005 | 0.006 | 0.008 | 0.005 | 0.006 | 0.005 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

| | Unit | No.85 | No.86 | No.87 | No.88 | No.89 | No.90 |
|---|---|---|---|---|---|---|---|
| $Fe_2O_3$ | | 70 | 70 | 80 | 60 | 60 | 70 |
| $MoO_3$ | | <0.3 | < 0.3 | <0.3 | < 0.3 | <0.3 | <0.3 |
| Pt | | unmeasured | unmeasured | unmeasured | unmeasured | unmeasured | unmeasured |
| Rh | ppm | unmeasured | unmeasured | unmeasured | unmeasured | unmeasured | unmeasured |
| $V_2O_5$ | | unmeasured | unmeasured | unmeasured | unmeasured | unmeasured | 2.00 |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.66 | 0.6 7 | 0.58 | 0.51 | 0.58 | 0.63 |
| $Na_2O+K_2O$ | % by mass | 0.10 | 0.10 | 0.11 | 0.11 | 0.11 | 0.10 |
| $MgO+CaO$ | % by mass | 0.13 | 0.13 | 0.02 | 0.01 | 0.01 | 0.01 |
| $(Na_2O+K_2O+MgO)/BaO$ | - | 0.04 | 0.04 | 0.02 | 0.02 | 0.02 | 0.02 |
| $8Li_2O-4(Na_2O+K_2O+MgO)-(BaO+ZnO)$ | % by mass | 20.68 | 20.74 | 20.28 | 19.55 | 20.41 | 20.84 |
| $Li_2O+Na_2O+K_2O)/ZrO_2$ | - | 1.62 | 1.67 | 1.57 | 1.57 | 1.57 | 1.56 |

EP 4 656 605 A1

[Table 30]

| | Unit | No.85 | No.86 | No.87 | No.88 | No.89 | No.90 |
|---|---|---|---|---|---|---|---|
| Before Crystallization | | | | | | | |
| $\beta$-OH | /mm | 0.40 | 0.40 | 0.10 | 0.10 | 0.10 | 0.10 |
| Density | g/cm$^3$ | 2.49 | 2.49 | 2.50 | 2.52 | 2.50 | 2.49 |
| CLTE at 30-380°C | ×10$^{-7}$/°C | unmeasured | unmeasured | unmeasured | unmeasured | unmeasured | unm easured |
| Glass Transi- ton Pont Tg | | unmeasured | unmeasured | unmeasured | unmeasured | unmeasured | unm easured |
| Deformation Point Tf | | unmeasured | unmeasured | unmeasured | unmeasured | unmeasured | unm easured |
| 10$^4$ | °C | 1359.4664 | 1359 | 1360.8472 | 1355.8997 | 1358.7937 | 1361.1289 |
| 10$^{3.5}$ | | 1442.2471 | 1442 | 1443.6015 | 1438.2614 | 1441.4296 | 1443.6899 |
| 10$^3$ | | 1537.9877 | 1538 | 1539.3143 | 1533.9098 | 1537.2939 | 1539.18 |
| 10$^{2.5}$ | | 1650.9562 | 1651 | 1652.521 | 1647.1984 | 1650.6936 | 1652.0475 |
| Liquidus Temperature TL | | unmeasured | 1373 | unmeasured | unmeasured | unmeasured | unmeasured |
| Liguidus V scosity bg $\eta$ | - | unmeasured | unmeasured | unmeasured | unmeasured | unmeasured | unmeasured |
| Primary Phase | - | unmeasured | ZrO$_2$ | unmeasured | unmeasured | unmeasured | unmeasured |
| After Crystallization | | | | | | | |
| C rysta llization Conditions | - | 780°C-3h 920°C-1h | 780°C-3h 920°C-1h | 780°C-3h 920°C-1h | 780°C-3h 920°C-1h | 780°C-3h 920°C-1h | 780°C-3h 920°C-1h |
| Precpitated Crystals | - | $\beta$-quartz | $\beta$-quartz | $\beta$-quartz | $\beta$-quartz | $\beta$ -quartz | $\beta$-quartz |
| Crystallinity | | unmeasured | unmeasured | unmeasured | unmeasured | unmeasured | unmeasured |
| Crystallite Size | nm | 40 | 37 | 36 | 38 | 42 | 37 |
| Density | g/cm$^3$ | unmeasured | unmeasured | unmeasured | unmeasured | unmeasured | unmeasured |
| CLTE at 30-380°C | ×10$^{-7}$/°C | unmeasured | unmeasured | unmeasured | unmeasured | unmeasured | unmeasured |
| CLTE at 30-750°C | | unmeasured | unmeasured | unmeasured | unmeasured | unmeasured | unmeasured |

(continued)

| After Crystallization | | | | | | | |
|---|---|---|---|---|---|---|---|
| Total Transmittance L* | | 94.5 | 94.6 | 94.6 | 94.5 | 94.7 | 94.2 |
| Total Transmittance a* | | -0.4 | -0.3 | -0.4 | -0.4 | -0.4 | -0.3 |
| Total Transmittance b* | | 4.2 | 3.9 | 4.1 | 4.1 | 4.2 | 3.8 |
| Diffuse Transmittance L* | - | 0.9 | 1 .2 | 1.0 | 1.3 | 1.3 | 1.1 |
| Diffuse Transmittance a* | | 0.1 | 0.1 | 0.1 | 0.1 | 0.1 | 0.1 |
| Diffuse Transmittance b* | | -1.4 | -1.5 | -1.3 | -2.0 | -2.1 | -1.5 |
| Total Transmittance at 4 mm thickness and 1500 nm wave length | | unmeasured | unmeasured | unmeasured | unmeasured | unmeasured | unmeasured |

[Table 31]

| | Unit | No.91 | No.92 | No.93 | No.94 | No.95 | No.96 |
|---|---|---|---|---|---|---|---|
| $SiO_2$ | % by mass | 63.9 | 64.1 | 63.9 | 63.8 | 63.9 | 64.1 |
| $Al_2O_3$ | | 22.3 | 21.8 | 22.0 | 21.7 | 21.9 | 21.8 |
| $Li_2O$ | | 3.31 | 3.32 | 3.32 | 3.31 | 3.32 | 3.40 |
| $Na_2O$ | | 0.10 | 0.09 | 0.10 | 0.10 | 0.09 | 0.08 |
| $K_2O$ | | 0.01 | 0.01 | 0.01 | 0.01 | 0.01 | 0.01 |
| $MgO$ | | 0.00 | 0.12 | 0.12 | 0.12 | 0.12 | 0.12 |
| $CaO$ | | 0.01 | 0.02 | 0.02 | 0.02 | 0.02 | 0.02 |
| $BaO$ | | 4.80 | 4.99 | 4.99 | 5.38 | 4.98 | 4.96 |
| $ZrO_2$ | | 2.19 | 2.19 | 2.18 | 2.19 | 2.34 | 2.19 |
| $TiO_2$ | | 1.89 | 1.73 | 1.73 | 1.73 | 1.73 | 1.73 |
| $P_2O_5$ | | 1.35 | 1.36 | 1.35 | 1.36 | 1.36 | 1.37 |
| $ZnO$ | | 0 | 0 | 0 | 0 | 0 | 0 |
| $SnO_2$ | | 0.25 | 0.28 | 0.28 | 0.28 | 0.28 | 0.27 |
| $SrO$ | | 0.005 | 0.004 | 0.004 | 0.005 | 0.005 | 0.004 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

(continued)

| | Unit | No.91 | No.92 | No.93 | No.94 | No.95 | No.96 |
|---|---|---|---|---|---|---|---|
| $Fe_2O_3$ | | 70 | 80 | 70 | 80 | 80 | 80 |
| $MoO_3$ | | <0.3 | < 0.3 | <0.3 | < 0.3 | <0.3 | <0.3 |
| Pt | | unmeasured | 0.50 | unmeasured | unmeasured | unmeasured | unmeasured |
| Rh | | unmeasured | 0.10 | unmeasured | unmeasured | unmeasured | unmeasured |
| $V_2O_5$ | ppm | 2.00 | 2.00 | 2.00 | 1.00 | 2.00 | 2.00 |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.69 | 0.6 7 | 0.67 | 0.62 | 0.6 7 | 0.69 |
| $Na_2O+K_2O$ | % by mass | 0.11 | 0.10 | 0.11 | 0.11 | 0.10 | 0.09 |
| $MgO+CaO$ | % by mass | 0.01 | 0.14 | 0.14 | 0.14 | 0.14 | 0.14 |
| $(Na_2O+K_2O+MgO)/BaO$ | - | 0.02 | 0.04 | 0.05 | 0.04 | 0.04 | 0.04 |
| $8Li_2O-4(Na_2O+K_2O+Mg)-(BaO+ZnO)$ | % by mass | 21.24 | 20.69 | 20.65 | 20.18 | 20.70 | 21.40 |
| $Li_2O+Na_2O+K_2O)/ZrO_2$ | - | 1 .56 | 1.56 | 1.57 | 1.56 | 1.46 | 1.59 |

[Table 32]

| | Unit | No.91 | No.9.2 | No.93 | No.94 | No.95 | No.96 |
|---|---|---|---|---|---|---|---|
| Before Crystallization | | | | | | | |
| $\beta$-0H | /mm | 0.20 | 0.20 | 0.20 | 0.20 | 0.10 | 0.10 |
| Density | g/cm$^3$ | 2.49 | 2.49 | 2.49 | 2.50 | 2.49 | 2.49 |
| CLTE at 30-380°C | $\times$10$^{-7}$/°C | unmeasured | unmeasured | unmeasured | unmeasured | unmeasured | unmeasured |
| Glass Transiton Pont Tg | | unmeasured | unmeasured | unmeasured | unmeasured | unmeasured | unmeasured |
| Deformation Point Tf | | unmeasured | unmeasured | unmeasured | unmeasured | unmeasured | unmeasured |
| 10$^4$ | °C | 1361.3983 | 1363 | 1361.2573 | 1360.9114 | 1359.7675 | 1359.9535 |
| 10$^{3.5}$ | | 1443.763 | 1446 | 1443.7222 | 1443.6758 | 1442.3211 | 1442.8542 |
| 10$^3$ | | 1539.0277 | 1541 | 1539.2259 | 1539.4956 | 1537.7194 | 1538.7212 |
| 10$^{2.5}$ | | 1651.5527 | 1654 | 1651.9011 | 1652.6059 | 1650.3404 | 1651.785 |
| Liquidus Temperature TL | | unmeasured | 1378 | 1377 | 1377 | unmeasured | 1392 |
| Liquidus Vscosity bg $\eta$ | - | unmeasured | 3.90 | 3.90 | 3.90 | unmeasured | 3.80 |
| Primary Phase | - | unmeasured | zrO$_2$ | ZrO$_2$ | ZrO$_2$ | unmeasured | zr0$_2$ |
| After Crystallization | | | | | | | |
| Crystallization Conditions | - | 780°C-3h 920°C-1h | 780°C-3h 920°C-1h | 780°C-3h 920°C-1h | 780°C-3h 920°C-1h | 780°C-3h 920°C-1h | 780°C-3h 920°C-1h |
| Precpitated Crystals | - | $\beta$-quartz | $\beta$-quartz | $\beta$-quartz | $\beta$-quartz | unmeasured | $\beta$-quartz |
| Crystallinity | | unmeasured | 78 | unmeasured | unmeasured | unmeasured | unmeasured |
| Crystallite Size | nm | 39 | 25 | unmeasured | unmeasured | unmeasured | unmeasured |
| Density | g/cm$^3$ | unmeasured | 2.58 | 2.58 | 2.58 | 2.58 | unmeasured |
| CLTE at 30-380°C | $\times$10$^{-7}$/°C | unmeasured | -1.1 | -1.2 | -0.8 | unmeasured | unmeasured |
| CLTE at 30-750°C | | unmeasured | 0.2 | 0.4 | 0.8 | unmeasured | unmeasured |

(continued)

| After Crystallization | | | | | | | |
|---|---|---|---|---|---|---|---|
| Total Transmittance L* | - | 94.5 | 94.4 | 94.2 | 94.4 | 94.4 | 94.7 |
| Total Transmittance a* | | -0.3 | -0.3 | -0.3 | -0.3 | -0.4 | -0.3 |
| Total Transmittance b* | | 4.4 | 4.1 | 4.2 | 4.5 | 4.5 | 4.0 |
| D ffuse Transmittance L* | | 1.1 | 0.8 | 0.8 | 0.9 | 1.8 | 0.7 |
| Diffuse Transmittance a* | | 0.1 | 0.1 | 0.1 | 0.1 | 0.1 | 0.1 |
| D ffuse Transmittance b* | | -1.7 | -1.4 | -1.4 | -1.5 | -2.4 | -1.1 |
| Total Transmittance at 4 mm thickness and 1500 nm wave length | | unm ea-sured | unm ea-sured | unm ea-sured | unmeasured | unmeasured | unmeasured |

[Table 33]

| | Unit | No.97 | No.98 | No.99 | No.100 | No.101 | No.102 |
|---|---|---|---|---|---|---|---|
| $SiO_2$ | % by mass | 63.9 | 63.9 | 64.2 | 65.6 | 66.2 | 66.8 |
| $Al_2O_3$ | | 21.8 | 21.8 | 21.8 | 22.3 | 22.3 | 22.4 |
| $Li_2O$ | | 3.31 | 3.32 | 3.32 | 3.60 | 3.61 | 3.63 |
| $Na_2O$ | | 0.08 | 0.08 | 0.10 | 0.45 | 0.47 | 0.46 |
| $K_2O$ | | 0.01 | 0.01 | 0.01 | 0.18 | 0.18 | 0.19 |
| $MgO$ | | 0.12 | 0.12 | 0.12 | 0.67 | 0.68 | 0.67 |
| $CaO$ | | 0.02 | 002 | 0.02 | 0.03 | 0.03 | 0.04 |
| $BaO$ | | 4.94 | 4.96 | 4.99 | 1.30 | 1.31 | 1.32 |
| $ZrO_2$ | | 2.18 | 2.19 | 2.18 | 2.22 | 2.23 | 2.23 |
| $TiO_2$ | | 1.73 | 1.73 | 1.70 | 1.95 | 1.97 | 1.98 |
| $P_2O_5$ | | 1.34 | 1.36 | 1.35 | 1.39 | 0.70 | 0.02 |
| $ZnO$ | | 0 | 0.22 | 0 | 0 | 0 | 0 |
| $SnO_2$ | | 0.59 | 0.26 | 0.26 | 0.27 | 0.28 | 0.28 |
| $SrO$ | | 0.003 | 0.004 | unmeasured | 0.00 | 0.00 | 0.01 |
| $PbO$ | | <0.001 | <0.001 | <0.001 | <0.001 | <0.001 | <0.001 |
| $Cl$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | unmeasured | unmeasured | unmeasured | unmeasured |

| | Unit | No.97 | No.98 | No.99 | No.100 | No.101 | No.102 |
|---|---|---|---|---|---|---|---|
| $Fe_2O_3$ | ppm | 80 | 80 | unmeasured | 100.00 | 90.00 | 100.00 |
| $MoO_3$ | | <0.3 | < 0.3 | <0.3 | < 0.3 | <0.3 | <0.3 |
| Pt | | unmeasured | unmeasured | unmeasured | unmeasured | unmeasured | unmeasured |
| Rh | | unmeasured | unmeasured | unmeasured | unmeasured | unmeasured | unmeasured |
| $V_2O_5$ | | 3.00 | 2.00 | 2.00 | unmeasured | unmeasured | unmeasured |
| $Nd_2O_3$ | | <5 | <5 | <5 | <5 | <5 | <5 |
| $Pr_6O_{11}$ | | unmeasured | unmeasured | unmeasured | unmeasured | unmeasured | unmeasured |
| $Sm_2O_3$ | | unmeasured | unmeasured | unmeasured | unmeasured | unmeasured | unmeasured |
| $Li_2O/BaO$ | - | 0.67 | 0.6 7 | 0.67 | 2.77 | 2.76 | 2.75 |
| $Na_2O+K_2O$ | % by mass | 0.09 | 0.09 | 0.11 | 0.63 | 0.65 | 0.65 |
| $MgO+CaO$ | % by mass | 0.14 | 0.14 | 0.14 | 0.70 | 0.71 | 0.71 |
| $(Na_2O+K_2O+MgO)/BaO$ | - | 0.04 | 0.04 | 0.05 | 1.00 | 1.02 | 1.00 |
| $8Li_2O-4(Na_2O+K_2O+M_9O)-(BaO+ZnO)$ | % by mass | 20.70 | 20.54 | 20.65 | 22.30 | 22.25 | 22.44 |
| $Li_2O+Na_2O+K_2O)/ZrO_2$ | - | 1 .56 | 1.56 | 1.57 | 1.91 | 1.91 | 1.92 |

EP 4 656 605 A1

[Table 34]

| | Unit | No.97 | No.98 | No.99 | No.100 | No.101 | No.102 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.49 | 2.49 | 2.49 | 2.43 | 2.44 | 2.44 |
| CLTE at30-380°C | $\times10^{-7}$/°C | unmeasured | unmeasured | unmeasured | 39.8 | 39.3 | 39.6 |
| Glass Transition Point Tg | | unmeasured | unmeasured | unmeasured | 726 | 728 | 727 |
| Deform atbn Point Tf | | unmeasured | unmeasured | unmeasured | 780 | 779 | 782 |
| $10^4$ | | 1359.8713 | 1360 | 1362.2868 | 1344 | 1346 | 1345 |
| $10^{3.5}$ | °C | 1442.3974 | 1443 | 1445.1116 | 1427 | 1429 | 1429 |
| $10^3$ | | 1538.4402 | 1539 | 1540.95 | 1523 | 1526 | 1525 |
| $10^{2.5}$ | | 1651.5743 | 1651 | 1653.9877 | 1635 | 1639 | 1638 |
| Liquidus Tem perature TL | | 1380 | 1377 | unmeasured | 1368 | 1366 | 1367 |
| Liqudus Viscosity bg$\eta$ | - | unmeasured | unmeasured | unmeasured | 3.85 | 3.87 | 3.86 |
| Prin ary Phase | - | ZrO$_2$ | ZrO$_2$ | unmeasured | ZrO$_2$ | ZrO$_2$, mullite | ZrO$_2$, mullite |
| After Crystallization | | | | | | | |
| Crystallization Conditons | - | 780°C-3h 920°C-1h | 780°C-3h 920°C-1h | 780°C-3h 920°C-1h | 780°C-3h 905°C-1h | 780°C-3h 905°C-1h | 780°C-3h 905°C-1h |
| Precipitated Crystals | - | $\beta$-quartz | $\beta$-quartz | unmeasured | $\beta$-quartz | $\beta$-quartz | $\beta$-quartz |
| C rystallinity | | unmeasured | unmeasured | unmeasured | 86 | 87 | 86 |
| Crystallite Size | nm | unmeasured | 35 | unmeasured | 28 | 29 | 31 |
| Density | g/cm$^3$ | 2.58 | unmeasured | unmeasured | 2.53 | 2.53 | 2.53 |
| CLTE at30-380°C | $\times10^{-7}$/°C | unmeasured | -1.8 | unmeasured | -0.8 | -0.5 | -0.5 |
| CLTE at30-750°C | | unmeasured | -0.3 | unmeasured | 0.4 | 0.8 | 1.0 |

EP 4 656 605 A1

(continued)

| After Crystallization | | | | | | | |
|---|---|---|---|---|---|---|---|
| Total Transmittance L* | - | 94.4 | 94.7 | unmeasured | 94.2 | 94.2 | 94.1 |
| Total Transmittance a* | | -0.9 | -0.4 | unmeasured | -0.6 | -0.7 | -0.8 |
| Total Transmittance b* | | 5.6 | 4.0 | unmeasured | 5.1 | 5.3 | 5.4 |
| Diffuse Transmittance L* | | unmeasured | 0.9 | unmeasured | 1.4 | 1.5 | 2.2 |
| Diffuse Transmittance a* | | unmeasured | 0.1 | unmeasured | 0.1 | 0.2 | 0.3 |
| Diffuse Transmittance b* | | unmeasured | -1.7 | unmeasured | -1.8 | -2.5 | -3.7 |
| Total Transmittance at 4 mm thickness and 1500 nm wavelength | | unmeasured | unmeasured | unmeasured | unmeasured | unmeasured | unmeasured |

[Table 35]

| | Unit | No.103 | No.104 | No.105 | No.106 | No.107 | No.108 |
|---|---|---|---|---|---|---|---|
| $SiO_2$ | % by mass | 64.6 | 64.3 | 63.6 | 64.6 | 65.0 | 64.8 |
| $Al_2O_3$ | | 22.0 | 21.9 | 21.7 | 21.2 | 21.2 | 22.1 |
| $Li_2O$ | | 3.33 | 3.55 | 3.51 | 3.57 | 3.57 | 2.70 |
| $Na_2O$ | | 0.09 | 0.1 | 0.1 | 0.1 | 0.1 | 0.12 |
| $K_2O$ | | 0.01 | 0.01 | 0.01 | 0.01 | 0.01 | 0.01 |
| MgO | | 0.12 | 0.66 | 0.36 | 0.97 | 0.61 | 0.40 |
| CaO | | 0.00 | 0.01 | 0.01 | 0.01 | 0.01 | 0.03 |
| BaO | | 5.00 | 3.68 | 5.23 | 3.70 | 3.69 | 3.03 |
| $ZrO_2$ | | 2.20 | 2.19 | 2.17 | 2.20 | 2.20 | 1.93 |
| $TiO_2$ | | 1 .73 | 1.93 | 1.70 | 1.94 | 1.94 | 0.01 |
| $P_2O_5$ | | 0.68 | 1.33 | 1.32 | 1.34 | 1.34 | 0.51 |
| ZnO | | 0 | 0 | 0 | 0 | 0 | 1.97 |
| $SnO_2$ | | 0.27 | 0.30 | 0.29 | 0.30 | 0.30 | 1.33 |
| SrO | | 0.004 | 0.01 | 0.01 | 0.01 | 0.01 | 1.03 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | unmeasured | 0.03 | 0.03 | 0.03 | 0.03 | 0.04 |

| | Unit | No.103 | No.104 | No.105 | No.106 | No.107 | No.108 |
|---|---|---|---|---|---|---|---|
| $Fe_2O_3$ | ppm | 80 | 90 | 90 | 100 | 90 | 90 |
| $MoO_3$ | | <0.3 | < 0.3 | <0.3 | < 0.3 | <0.3 | <0.3 |
| Pt | | unmeasured | unmeasured | unmeasured | unmeasured | unmeasured | unmeasured |
| Rh | | unmeasured | unmeasured | unmeasured | unmeasured | unmeasured | unmeasured |
| $V_2O_5$ | | unmeasured | unmeasured | unmeasured | unmeasured | unmeasured | unmeasured |
| $Nd_2O_3$ | | <5 | <5 | <5 | <5 | <5 | <5 |
| $Pr_6O_{11}$ | | unmeasured | 1 | 1 | 1 | 1 | 1 |
| $Sm_2O_3$ | | unmeasured | unmeasured | unmeasured | unmeasured | unmeasured | unmeasured |
| $Li_2O/BaO$ | - | 0.67 | 0.96 | 0.67 | 0.96 | 0.97 | 0.89 |
| $Na_2O+K_2O$ | % by mass | 0.09 | 0.11 | 0.11 | 0.11 | 0.11 | 0.13 |
| $MgO+CaO$ | % by mass | 0.12 | 0.67 | 0.37 | 0.98 | 0.62 | 0.43 |
| $(Na_2O+K_2O+MgO)/BaO$ | - | 0.04 | 0.21 | 0.09 | 0.29 | 0.20 | 0.17 |
| $8Li_2O-4(Na_2O+K_2O+MgO)-(BaO+ZnO)$ | % by mass | 20.78 | 21.64 | 20.97 | 20.54 | 21.99 | 14.48 |
| $Li_2O+Na_2O+K_2O)/ZrO_2$ | - | 1 .56 | 1.67 | 1.67 | 1.67 | 1.67 | 1.47 |

EP 4 656 605 A1

[Table 36]

| | Unit | No.103 | No.104 | No.105 | No.106 | No.107 | No.108 |
|---|---|---|---|---|---|---|---|
| Before Crystallization | | | | | | | |
| $\beta$-OH | /mm | 0.10 | 0.10 | 0.10 | 0.10 | 0.10 | 0.10 |
| Density | g/cm$^3$ | 2.49 | 2.47 | 2.50 | 2.48 | 2.47 | 2.52 |
| CLTE at30-380°C | $\times 10^{-7}$/°C | 39.1 | 40.3 | 41.8 | 41.6 | 40.3 | 35.3 |
| Glass Tran-sitbn Point Tg | | 742 | 721 | 728 | 721 | 724 | 731 |
| Deform atbn Point Tf | | 794 | 783 | 787 | 770 | 775 | 788 |
| $10^4$ | °C | 1361 | 1338 | 1346 | 1333 | 1347 | 1355 |
| $10^{3.5}$ | | 1444 | 1421 | 1428 | 1416 | 1416 | 1438 |
| $10^3$ | | 1540 | 1516 | 1523 | 1511 | 1526 | 1533 |
| $10^{2.5}$ | | 1652 | 1627 | 1635 | 1624 | 1624 | 1644 |
| Liquidus Tem perature TL | | 1373 | 1369 | 1380 | 1380 | 1370 | 1421 |
| Liquidus Visc-osity bg$\eta$ | - | 3.92 | 3.81 | 3.78 | 3.80 | 3.80 | 3.60 |
| Prin ary Phase | - | ZrO$_2$ | ZrO$_2$ | ZrO$_2$ | ZrO$_2$ | ZrO$_2$ | mullite |
| After Crystalization | | | | | | | |
| Crystallization Conditons | - | 780°C-3h 920°C-1h | 780°C-3h 905°C-1h | 780°C-3h 905°C-1h | 780°C-3h 905°C-1h | 780°C-3h 905°C-1h | 780°C-3h 910°C-1h |
| Precipitated Crystals | - | $\beta$ -quartz | $\beta$ -quartz | $\beta$ -quartz | $\beta$ -quartz | $\beta$ -quartz | $\beta$ -quartz |
| Crystallinity | | unmeasured | unmeasured | unmeasured | unmeasured | unmeasured | 78 |
| Crystallite Size | nm | unmeasured | unmeasured | unmeasured | unmeasured | unmeasured | 56 |
| Density | g/cm$^3$ | unmeasured | 2.56 | 2.57 | 2.56 | 2.56 | 2.59 |
| CLTE at30-380°C | $\times 10^{-7}$/°C | unmeasured | 0.4 | 0.6 | 3.3 | 0.0 | -2.2 |
| CLTE at30-750°C | | unmeasured | 1.8 | 2.5 | 4.3 | 1.3 | -1.0 |

(continued)

| After Crystalization | | | | | | | |
|---|---|---|---|---|---|---|---|
| Total Transmittance L* | | unmeasured | 94.5 | 94.7 | 94.2 | 94.4 | 91.5 |
| Total Transmittance a* | | unmeasured | -0.9 | -0.7 | -1.2 | -1.1 | -0.6 |
| Total Transmittance b* | | unmeasured | 4.9 | 4.3 | 6.1 | 5.7 | 8.5 |
| Diffuse T ransm ittance L* | - | unmeasured | 0.6 | 0.8 | 0.5 | 0.5 | 14.0 |
| Diffuse Transmittance a* | | unmeasured | 0.0 | 0.1 | 0.0 | 0.0 | 2.4 |
| Diffuse T ransm ittance b* | | unmeasured | -0.8 | -1.2 | -0.5 | -0.7 | -15.0 |
| Total Transmittance at 4 mm thickness and 1500 nm wave length | | unmeasured | unmeasured | unmeasured | unmeasured | unmeasured | 90.3 |

[Table 37]

| | Unit | No.109 | No.110 | No.111 | No.112 | No.113 | No.114 |
|---|---|---|---|---|---|---|---|
| $SiO_2$ | | 64.1 | 66.0 | 65.9 | 61.3 | 60.6 | 59.6 |
| $Al_2O_3$ | | 19.9 | 18.5 | 18.0 | 21.9 | 21.6 | 20.0 |
| $Li_2O$ | | 3.30 | 3.00 | 3.00 | 2.90 | 3.45 | 2.60 |
| $Na_2O$ | | 0.17 | 0.96 | 0.16 | 0.12 | 0.96 | 1.31 |
| $K_2O$ | | 0.01 | 0.30 | 0.01 | 0.29 | 0.39 | 0.39 |
| MgO | | 0.20 | 0.31 | 0.01 | 0.80 | 1.98 | 0.00 |
| CaO | | 0.02 | 0.49 | 1.45 | 0.96 | 0.20 | 0.01 |
| BaO | | 6.54 | 3.02 | 4.03 | 2.50 | 0.21 | 5.04 |
| $ZrO_2$ | | 2.34 | 1.51 | 1.41 | 1.52 | 2.25 | 2.14 |
| $TiO_2$ | % by mass | 0.03 | 2.18 | 2.97 | 3.37 | 1.47 | 2.18 |
| $P_2O_5$ | | 1.40 | 0.01 | 0.02 | 0.02 | 2.02 | 1.51 |
| Zn0 | | 0.99 | 2.50 | 1.70 | 0 | 4.11 | 4.54 |
| $SnO_2$ | | 0.99 | 0.20 | 0.20 | 0.20 | 0.20 | 0.40 |
| SrO | | 0 | 0.83 | 1.13 | 4.08 | 0.52 | 0.21 |
| Pb0 | | <0.001 | <0.001 | <0.001 | <0.001 | <0.001 | <0.001 |
| C l | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.05 | 0.05 | 0.05 |

(continued)

| | Unit | No.109 | No.110 | No.111 | No.112 | No.113 | No.114 |
|---|---|---|---|---|---|---|---|
| $Fe_2O_3$ | | 80 | 80 | 80 | 80 | 100 | 120 |
| $MoO_3$ | | <0.3 | <0.3 | <0.3 | <0.3 | <0.3 | <0.3 |
| Pt | | unm easured | unm easured | unm easured | unm easured | unm easured | unm easured |
| Rh | | unm easured | unm easured | unm easured | unm easured | unm easured | unm easured |
| $V_2O_5$ | ppm | unm easured | unm easured | unm easured | unm easured | unm easured | unm easured |
| $Nd_2O_3$ | | <5 | 1500 | <5 | <5 | <5 | <5 |
| $Pr_6O_{11}$ | | 1 | 1 | 1 | 1 | 1 | 1 |
| $Sm_2O_3$ | | unm easured | unm easured | unm easured | unm easured | unm easured | unm easured |
| $Li_2O/BaO$ | - | 0.50 | 0.99 | 0.74 | 1.16 | 16.43 | 0.52 |
| $Na_2O+K_2O$ | % by mass | 0.18 | 1.26 | 0.17 | 0.41 | 1.35 | 1.70 |
| MgO+CaO | % by mass | 0.22 | 0.80 | 1.46 | 1.76 | 2.18 | 0.01 |
| $(Na_2O+K_2O+MgO)/BaO$ | - | 0.06 | 0.52 | 0.04 | 0.48 | 15.86 | 0.34 |
| $8Li_2O-4(Na_2O+K_2O+MgO)-(BaO+ZnO)$ | % by mass | 17.35 | 12.20 | 17.55 | 15.86 | 9.96 | 4.42 |
| $Li_2O+Na_2O+K_2O)/ZrO_2$ | - | 1.49 | 2.82 | 2.25 | 2.18 | 2.13 | 2.01 |

[Table 38]

| | Unit | No.109 | No.110 | No.111 | No.112 | No.113 | No.114 |
|---|---|---|---|---|---|---|---|
| Before Crystallization | | | | | | | |
| $\beta$-OH | /mm | 0.10 | 0.20 | 0.10 | 0.10 | 0.10 | 0.40 |
| Density | $g/cm^3$ | 2.53 | 2.50 | 2.52 | 2.55 | 2.52 | 2.58 |
| CLTE at 30-380°C | $\times10^{-7}/°C$ | 41.4 | 42.8 | 41.6 | 43.1 | 44.9 | 43.8 |
| Glass Transition Point Tg | | 728 | 681 | 691 | 706 | 661 | 678 |
| Deform atbn Po ht Tf | | 785 | 744 | 752 | 766 | 721 | 735 |
| $10^4$ | | 1369 | 1336 | 1331.1 | 1291 | 1241 | 1292 |
| $10^{3.5}$ | °C | 1453 | 1425 | 1419 | 1370 | 1320 | 1376 |
| $10^3$ | | 1551 | 1527 | 1519.8 | 1462 | 1412 | 1472 |
| $10^{2.5}$ | | 1668 | 1646 | 1636.5 | 1570 | 1520 | 1585 |
| Liquidus Tem perature TL | | 1415 | 1173 | 1201 | 1278 | 1322 | 1352 |
| Liquidus Viscosity bg $\eta$ | - | 3.72 | 5.17 | 4.91 | 4.09 | 3.49 | 3.64 |
| Primary Phase | - | $ZrO_2$ | $\beta$-spodumene | $ZrO_2$ | $ZrO_2$ | $ZrO_2$ | $ZrO_2$ |

(continued)

| After Crystallization | | | | | | | |
|---|---|---|---|---|---|---|---|
| Crystallization Conditions | - | 780°C-3h 910°C-1h | 760°C-3h 870°C-1h | 780°C-3h 910°C-1h | 780°C-3h 890°C-1h | 780°C-3h 910°C-1h | 740°C-3h 890°C-1h |
| Precipitated Crystals | - | $\beta$-quartz, $\beta$-spodum ene | $\beta$-quartz, $\beta$-spodum ene | $\beta$-quartz, $\beta$-spodum ene | $\beta$-quartz | $\beta$-spodum ene | $\beta$-quartz |
| Crystallinity | % | 72 | 81 | 72 | 70 | 88 | 69 |
| Crystallite Size | nm | 65 | 69 | 46 | 36 | 81 | 71 |
| Density | g/cm$^3$ | 2.59 | 2.57 | 2.60 | 2.66 | 2.54 | 2.62 |
| CLTE at 30-380°C | $\times 10^{-7}$/°C | 0.3 | 3.8 | 4.8 | 17.1 | 15.1 | 5.9 |
| CLTE at 30-750°C | | 2.8 | 7.2 | 6.3 | 19.1 | 18.4 | 9.9 |
| T ota lT ransm ittance L* | | 92.0 | 76.5 | 76.8 | 92.4 | 20.1 | 80.1 |
| Total T ransm ittance a* | | -0.2 | 1.6 | 0.3 | -0.7 | 14.4 | 0.2 |
| T ota lT ransm ittance b* | | 5.7 | 14.6 | 25.0 | 6.0 | 31.8 | 18.5 |
| Diffuse T ransm ittance L* | | 19.3 | 43.2 | 33.7 | 1.4 | 20.1 | 38.2 |
| Diffuse T ransm ittance a* | - | 1.6 | -3.4 | -4.5 | 0.3 | 14.4 | -4.2 |
| Diffuse T ransm ittance b* | | -15.8 | -10.1 | -9.2 | -2.6 | 31.8 | -8.8 |
| Total Transmittance at 4 mm thickness and 1500 nm wavelength | | 90.6 | 89.3 | 88.6 | 89.9 | 60.8 | 33.8 |

[Table 39]

| | Unit | No.115 | No.116 | No.117 | No.118 | No.119 | No.120 |
|---|---|---|---|---|---|---|---|
| $SiO_2$ | | 60.9 | 67.7 | 66.4 | 68.1 | 64.9 | 64.0 |
| $Al_2O_3$ | | 20.1 | 19.0 | 18.0 | 16.5 | 19.5 | 20.0 |
| $Li_2O$ | | 3.45 | 2.90 | 2.50 | 3.45 | 3.10 | 3.30 |
| $Na_2O$ | | 0.38 | 0.33 | 0.12 | 1.20 | 0.62 | 0.24 |
| $K_2O$ | | 0.10 | 0.20 | 0.01 | 0.10 | 0.01 | 0.01 |
| $MgO$ | | 0.61 | 1.49 | 0.59 | 1.98 | 0.50 | 0.01 |
| $CaO$ | | 0.03 | 0.20 | 0.03 | 0.68 | 1.45 | 0.39 |
| $BaO$ | | 3.53 | 1.01 | 3.00 | 1.71 | 1.50 | 3.03 |
| $ZrO_2$ | % by mass | 1.32 | 2.14 | 1.72 | 2.34 | 1.93 | 1.73 |
| $TiO_2$ | | 2.18 | 1.68 | 1.68 | 1.70 | 2.17 | 3.38 |
| $P_2O_5$ | | 0.02 | 0.81 | 0.01 | 0.02 | 1.21 | 0.41 |
| $ZnO$ | | 3.55 | 1.01 | 2.98 | 0 | 0.51 | 1.10 |
| $SnO_2$ | | 0.52 | 0.20 | 0.31 | 0.52 | 0.30 | 0.20 |
| $SrO$ | | 3.08 | 1.02 | 2.03 | 1.53 | 1.75 | 2.06 |
| $Pb0$ | | <0.001 | <0.001 | <0.001 | <0.001 | <0.001 | <0.001 |
| $C\,I$ | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.05 | 0.04 | 0.04 | 0.04 | 0.04 | 0.04 |
| $Fe_2O_3$ | | 100 | 90 | 80 | 80 | 80 | 80 |
| $MoO_3$ | | <0.3 | <0.3 | <0.3 | <0.3 | <0.3 | <0.3 |
| $Pt$ | | unm ea-sured | unm ea-sured | unm ea-sured | unm ea-sured | unm ea-sured | unm ea-sured |
| $Rh$ | ppm | unm ea-sured | unm ea-sured | unm ea-sured | unm ea-sured | unm ea-sured | unm ea-sured |
| $V_2O_5$ | | unm ea-sured | unm ea-sured | unm ea-sured | unm ea-sured | unm ea-sured | unm ea-sured |
| $Nd_2O_3$ | | 2000 | 1900 | 4400 | 1600 | 3800 | 850 |
| $Pr_6O_{11}$ | | 1 | 600 | 1700 | 100 | 1300 | 300 |
| $Sm_2O_3$ | | unm ea-sured | unm ea-sured | unm ea-sured | unm ea-sured | unm ea-sured | unm ea-sured |
| $Li_2/BaO$ | - | 0.98 | 2.87 | 0.83 | 2.02 | 2.07 | 1.09 |
| $Na_2O+K_2O$ | % by mass | 0.48 | 0.53 | 0.13 | 1.30 | 0.63 | 0.25 |
| $MgO+CaO$ | % by mass | 0.64 | 1.69 | 0.62 | 2.66 | 1.95 | 0.40 |
| $(Na_2O+K_2O+MgO)/BaO$ | - | 0.31 | 2.00 | 0.24 | 1.92 | 0.75 | 0.09 |
| $8Li_2O-4(Na_2O+K_2O+MgO)-(BaO+ZnO)$ | % by mass | 16.16 | 13.10 | 11.14 | 12.77 | 18.27 | 21.23 |
| $(Li_2O+Na_2O+K_2O)/ZrO_2$ | - | 2.98 | 1.60 | 1.53 | 2.03 | 1.93 | 2.05 |

[Table 40]

| | Unit | No.115 | No.116 | No.117 | No.118 | No.119 | No.120 |
|---|---|---|---|---|---|---|---|
| Before Crystallization | | | | | | | |
| $\beta$-OH | /mm | 0.10 | 0.30 | 0.10 | 0.10 | 0.10 | 0.10 |
| Density | g/cm$^3$ | 2.59 | 2.46 | 2.53 | 2.48 | 2.49 | 2.51 |
| CLTE at30-380°C | $\times 10^{-7}$/°C | 47.0 | 37.5 | 36.3 | 47.8 | 42.8 | 41.7 |
| Glass Transition Point Tg | °C | 665 | 707 | 707 | 660 | 699 | 700 |
| Deform atbn Point Tf | | 723 | 769 | 764 | 720 | 761 | 759 |
| $10^4$ | | 1256 | 1347 | 1347.7 | 1297 | 1325 | 1323 |
| $10^{3.5}$ | | 1338 | 1433 | 1434.3 | 1387 | 1410 | 1408 |
| $10^3$ | | 1434 | 1532 | 1533.5 | 1491 | 1509 | 1506 |
| $10^{2.5}$ | | 1545 | 1648 | 1648.3 | 1613 | 1623 | 1620 |
| Liquidus Temperature TL | | 1280 | 1325 | 1353 | 1330 | 1328 | 1327 |
| Liquidus Viscosity bg$\eta$ | - | 3.85 | 4.14 | 3.97 | 3.81 | 3.98 | 3.98 |
| Primary Phase | - | $\beta$-spodum ene | ZrO$_2$ | ZrO$_2$ | ZrO$_2$ | ZrO$_2$ | ZrO$_2$ |
| After Crystallization | | | | | | | |
| Crystallization Conditons | - | 780°C-3h 910°C-1h | 780°C-3h 910°C-1h | 780°C-3h 910°C-1h | 780°C-3h 910°C-1h | 780°C-3h 880°C-1h | 780°C-3h 910°C-1h |
| Precipitated Crystals | - | β-spodum ene, Al$_2$O$_3$-SiO$_2$-based crystals | $\beta$-quartz | $\beta$-quartz | $\beta$-quartz | $\beta$-quartz | $\beta$-quartz |
| Crystallinity | % | 94 | 91 | 81 | 80 | 81 | 78 |
| Crystallite Size | nm | 60 | 37 | 38 | 87 | 36 | 37 |
| Density | g/cm$^3$ | 2.66 | 2.56 | 2.63 | 2.56 | 2.57 | 2.59 |
| CLTE at30-380°C | $\times 10^{-7}$/°C | 10.3 | 6.9 | 3.1 | 6.6 | 7.3 | 0.5 |
| CLTE at30-750°C | | 14.8 | 7.2 | 3.7 | 12.4 | 8.9 | 3.0 |

(continued)

| After Crystallization | | | | | | | |
|---|---|---|---|---|---|---|---|
| Total Transmittance L* | | 0.0 | 92.1 | 89.4 | 36.1 | 89.2 | 90.7 |
| Total Transmittance a* | | 0.0 | -0.9 | -0.9 | 8.0 | -0.7 | -1.3 |
| Total Transmittance b* | | 0.0 | 3.6 | 1.5 | 32.6 | 3.3 | 6.9 |
| Diffuse Transmittance L* | | 0.0 | 1 .3 | 0.7 | 35.9 | 1 .4 | 1.8 |
| Diffuse Transmittance a* | - | 0.0 | 0.1 | 0.2 | 8.0 | 0.1 | 0.6 |
| Diffuse Transmittance b* | | 0.0 | -1 .6 | -2.0 | 32.7 | -2.1 | -4.2 |
| Total Transmittance at 4 mm thickness and 1500 nm wave length | | 876 | 85.3 | 47.2 | 86.0 | 88.9 | 90.6 |

[Table 41]

| | Unit | No.121 | No.122 | No.123 | No.124 | No.125 | No.126 |
|---|---|---|---|---|---|---|---|
| $SiO_2$ | % by mass | 64.5 | 65.3 | 65.0 | 67.7 | 67.9 | 67.7 |
| $Al_2O_3$ | | 23.0 | 22.0 | 21.0 | 19.0 | 18.8 | 19.0 |
| $Li_2O$ | | 3.00 | 3.40 | 3.45 | 2.90 | 2.90 | 2.90 |
| $Na_2O$ | | 0.64 | 0.10 | 0.10 | 0.42 | 0.43 | 0.43 |
| $K_2O$ | | 0.29 | 0.29 | 0.20 | 0.20 | 0.20 | 0.20 |
| MgO | | 0.30 | 1.30 | 1.00 | 1.49 | 1.49 | 1.49 |
| CaO | | 0.02 | 0.77 | 1.92 | 0.20 | 0.20 | 0.20 |
| BaO | | 203 | 0.40 | 0.71 | 1.01 | 1.01 | 1.00 |
| $ZrO_2$ | | 2.03 | 1.62 | 1.72 | 2.13 | 2.14 | 2.13 |
| $TiO_2$ | | 1.68 | 2.98 | 2.17 | 1.68 | 1.69 | 1.68 |
| $P_2O_5$ | | 0.01 | 0.20 | 0.51 | 0.81 | 0.80 | 0.81 |
| ZnO | | 2.01 | 0 | 1.52 | 0.98 | 0.97 | 0.98 |
| $SnO_2$ | | 0.40 | 0.20 | 0.20 | 0.20 | 0.20 | 0.20 |
| SrO | | 0 | 1.35 | 0 | 1.03 | 1.03 | 1.02 |
| PbO | | <0.001 | <0.001 | <0.001 | <0.001 | <0.001 | <0.001 |
| Cl | | <0.001 | <0.001 | <0.001 | <0.001 | <0.001 | <0.001 |
| $As_2O_3$ | | <0.01 | <0.01 | <0.01 | <0.01 | <0.01 | <0.01 |
| $Sb_2O_3$ | | <0.01 | <0.01 | <0.01 | <0.01 | <0.01 | <0.01 |
| $HfO_2$ | | 0.04 | 0.04 | 0.04 | 0.04 | 0.04 | 0.04 |

(continued)

| | Unit | No.121 | No.122 | No.123 | No.124 | No.125 | No.126 |
|---|---|---|---|---|---|---|---|
| $Fe_2O_3$ | | 90 | 100 | 110 | 100 | 100 | 100 |
| $MoO_3$ | | <0.3 | <0.3 | <0.3 | <0.3 | <0.3 | <0.3 |
| Pt | ppm | unmeasured | unmeasured | unmeasured | unmeasured | unmeasured | unmeasured |
| Rh | | unmeasured | unmeasured | unmeasured | unmeasured | unmeasured | unmeasured |
| $V_2O_5$ | | unmeasured | unmeasured | unmeasured | unmeasured | unmeasured | unmeasured |
| $Nd_2O_3$ | | 380 | 490 | 4200 | 2000 | 2100 | 2100 |
| $Pr_6O_{11}$ | | 1 | 100 | 1 | 300 | 100 | 20 |
| $Sm_2O_3$ | | unmeasured | unmeasured | unmeasured | unmeasured | unmeasured | unmeasured |
| $Li_2O/BaO$ | - | 1.48 | 8.50 | 4.86 | 2.87 | 2.87 | 2.90 |
| $Na_2O+K_2O$ | % by mass | 0.93 | 0.39 | 0.30 | 0.62 | 0.63 | 0.63 |
| $MgO+CaO$ | % by mass | 0.32 | 2.07 | 2.92 | 1.69 | 1.69 | 1.69 |
| $(Na_2O+K_2O+MgO)/BaO$ | - | 0.61 | 4.23 | 1.83 | 2.09 | 2.10 | 2.12 |
| $8Li_2O-4(Na_2O+K_2O+MgO)-(BaO+ZnO)$ | % by mass | 15.04 | 2004 | 20.17 | 12.77 | 12.74 | 12.74 |
| $(Li_2O+Na_2O+K_2O)/ZrO_2$ | - | 1.94 | 2.34 | 2.18 | 1.65 | 1.65 | 1.66 |

[Table 42]

| | Unit | No.121 | No.122 | No.123 | No.124 | No.125 | No.126 |
|---|---|---|---|---|---|---|---|
| Before Crystallization | | | | | | | |
| $\beta$-OH | /mm | 0.10 | 0.10 | 0.10 | 0.20 | 0.10 | 0.30 |
| Density | g/cm$^3$ | 2.49 | 2.46 | 2.48 | 2.46 | 2.46 | 2.46 |
| CLTE at30-380°C | ×10$^{-7}$/°C | 37.5 | 40.1 | 41.6 | 37.7 | 37.9 | 37.8 |
| Glass Transition Point Tg | °C | 710 | 706 | 693 | 710 | 709 | 710 |
| Deformation Point Tf | | 774 | 762 | 750 | 763 | 757 | 759 |
| 10$^4$ | | 1330 | 1309 | 1293.2 | 1351 | 1354 | 1355 |
| 10$^{3.5}$ | | 1411 | 1391 | 1375.4 | 1437 | 1441 | 1441 |
| 10$^3$ | | 1506 | 1485 | 1470.6 | 1537 | 1542 | 1541 |
| 10$^{2.5}$ | | 1618 | 1595 | 1582 | 1653 | 1659 | 1659 |
| Liquidus Tem perature TL | | 1430 | 1259 | 1268 | 1352 | 1353 | 1352 |
| Liquidus Viscosity bg $\eta$ | - | 3.39 | 4.34 | 4.17 | 3.98 | 4.00 | 4.02 |
| Primary Phase | - | mullite | $\beta$-spodum ene | $\beta$-spodum ene | ZrO$_2$ | ZrO$_2$ | ZrO$_2$ |
| After Crystallization | | | | | | | |
| Crystallization Conditons | - | 780°C-3h 930°C-1h | 780°C-3h 910°C-1h | 760°C-3h 880°C-1h | 780°C-3h 910°C-1h | 780°C-3h 910°C-1h | 780°C-3h 910°C-1h |
| Precpitated Crystals | - | $\beta$-quartz | $\beta$-quartz | $\beta$-quartz | $\beta$-quartz | $\beta$-quartz | $\beta$-quartz |
| Crystallinity | % | 84 | 87 | 90 | 88 | 91 | 90 |
| Crystallite Size | nm | 44 | 38 | 42 | 37 | 38 | 37 |
| Density | g/cm$^3$ | 2.58 | 2.56 | 2.56 | 2.56 | 2.55 | 2.56 |
| CLTE at 30-380°C | ×10$^{-7}$ °C | 1.8 | 7.9 | 3.3 | 7.8 | 7.4 | 7.7 |
| CLTE at 30-750°C | | 3.5 | 8.8 | 5.0 | 8.1 | 7.8 | 8.0 |

(continued)

| After Crystallization | | | | | | | |
|---|---|---|---|---|---|---|---|
| Total Transmittance L* | | 91.6 | 91.9 | 88.8 | 92.0 | 92.2 | 92.0 |
| Total Transmittance a* | | -0.5 | -0.4 | -0.2 | -0.9 | -0.8 | -0.7 |
| Total Transmittance b* | | 7.1 | 4.6 | 2.3 | 3.8 | 3.4 | 3.1 |
| Diffuse Transmittance L* | - | 12.9 | 1.0 | 2.6 | 1.3 | 1.0 | 1.1 |
| Diffuse Transmittance a* | | 1.3 | 0.2 | 0.6 | 0.1 | 0.1 | 0.1 |
| Diffuse Transmittance b* | | -11.9 | -2.0 | -6.0 | -2.0 | -2.0 | -2.1 |
| Total Transmittance at 4 mm thickness and 1500 nm wave length | | 90.2 | 88.8 | 89.9 | 87.1 | 89.7 | 89.9 |

[Table 43]

| | Unit | No.127 | No.128 | No.129 | No.130 | No.131 |
|---|---|---|---|---|---|---|
| $SiO_2$ | | 67.7 | 67.8 | 67.7 | 67.7 | 67.8 |
| $Al_2O_3$ | | 19.0 | 19.0 | 19.0 | 19.0 | 19.0 |
| $Li_2O$ | | 2.90 | 2.90 | 2.90 | 2.90 | 2.90 |
| $Na_2O$ | | 0.43 | 0.32 | 0.32 | 0.34 | 0.33 |
| $K_2O$ | | 0.20 | 0.20 | 0.20 | 0.20 | 0.20 |
| $MgO$ | | 1.50 | 1.48 | 1.48 | 1.49 | 1.49 |
| $CaO$ | | 0.20 | 0.19 | 0.19 | 0.20 | 0.20 |
| $BaO$ | | 1.01 | 1.00 | 1.00 | 1.00 | 1.00 |
| $ZrO_2$ | | 2.13 | 2.13 | 2.13 | 2.12 | 2.13 |
| $TiO_2$ | % by mass | 1.68 | 1.69 | 1.69 | 1.68 | 1.69 |
| $P_2O_5$ | | 0.81 | 0.81 | 0.81 | 0.81 | 0.81 |
| $ZnO$ | | 0.98 | 0.98 | 0.98 | 0.99 | 1.00 |
| $SnO_2$ | | 0.20 | 0.18 | 0.18 | 0.19 | 0.18 |
| $SrO$ | | 1.030 | 1.030 | 1.03 | 1.03 | 1.03 |
| $PbO$ | | <0.001 | <0.001 | <0.001 | <0.001 | <0.001 |
| $Cl$ | | <0.001 | <0.001 | <0.001 | <0.001 | <0.001 |
| $As_2O_3$ | | <0.01 | <0.01 | <0.01 | <0.01 | <0.01 |
| $Sb_2O_3$ | | <0.01 | <0.01 | <0.01 | <0.01 | <0.01 |
| $HfO_2$ | | 0.04 | 0.04 | 0.04 | 0.04 | 0.04 |

(continued)

| | Unit | No.127 | No.128 | No.129 | No.130 | No.131 |
|---|---|---|---|---|---|---|
| $Fe_2O_3$ | | 110 | 90 | 100 | 100 | 110 |
| $MoO_3$ | | <0.3 | <0.3 | <0.3 | <0.3 | <0.3 |
| Pt | | 0.50 | unmeasured | unmeasured | unmeasured | unmeasured |
| Rh | ppm | 0.10 | unmeasured | unm easured | unmeasured | unmeasured |
| $V_2O_5$ | | 1.00 | unmeasured | unmeasured | unmeasured | unmeasured |
| $Nd_2O_3$ | | 2200 | 1800 | 2200 | 2300 | 1900 |
| $Pr_6O_{11}$ | | 1 | 500 | 700 | 800 | 100 |
| $Sm_2O_3$ | | unmeasured | 600 | 200 | 40 | 100 |
| $Li_2O/BaO$ | - | 2.87 | 2.90 | 2.90 | 2.90 | 2.90 |
| $Na_2O + K_2O$ | % by mass | 0.63 | 0.52 | 0.52 | 0.54 | 0.53 |
| $MgO+CaO$ | % by mass | 1.70 | 1.67 | 1.67 | 1.69 | 1.69 |
| $(Na_2O+K_2O+MgO)/BaO$ | - | 2.11 | 2.00 | 2.00 | 2.03 | 2.02 |
| $8Li_2O-4(Na_2O+K_2O+MgO)-(BaO+ZnO)$ | % by mass | 12.69 | 13.22 | 13.22 | 13.09 | 13.12 |
| $(Li_2O+Na_2O+K_2O)/ZrO_2$ | - | 1.66 | 1.61 | 1.61 | 1.62 | 1.61 |

[Table 44]

| | Unit | No.127 | No.128 | No.129 | No.130 | No.131 |
|---|---|---|---|---|---|---|
| Before Crystallization | | | | | | |
| $\beta$-OH | /mm | 0.10 | 0.10 | 0.10 | 0.10 | 0.10 |
| Density | g/cm$^3$ | 2.46 | 2.46 | 2.46 | 2.46 | 2.46 |
| CLTE at 30-380°C | $\times 10^{-7}$/°C | 37.8 | 36.7 | 37.4 | 37.2 | 37.1 |
| Glass Transition Point Tg | | 711 | 714 | 711 | 711 | 713 |
| Deformation Point Tf | | 760 | 768 | 763 | 766 | 766 |
| $10^4$ | | 1354 | 1353 | 1352.9 | 1353 | 1354 |
| $10^{3.5}$ | °C | 1440 | 1439 | 1439.4 | 1440 | 1440 |
| $10^3$ | | 1539 | 1537 | 1538.2 | 1540 | 1538 |
| $10^{2.5}$ | | 1656 | 1651 | 1652 | 1657 | 1653 |
| Liquidus Temperature TL | | 1358 | unmeasured | unmeasured | unmeasured | unmeasured |
| Liquidus Viscosity bg $\eta$ | - | 3.97 | unmeasured | unmeasured | unmeasured | unmeasured |
| Primary Phase | - | $ZrO_2$ | unmeasured | unmeasured | unmeasured | unmeasured |
| After Crystallization | | | | | | |
| Crystallization Conditions | - | 780°C-3h 910°C-1h | 780°C-3h 910°C-1h | 780°C-3h 910°C-1h | 780°C-3h 910°C-1h | 780°C-3h 910°C-1h |
| Precipitated Crystals | - | $\beta$-quartz | $\beta$-quartz | $\beta$-quartz | $\beta$-quartz | $\beta$-quartz |
| Crystallinity | % | 88 | 91 | 90 | 89 | 91 |

(continued)

| After Crystallization | | | | | | |
|---|---|---|---|---|---|---|
| Crystallite Size | nm | 36 | 38 | 35 | 37 | 36 |
| Density | g/cm$^3$ | 2.56 | 2.56 | 2.56 | 2.56 | 2.56 |
| CLTE at 30-380°C | $\times 10^{-7}$/°C | 7.7 | 7.2 | 7.1 | 5.2 | unmeasured |
| CLTE at 30-750°C | | 8.1 | 7.4 | 7.3 | 6.4 | unmeasured |
| Total Transmittance L* | | 92.1 | 92.6 | 92.1 | 92.1 | 92.5 |
| Total Transmittance a* | | -0.7 | -0.8 | -0.7 | -0.8 | -0.6 |
| Total Transmittance b* | | 3.0 | 3.3 | 3.0 | 2.8 | 2.8 |
| Diffuse Transmittance L* | - | 0.8 | 0.9 | 0.9 | 1.0 | 1.0 |
| Diffuse Transmittance a* | | 0.1 | 0.1 | 0.1 | 0.1 | 0.2 |
| Diffuse Transmittance b* | | -1.9 | -1.8 | -1.8 | -1.8 | -2.0 |
| Total Transmittance at 4 mm thickness and 1500 nm wavelength | | 90.4 | 87.7 | 87.9 | 88.5 | 90.4 |

First, raw materials were compounded in the form of an oxide, a hydroxide, a carbonate, a nitrate or other forms so that each of glasses having respective compositions shown in the tables was obtained, thus obtaining a raw material batch. The obtained raw material batch was melted at 1500 to 1700°C to form it into an ingot shape having a thickness of about 15 mm, and subjected to heat treatment at 700°C for 60 minutes using an annealing furnace, and then the annealing furnace was cooled at a rate of 100°C/h to room temperature, thus obtaining a glass sample. The compositions shown in the tables are analysis values of actually produced glasses. The melting was performed by the electric melting process widely used for the development of glass materials.

The respective contents of Pt and Rh in the samples were analyzed with an ICP-MS (inductively coupled plasma mass spectrometry) instrument (Agilent 8800 manufactured by Agilent Technologies, Inc.). First, the produced glass sample was ground and wetted with pure water and, then, perchloric acid, nitric acid, sulfuric acid, hydrofluoric acid or the like was added to the glass sample to dissolve the glass sample with the acid. Thereafter, the respective contents of Pt and Rh in the sample were measured with ICP-MS. Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of $Li_2O$ in the produced samples was analyzed with an atomic absorption spectrometer (contrAA 600 manufactured by Analytik Jena). The manner of analysis for this component was fundamentally the same as the analysis for Pt and Rh, such as the method for dissolving the glass sample and the use of the calibration curve. With respect to the other components, the content of each component was measured with ICP-MS or atomic absorption spectrometry, like Pt, Rh, and $Li_2O$. Otherwise, a calibration curve was made with an XRF (X-ray fluorescence) analyzer (ZSX Primus IV manufactured by Rigaku Corporation) using, as a sample for determining the calibration curve, a glass sample the concentration of which had been known by previously examining it with an ICP-MS or atomic absorption spectrometer, and the actual content of the component was then determined from an XRF analysis value of the measurement sample based on the calibration curve. In doing XRF analysis, the tube voltage, the tube current, the exposure time, and so on were adjusted according to the analytical component as needed.

Each of crystallizable glasses shown in the tables was subjected to nucleation by heat treatment at 700 to 950°C for 0.75 to 10 hours and subsequently subjected to crystal growth by heat treatment at 800 to 1050°C for 0.25 to 3 hours, thus obtaining a LAS-based crystallized glass containing β-quartz solid solution crystals as a major crystalline phase. The obtained LAS-based crystallized glasses were measured and evaluated in terms of β-OH value, type of precipitated crystals, crystallinity, crystallite size, density, coefficient of thermal expansion, total transmittance, and diffuse transmittance. In addition, the crystallizable glasses before crystallization were measured and evaluated in terms of density and coefficient of thermal expansion in the same manners as with the crystallized glasses and also measured and evaluated in terms of glass transition temperature (Tg), deformation point (Tf), temperatures at high-temperature viscosities ($10^4$ dPa·s, $10^{3.5}$ dPa·s, $10^3$ dPa·s, and $10^{2.5}$ dPa·s), liquidus temperature ($T_L$), liquidus viscosity ($\log\eta$, where η represents the glass viscosity (dPa·s) at liquidus temperature), and primary phase.

The β-OH was determined by measuring the transmittance of glass with FT-IR Frontier (manufactured by PerkinElmer Inc.) and using the following equation. The scan speed was 100 μ/min, the sampling pitch was 1 cm$^{-1}$, and the scan times were five per measurement.

$$\beta\text{-OH} = (1/X)\log10(T_1/T_2)$$

X: glass thickness (mm)
T1: transmittance (%) at a reference wavelength of 3846 cm$^{-1}$
T2: minimum transmittance (%) at a hydroxyl group absorption wavelength of around 3600 cm$^{-1}$

The precipitated crystals were evaluated with an X-ray diffractometer (a benchtop X-ray diffractometer Aeris manufactured by Malvern Panalytical Ltd.). The measurement range was 5 to 60°, the measurement step was 0.01°, and the scan speed was 1.5°/min. The type of major crystalline phase and the crystal grain size were evaluated using analysis software. The type of precipitated crystals identified as a major crystalline phase was shown in the tables. The crystallinity was determined from the integrated intensity ratio between the amorphous peak and the crystal peak. The average crystallite size of the major crystalline phase was calculated using a measured X-ray diffraction peak based on the Debeye-Sherrer method.

The density was evaluated by the Archimedes's method.

The coefficients of thermal expansion were evaluated, using glass samples processed with a length of 20 mm and a diameter of 3.8 mm, from the average coefficients of linear thermal expansion measured in a temperature range of 30 to 380°C and a temperature range of 30 to 750°C. A dilatometer manufactured by NETZSCH was used for the measurement.

Each of the transmittances was evaluated by measuring a crystallized glass sheet (30 mm square) optically polished on both sides to have a thickness of 4 mm with a spectro-photometer. A spectro-photometer V-670 manufactured by JASCO Corporation was used for the measurement. The spectro-photometer V-670 was fitted with an integrating sphere unit "ISN-723" and the transmittance measured with a barium plate attached to the unit corresponds to the total transmittance. The measurement wavelength range was 380 to 780 nm, the scan speed was 200 nm/min, the sampling pitch was 1 nm, and the band width was 5 nm. As needed, measurement was made also in a wavelength range (200 to 2500 nm) other than the above wavelength range. As an exceptional condition, measurement was made with a band width of 20 nm in the near-infrared wavelength range. Prior to the measurement, a baseline correction (adjustment to 100%) and a dark measurement (adjustment to 0%) were performed. The dark measurement was conducted in a state where the barium sulfate plate attached to ISN-723 was removed. In terms of the diffuse transmittance of the crystallized glass, using the same type of instrument as above, the measurement sample was set and measured in a state where the barium sulfate plate attached to ISN-723 was removed. Regarding the chromaticity of each transmittance, the chromaticity of illuminant D65 under a visual angle of 2 degrees was determined by calculation. The calculation method was based on JIS Z 8781-4.

The glass transition point and the deformation point were evaluated by measuring the thermal expansion curve of the glass sample in a temperature range of 30 to 750°C with a dilatometer manufactured by NETZSCH and calculating the inflection points of the curve.

The temperatures at high-temperature viscosities were evaluated by the platinum ball pulling-up method. In making the evaluation, a mass of glass sample was crushed to an appropriate size and loaded into an alumina-made crucible so as not to involve air bubbles as much as possible. Subsequently, the alumina crucible was heated to turn the sample into a melt and the measured values of the glass viscosity of the melt at a plurality of temperatures were determined. Furthermore, the constant of the Vogel-Fulcher equation was calculated and a viscosity curve was created. The temperature at each viscosity was calculated from the viscosity curve.

The liquidus temperature was evaluated in the following manner. First, glass powder sized in the particle size range from 300 micrometers to 500 micrometers was filled in a platinum boat with a size of approximately 120 × 20 × 10 mm, the boat was put into an electric furnace, and the glass powder was melted at 1600°C for 30 minutes in the furnace. Thereafter, the platinum boat was placed in an electric furnace having a linear temperature gradient for 20 hours to precipitate devitrification. The measurement sample was air cooled to room temperature, a devitrified matter precipitated at the interface between the platinum boat and the glass was observed, and the temperature at the portion where the devitrified matter was precipitated was calculated as a liquidus temperature from the temperature gradient graph of the electric furnace. Furthermore, the obtained liquidus temperature was interpolated into the high-temperature viscosity curve of the glass and the viscosity in the viscosity curve corresponding to the liquidus temperature was determined as a liquidus viscosity.

The primary phases produced in the crystallized glasses of the examples shown in the tables were analyzed using X-ray diffractometry, composition analysis, and so on (with a scanning electron microscope S-3400N Type II manufactured by Hitachi High-Tech Corporation and EMAX ENERGY EX-250X manufactured by Horiba, Ltd.).

As is obvious from the tables, it was found that the crystallized glasses in Example Nos. 1 to 131 were low in coefficient of thermal expansion, high in L* value of total transmittance, small in a* value and b* value of total transmittance, and therefore had excellent transparency.

Fig. 1 is a scatter graph on which, for the crystallized glasses in Examples of the present invention, their coefficients of thermal expansion at 30 to 750°C are plotted against their values of $8Li_2O - 4(Na_2O+K_2O+MgO) - (BaO+ZnO)$. The gragh shows that there is a tendency that the larger the value of $8Li_2O - 4(Na_2O+K_2O+MgO) - (BaO+ZnO)$ is, the lower the coefficient of thermal expansion of the crystallized glass is.

**Claims**

1. A LAS-based crystallized glass containing, in terms of % by mass, 55 to 75% $SiO_2$, 10 to 35% $Al_2O_3$, 0.1 to 5% $Li_2O$, 0 to 10% BaO, 0 to 10% MgO, 0 to 5% $TiO_2$, 0 to 5% $ZrO_2$, and 0 to 5% $P_2O_5$ and satisfying that a value of $8Li_2O - 4(Na_2O+K_2O+MgO) - (BaO+ZnO)$ is not more than 30%.

2. The LAS-based crystallized glass according to claim 1, containing, in terms of % by mass, 0.1 to 4% $Li_2O$ and 1 to 10% BaO and satisfying that the value of $8Li_2O - 4(Na_2O+K_2O+MgO) - (BaO+ZnO)$ is 0 to 25%.

3. The LAS-based crystallized glass according to claim 2, containing 2 to 10% BaO in terms of % by mass.

4. The LAS-based crystallized glass according to claim 2 or 3, containing more than 0 to less than 0.7% $Na_2O+K_2O$ in terms of % by mass.

5. The LAS-based crystallized glass according to claim 4, containing 0.01 to 4% $P_2O_5$ in terms of % by mass.

6. The LAS-based crystallized glass according to claim 5, containing 0 to less than 900 ppm $Fe_2O_3$ in terms of % by mass.

7. The LAS-based crystallized glass according to claim 6, containing 0 to 0.2% CaO in terms of % by mass.

8. The LAS-based crystallized glass according to claim 2 or 3, satisfying that the value of $8Li_2O - 4(Na_2O+K_2O+MgO) - (BaO+ZnO)$ is 12 to 25% in terms of % by mass.

9. The LAS-based crystallized glass according to claim 2 or 3, being substantially free of $As_2O_3$ and $Sb_2O_3$.

10. The LAS-based crystallized glass according to claim 2 or 3, wherein $Li_2O/BaO$ is not more than 2.5 in terms of mass ratio.

11. The LAS-based crystallized glass according to claim 2 or 3, wherein $(Na_2O+K_2O+MgO)/BaO$ is not more than 6 in terms of mass ratio.

12. The LAS-based crystallized glass according to claim 2 or 3, wherein $(Li_2O+Na_2O+K_2O)/ZrO_2$ is not more than 2.5 in terms of mass ratio.

13. The LAS-based crystallized glass according to claim 4, containing 0 to less than 1.1% ZnO in terms of % by mass.

14. The LAS-based crystallized glass according to claim 2 or 3, containing 0.1 to 3.47% $Li_2O$ in terms of % by mass and satisfying that the value of $8Li_2O - 4(Na_2O+K_2O+MgO) - (BaO+ZnO)$ is 18 to 25%.

15. The LAS-based crystallized glass according to claim 2 or 3, containing 0.1 to 2000 ppm $Pr_6O_{11}$ in terms of % by mass.

16. The LAS-based crystallized glass according to claim 2 or 3, containing 0.1 to 2000 ppm $Sm_2O_3$ in terms of % by mass.

17. A LAS-based crystallized glass containing, in terms of % by mass, 55 to 75% $SiO_2$, 15 to 30% $Al_2O_3$, 2.5 to 3.55% $Li_2O$, 0 to 1.1% MgO, 0 to 1.6% CaO, 0.01 to 2.5% $TiO_2$, 0 to 2.9% $ZrO_2$, 0 to 2% $P_2O_5$, 30 to 2000 ppm $Fe_2O_3$, and 0 to 1000 ppm $V_2O_5$ and satisfies that a value of $8Li_2O - 4(Na_2O+K_2O+MgO) - (BaO+ZnO)$ is 0 to 30%.

18. A LAS-based crystallized glass containing, in terms of % by mass, 55 to 75% $SiO_2$, 15 to 30% $Al_2O_3$, 2.0 to 3.49% $Li_2O$, 2.7 to 10% BaO, 0 to 4% MgO+CaO, 0.01 to 5% $TiO_2$, 1.3 to 5% $ZrO_2$, and 30 to 10000 ppm $Fe_2O_3$ and satisfying that a

value of $8Li_2O - 4(Na_2O+K_2O+MgO) - (BaO+ZnO)$ is 10 to 30%.

19. A LAS-based crystallized glass containing, in terms of % by mass, 55 to 75% $SiO_2$, 15 to 30% $Al_2O_3$, 2.0 to 3.55% $Li_2O$, 2.6 to 10% BaO, 0 to 4% MgO+CaO, 0.01 to 2.5% $TiO_2$, 0 to 2.9% $ZrO_2$, 0 to 2% $P_2O_5$, and 30 to 10000 ppm $Fe_2O_3$ and satisfying that a value of $8Li_2O - 4(Na_2O+K_2O+MgO) - (BaO+ZnO)$ is 0 to 30%.

20. A LAS-based crystallized glass containing, in terms of % by mass, 55 to 68% $SiO_2$, 15 to 30% $Al_2O_3$, 2.0 to 3.49% $Li_2O$, 0 to 2.7% BaO, 1.5 to 5% MgO+CaO, 0.01 to 3.9% $TiO_2$, 1.4 to 2.9% $ZrO_2$, 0 to 2.5% $P_2O_5$, and 30 to 10000 ppm $Fe_2O_3$ and satisfying that a value of $8Li_2O - 4(Na_2O+K_2O+MgO) - (BaO+ZnO)$ is 10 to 30%.

21. The LAS-based crystallized glass according to claim 2 or 3, having an L* value of total transmittance of not less than 90 at a thickness of 4 mm.

22. The LAS-based crystallized glass according to claim 2 or 3, wherein a β-quartz solid solution is precipitated as a major crystalline phase.

23. The LAS-based crystallized glass according to claim 2 or 3, having a coefficient of thermal expansion of $-20 \times 10^{-7}/°C$ to $20 \times 10^{-7}/°C$ at 30 to 750°C.

24. A method for producing the LAS-based crystallized glass according to claim 2 or 3, the method comprising the steps of:

melting a glass raw material to obtain a molten glass;
forming the molten glass into shape; and
subjecting a glass obtained in the step of forming the molten glass into shape to heat treatment to crystallize the glass,
wherein a process for forming the molten glass into shape is at least one selected from an overflow process, a float process, a down-draw process, a slot down process, a redraw process, a containerless process, a blow process, a press forming process, a roll process, a bushing process, and a tube draw process.

25. A crystallizable glass containing, in terms of % by mass, 55 to 75% $SiO_2$, 10 to 35% $Al_2O_3$, 0.1 to 5% $Li_2O$, 0 to 10% BaO, 0 to 10% MgO, 0 to 5% $TiO_2$, 0 to 5% $ZrO_2$, and 0 to 5% $P_2O_5$ and satisfying that a value of $8Li_2O - 4(Na_2O+K_2O+MgO) - (BaO+ZnO)$ is not more than 30%.

[FIG. 1.]

# EP 4 656 605 A1

## INTERNATIONAL SEARCH REPORT

International application No.

**PCT/JP2024/001772**

### A. CLASSIFICATION OF SUBJECT MATTER

*C03C 10/12*(2006.01)i; *C03C 3/085*(2006.01)i; *C03C 3/097*(2006.01)i
FI: C03C10/12; C03C3/085; C03C3/097

According to International Patent Classification (IPC) or to both national classification and IPC

### B. FIELDS SEARCHED

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
|---|---|---|
| X | JP 2021-138605 A (SCHOTT AG.) 16 September 2021 (2021-09-16) | 1-2, 4-8, 10-12, 17, 21-25 |
| | paragraphs [0125]-[0152], [0155], tables 1-1, 2-1, example 7 | |
| Y | | 15-16 |
| X | US 2021/0147282 A1 (EUROKERA) 20 May 2021 (2021-05-20) | 1-12, 14, 18-21, 23-25 |
| | claims, paragraphs [0112]-[0119], tables 1A-1E, examples 10, 11, 13, 17 | |
| Y | | 15-16 |
| X | JP 2010-001206 A (NIPPON ELECTRIC GLASS CO., LTD.) 07 January 2010 (2010-01-07) | 1-2, 8-11, 22-25 |
| | paragraphs [0046]-[0054], [0057], tables 1, 4, examples 2, 4, 19, 20 | |
| Y | | 15-16 |
| X | JP 2012-056829 A (NIPPON ELECTRIC GLASS CO., LTD.) 22 March 2012 (2012-03-22) | 1-2, 4-13, 22-25 |
| | claims, paragraphs [0082]-[0087], table 1, example 6 | |
| Y | | 15-16 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 656 605 A1**

## INTERNATIONAL SEARCH REPORT

| International application No. |
|---|
| **PCT/JP2024/001772** |

### C. DOCUMENTS CONSIDERED TO BE RELEVANT

| Category* | Citation of document, with indication, where appropriate, of the relevant passages | Relevant to claim No. |
|---|---|---|
| X | JP 11-228181 A (NIPPON ELECTRIC GLASS CO., LTD.) 24 August 1999 (1999-08-24) claims, paragraphs [0031]-[0037], [0039], [0041], [0049], table 1, example 7 | 1-5, 7-13, 22-25 |
| Y | | 15-16 |
| X | WO 2020/203308 A1 (NIPPON ELECTRIC GLASS CO., LTD.) 08 October 2020 (2020-10-08) claims, paragraphs [0110]-[0111], tables 1-2, 5-6, examples 1, 11 | 1-2, 4-7, 9-13, 20-25 |
| X | WO 2019/049785 A1 (NIPPON ELECTRIC GLASS CO., LTD.) 14 March 2019 (2019-03-14) claims, paragraphs [0104]-[0113], tables 1, 2 | 1-2, 4-9, 11-13, 15-16, 21-25 |
| Y | | 15-16 |

Form PCT/ISA/210 (second sheet) (July 2022)

## INTERNATIONAL SEARCH REPORT
### Information on patent family members

International application No.

**PCT/JP2024/001772**

| Patent document cited in search report | | | Publication date (day/month/year) | Patent family member(s) | | | Publication date (day/month/year) |
|---|---|---|---|---|---|---|---|
| JP | 2021-138605 | A | 16 September 2021 | EP 4026813 A1 paragraphs [0133]-[0159], tables 1-1, 2-1, example 7 DE 102020202597 A1 CN 113321422 A KR 10-2021-0110520 A | | | |
| US | 2021/0147282 | A1 | 20 May 2021 | WO 2019/016338 A1 claims, specification, pp. 21-23, tables 1A-1E FR 3069240 A1 KR 10-2020-0033907 A CN 110997584 A | | | |
| JP | 2010-001206 | A | 07 January 2010 | EP 2284131 A1 paragraphs [0046]-[0054], [0057], tables 1, 4, examples 2, 4, 19, 20 US 2011/0071011 A1 WO 2009/141959 A1 CN 102036926 A | | | |
| JP | 2012-056829 | A | 22 March 2012 | EP 2604583 A1 claims, paragraphs [0082]-[0087], table 1, example 6 US 2013/0130887 A1 WO 2012/020678 A1 CN 102892725 A | | | |
| JP | 11-228181 | A | 24 August 1999 | (Family: none) | | | |
| WO | 2020/203308 | A1 | 08 October 2020 | EP 3950622 A1 claims, paragraphs [0102]-[0103], tables 1-2, 5-6, examples 1, 11 KR 10-2021-0145716 A CN 113710624 A TW 202104118 A | | | |
| WO | 2019/049785 | A1 | 14 March 2019 | EP 3683197 A1 claims, paragraphs [0104]-[0111], tables 1, 2 US 2020/0181002 A1 CN 111051261 A KR 10-2020-0049707 A | | | |

Form PCT/ISA/210 (patent family annex) (July 2022)

**EP 4 656 605 A1**

**REFERENCES CITED IN THE DESCRIPTION**

**Patent documents cited in the description**

- JP 2012056829 A
- WO 2022054739 A
- JP 2020196664 A
- JP 2022511634 A